# EUROPEAN PATENT SPECIFICATION

(11) **EP 4 480 756 B1**
(45) Date of publication and mention of the grant of the patent: **12.11.2025**
(21) Application number: 24156029.1
(22) Date of filing: 06.02.2024
(51) Int. Cl.: B60R 9/06, B60R 9/10

(54) **ARRANGEMENTS FOR FIXING A CARGO CARRIER TO A LOAD CARRIER**
ANORDNUNGEN ZUR BEFESTIGUNG EINES LADUNGSTRÄGERS AN EINEM LADUNGSTRÄGER
AGENCEMENTS POUR FIXER UN PORTE-CHARGES À UN PORTE-CHARGES

(30) Priority: 20.06.2023 EP 23180445
(43) Date of publication of application: 25.12.2024
(73) Proprietor: Thule Sweden AB, 335 04 Hillerstorp (SE)
(72) Inventor: JOHANSSON, Claes, 33593 Åsenhöga (SE); MARKLUND, Simon, 33593 Åsenhöga (SE)
(74) Representative: Wallentin, Lars

(56) References cited:
- EP-A1- 4 124 509
- US-A- 5 775 560
- US-A- 5 881 937
- US-A1- 2017 144 611
- US-B1- 6 168 058
- US-B2- 7 204 538

## Description

### FIELD

The present disclosure relates to a new way of mounting a cargo carrier to an accessory, for example to a load carrier such as a bike carrier.

### BACKGROUND

Known cargo carriers are often difficult to mount on accessories. US6168058B1 discloses an adapter suitable for securing a cargo carrier to a base wherein said adapter is configured to convert a base portion of said base into a supporting portion for said cargo carrier.

### SUMMARY

The present disclosure relates to improvements allowing an easier fixation of cargo carriers on accessories.

It is an object to provide a simplified whilst flexible fixation solution for cargo carriers. The object is solved by the configurations as presented in the claims, aspects and example configurations, examples and embodiments as described herein.

Disclosed is an adapter for securing a cargo carrier to a bike carrier. The cargo carrier may be a load receptacle, for example a box or a basket. Further disclosed is a cargo carrier configured to be supported on the adapter and adapted to the adapter. The adapter is configured to be mounted on a bike carrier, for example on a wheel tray of the bike carrier. The bike carrier may comprise foldable wheel trays. The adapter may be configured to be mounted on one of such foldable wheel trays. The adapter may be a wheel tray block mountable on the wheel tray such that it is provided on an upper side of the wheel tray when the wheel tray is in a use configuration. In a foldable bike carrier, the wheel tray may be in use configuration when it is folded outward. At least two adapters may be provided for supporting the cargo carrier on a base. The adapters may be mounted on movable wheel tray portions of the bike carrier or on stationary wheel tray portions of the bike carrier. The adapters may replace existing wheel tray portions. For example, a load carrier may comprise a configuration in which wheel tray portions are attachable to and detachable from the load carrier and the adapters may be configured to be attached to the load carrier instead of the wheel tray portions. In some configurations, the load carrier may comprise elongate profiles, for example profile rails. Such elongate profiles may be formed straight and/or may extend in transversal direction. The transversal direction may be a direction which is perpendicular to a longitudinal direction or direction of travel and which is perpendicular to a vertical direction when the load carrier is mounted on a vehicle. The transversal direction may also be referred to a cross direction or transverse direction. Such elongate profiles may comprise a fixation groove, for example a T-shaped groove or T-track. The adapters may be configured to be attached to an elongate profile via the fixation groove. In some configurations, the bike carriers are configured to support two bikes and therefore may comprise two wheel trays, each for supporting a bike. Each wheel tray may comprise two movable wheel tray portions. In some configurations, four adapters may be provided on the two wheel trays, more precisely two adapters on each wheel tray wherein respectively one adapter is associated with one movable wheel tray portion. Accordingly, a configuration may be provided in which four adapters are available for supporting the cargo carrier. The cargo carrier may be a cargo box.

Each adapter may comprise an adapter mounting portion configured to fix the adapter on the wheel tray. Each adapter is be configured to be mounted on the wheel tray or on a movable wheel tray portion using wheel straps provided on the wheel tray or wheel tray portion. Accordingly, the adapter mounting portion may comprise a strap receiving portion. However, other means for securing the adapters to the wheel trays of a load carrier can be used. For example, the adapters may be mounted on the wheel trays or wheel tray portions by means of a fastener, for example a screw engaging with a threaded opening in the wheel tray or wheel tray portion a bracket enclosing the wheel tray or wheel tray portion, wherein the bracket may be U-shaped with free ends protruding into the cargo carrier to be mounted and fixed thereon, or a T-bolt may be received in a T-track formed in the wheel tray, and coupled to the adapter by means of a nut. The fastener may be configured to clamp the adapter on the wheel tray. For example, the fastener may comprise an engagement member with an engagement portion, for example an engagement projection, configured to be engaged with an engagement groove or engagement recess provided on the wheel tray or wheel tray portion. As an example, the engagement groove or engagement recess may be provided on one lateral side or both lateral sides of an elongate profile such that the fastener may engage behind a lateral side of the elongate profile. In general, the engagement portion may be formed complementary to the engagement groove or engagement recess provided on the wheel tray. The engagement member may be operatively coupled to a tensioning lever. The cargo carrier may be supported on the one or more adapters mounted on the bike carrier. For example, the cargo carrier may be placed on top of the adapters and may be secured to the adapters by means of a fastener such as a screw through the bottom of the cargo carrier. The adapter may be configured to cooperate with a geometry on the bottom of the box which facilitates correct alignment of the box on the adapters. For example, the adapters may provide a stop in at least one transversal direction of the base or load carrier such that the cargo carrier may be correctly placed by moving the same in transversal direction until it abuts against the stop provided by at least one adapter. The adapters may in addition or alternatively provide a stop in at least one direction in longitudinal direction of the base or load carrier.

The adapters and/or wheel trays may be configured such that folding of the wheel tray portions is possible with the adapters attached to the wheel tray portions. For example, the adapters can be non-symmetrically arranged on the right and left sides of the wheel tray of the bike carrier, to allow folding of the wheel tray portions with adapters fitted. For example, the adapters on one and the same wheel tray portion may be arranged to extend laterally from the wheel tray portion such that the total height of the wheel tray portion in combination with the adapter does not considerably increase in a region of the wheel tray portion so that it is still possible to fold the wheel tray portion onto a base portion on which it is rotatably mounted or towards each other. Identical adapters may be used on all positions of the bike carrier. In this way, only one molding tool may be used for manufacturing the adapters which makes manufacturing cost efficient.

The wheel trays may be provided with guiding features such as protrusions or recesses to ensure the correct placement of the adapters on the wheel trays such that they fit with the cargo carrier to be mounted thereon.

The adapter may comprise a cargo carrier fixation portion configured to fix the cargo carrier to the adapter.

According to another aspect, a fastening unit, for example a quick connector, configured for tool-free fixation of a cargo carrier to the the adapter mounted to the load carrier or a bike carrier is provided. The fastening unit is also referred to as fixation unit. The fastening unit may also be referred to as a quick connector. The quick connector may be configured to cooperate with a connection interface. The connection interface may be provided on the adapters as described in this specification. For example, the adapters may comprise a cargo carrier fixation portion as a connection interface.

The quick connector may comprise an actuating member, for example a handle or a knob. The quick connector may comprise an engaging portion which may be a T-shaped locking pin. The engaging portion may be arranged such that the oppositely oriented free ends of the T shape or oppositely oriented protrusions are provided on a lower portion of the engaging portion and can be used for an engagement with the connection interface. The engaging member is operatively coupled to the actuating member. For example, the engaging member and the actuating member are operatively coupled such that a rotation of the actuating member, for example of a knob, is transferred into a movement of the engaging member, for example into a rotation of the engaging member. The actuating member may be coupled to the engaging member such that a relative movement between actuating member and engaging member is not possible. The actuating member may be fixedly coupled to the engaging member such that both members are integrally movable. The actuating member and the engaging member may be coupled to each other such that a rotation axis of the actuating member and a rotation axis of the engaging member are parallel and/or coincide or are arranged coaxially. In some configurations, the actuating member may be coupled to the engaging member such that it is not pivotable relative to the engaging member about a pivot axis that extends perpendicular to a rotation axis of the engaging member.

When the quick connector is unlocked, the engaging portion may be retracted into a corresponding keyhole shaped opening in a bottom of the quick connector. In this way, the engaging portion will not protrude from the quick connector and the engaging portion will be prevented from being damaged when handling the quick connector or the cargo carrier to which it is associated or on which it is provided. The quick connector may comprise two urging members. The urging members may be springs. The urging members may comprise different resistance. A first urging member may be configured and provided to apply a force on the actuating member and/or on the engaging portion such that the engaging portion is biased towards a retracted position in which the engaging portion is received in the opening in the bottom of the quick connector. The first urging member may comprise a lower resistance and may exert a lower restoring force than the second urging member. The urging member with high resistance may be configured to be effective during an engaging process between the engaging portion and the connection interface. The engaging portion, for example the oppositely protruding protrusions, may be rotated by rotating the actuating member of the quick connector once the actuating member was pushed downwards against the force of the first urging member to move the engaging portion out of the opening in the bottom portion of the quick connector. The engaging portion may be configured to engage with a cam surface provided in the interface portion when the engaging portion is inserted into and rotated in the interface portion. The cam surface and the engaging portion may be configured such that the engaging portion is urged in a direction further away from the opening in the bottom portion and against an urging force of the second urging member. The cam surface may be designed such that the protrusions on the engaging portion pass an apex portion in which the distance between the engaging portion and the bottom portion or bottom surface of the quick connector into which the engaging portion may be retracted is the largest when moving from an unlocking position to a locking position. In this way, the engaging portion will securely remain in the locking position and an unintentional movement of the engaging portion from the locking position into the unlocking position is prevented. The quick connector may be configured such that the second urging member with high resistance may be actuated by rotating a locking pin or protrusion on the engaging portion such that the locking pin and the engagement portion is pulled downwards by contact with the connection interface. The second urging member, for example the high resistance spring, is arranged in a compressed state when the quick connector is in a locked state and the engaging portion is moved into the locking position.

A misuse prevention configuration may be provided to ensure that the quick connector may only be actuated when the quick connector is correctly arranged on the accessory to which it is mounted, for example correctly arranged on the adapters as described herein or on other portions of load carriers, such as bike carriers. The fixation unit and the adapter may comprise a mechanical poka-yoke coding which prevents the fixation units to be locked if the fixation unit is not properly fitted on the adapters and secures that an engaging portion of the fixation unit is always in a predetermined position when mounting the fixation unit on the adapter. The misuse prevention configuration may comprise a poka-yoke locking mechanism. For example, a blocking member for blocking an operation of the quick connector, for example blocking a movement of the engaging portion and/or a movement of the actuating member from an unlocking position to a locking position, may be provided. The blocking member may be configured to normally actively block the operation of the quick connector. The blocking member may be biased towards a blocking position and may be movable towards an unblocking position against an urging force in response to an interaction of the quick connector with the connection interface. In this way, a rotation of the actuating member can be prevented unless the quick connector is correctly arranged for fixation.

Further disclosed is a load receptacle which is configured for an attachment to a bike carrier with foldable wheel tray arms. The load receptacle may be configured to contact and/or to be supported on two different portions on the respective foldable wheel tray arm. The load receptacle may comprise a first supporting portion which is configured to be fixedly mounted to the wheel tray arm. For example, the first supporting portion may be configured to be supported on and fixed to an adapter mounted on a foldable wheel tray arm, for example an adapter as described herein. The first supporting portion may be shaped according to the adapter on which it is mountable. The first supporting portion may be configured to be mountable, directly or indirectly, to the foldable wheel tray arm at a first position or first section using the quick connector as described herein. In general, the first supporting portion may be configured to be fixed to the foldable wheel tray arm in a formlocking manner using suitable fastening members or units like the quick connector or other fastening members such as screws, brackets and/or bolts.

The second supporting portion may be configured to get in surface contact with a second section of the foldable wheel tray arm. The second section may be a section which is closer to the free end portion of the foldable wheel tray arm than the first section. Accordingly, a further contact area between the load receptacle and the wheel tray arms of the bike carrier may be provided further outward of the attachment points between the load receptacle and the foldable wheel tray arm towards the free ends of the foldable wheel tray arms. In this way, it is prevented that the wheel tray arms pivot upwards when an upwardly directed force acts on the cargo box as can be the case when a vehicle on which the bike carrier including the load receptacle is mounted travels over a bump. The load receptacle and the foldable wheel tray arms may be configured such that the second supporting portion only exerts little or no tensioning force on the foldable wheel tray arm when the load receptacle is coupled to the foldable wheel tray arms via the first supporting portion. However, it is possible to provide a second supporting portion and/or second supporting portions that exert a tensioning force on the wheel tray arms biasing the wheel tray arms downwards when the load receptacle is attached to the bike carrier.

Another aspect relates to a load receptacle for attachment to a bike carrier with foldable wheel tray arms with direct attachment, more precisely without an adapter. The load receptacle may be a load receptacle as described in other parts of this disclosure. The direct attachment between the load receptacle and the bike carrier may be achieved by a U-shaped bar around the wheel tray. More precisely, the U-shaped bar may extend around the wheel tray and into the bottom of the load receptacle where it can be tightened and secured. Alternatively, a T-slot may be provided in the wheel tray into which a suitable fastener can be provided for extension through the bottom of the load receptacle for attaching the load receptacle thereto. Such a suitable fastener may comprise a nut which may be slidably inserted in the T-slot. The nut may comprise a threaded opening for engaging with a threaded portion of a bolt. Another suitable fastener may comprise a threaded bolt or pin with a bolt head that is slidably inserted in the T-slot such that a coupling portion, for example a threaded portion, protrudes from the groove and can be engaged by a fastening member, such as a nut. In a further alternative, a fastener may be provided which extends through the wheel tray and through the bottom of the load receptacle.

The adapter may be configured to convert the wheel tray portion, for example a portion of a foldable wheel arm, of the bike carrier into a supporting portion for the cargo carrier, for example a load receptacle as described herein. The adapter may be configured to act as an interface between the wheel tray and the cargo carrier. For example, the adapter may form a connection interface as mentioned in other parts of this disclosure. The connection interface may be configured to cooperate with a fastening unit or fixation unit, such as a quick connector mentioned in other parts of this disclosure.

In some embodiments, the adapter is designed such that it fits against the wheel tray at a predefined position such that a correct mounting position on the wheel tray may be easily found by a user. A lower side of the adapter may comprise a positioning portion for correctly placing the adapter on the wheel tray. An upper side of the wheel tray, for example an upper side of the wheel tray arm, may comprise a positioning section or portion for correctly placing the adapter on the wheel tray. A lower side of the adapter and an upper side of the wheel tray may be configured to engage in form locking member. The upper side of the adapter and a lower side of the load receptacle or cargo carrier which is supportable on the adapter may be configured to engage in form locking manner. For example, the adapter and the cargo carrier may be configured to engage with each other such that a movement of the cargo carrier relative to the adapter is blocked in at least one direction, for example in cross direction or transversal direction of the bike carrier and/or in longitudinal direction of the bike carrier, and/or such that a correct alignment of the cargo carrier on the adapter is facilitated.

In some embodiments, the adapter comprises a strap receiving portion configured to receive a strap of the wheel tray. The strap on the wheel tray may be a strap which is normally used for fixing the wheel of a bike on the wheel tray. In some configurations, the adapter and the strap receiving portion are configured such that the adapter can be fixed on the wheel tray using the strap of the wheel tray. In some embodiments, the receiving portion comprises a channel or a recess extending in a direction which extends cross or inclined to the main extension direction of the wheel tray when the adapter is mounted on the wheel tray. The main extension direction may be a cross direction or transversal direction of a load carrier. The recess may be formed such that the strap is fully accommodatable therein, for example such that the strap does not protrude from an upper side of the adapter when it is inserted in the recess. In some configurations, a channel may be provided through which the strap may be passed for fixing the adapter on the wheel tray in a manner such that the inserted strap is concealed and not visible when viewing the mounted adapter from above.

In some configurations, the strap receiving portion is provided on an upper surface of the adapter. In addition or alternatively, the strap receiving portion may be provided on at least one side surface of the adapter.

In some exemplary embodiments, the adapter comprises a supporting portion configured to be received in the wheel tray. The supporting portion may be formed corresponding to the shape of the wheel tray. The supporting portion may comprise a protrusion that may be shaped matingly with an upper surface geometry of the wheel tray. The supporting portion may be provided on a lower surface or lower side of the adapter. The supporting portion may comprise a convex shape. For example, the supporting portion may comprise or may be configured as elongated forming that can be brought into engagement with the upper surface geometry of the wheel tray. The upper surface of the wheel tray may be concave. The wheel tray or wheel tray portion may comprise a concave upper contour. The wheel tray or wheel tray portion may comprise or may be formed as a profile rail.

The adapter may further comprise a fixation portion for receiving and/or engaging with the fixation member used for fixing the cargo carrier on the adapter. The fixation portion may form or may comprise a connection interface. The fixation portion or connection interface may comprise one or more threaded holes for receiving bolts or screws for fixing the cargo carrier or load receptacle on the adapter. The fixation portion or connection interface may also be configured to receive an engaging portion of a fixation unit such as a quick connector described in other parts of this disclosure. In some embodiments, a mounted adapter renders a wheel tray on which it is mounted unusable for supporting a bike.

The adapter may comprise a key portion or activation portion which is configured to render a locking mechanism, for example provided on the cargo carrier or on the load receptacle and/or for example embodied as a locking mechanism of a fixation unit such as a quick connector, operable when the cargo carrier is correctly placed on the adapter. The adapter may comprise an activation portion which interacts with a locking release portion in the cargo carrier or in the quick connector when the cargo carrier and/or the quick connector is correctly supported on the adapter. The activation portion may comprise one or more protrusions. The cargo carrier may comprise one or more recesses arranged in a pattern corresponding to the position of the one or more protrusions on the adapter. In addition or alternatively, the quick connector may comprise one or more recesses arranged in a pattern corresponding to the position of the one or more protrusions on the adapter. The activation portion may be configured to move or apply a force on a force receiving portion in the cargo carrier or quick connector. The force receiving portion may be force transmittingly coupled to the locking mechanism, for example to a locking member. The activation portion may thus unlock the locking mechanism to allow an operation of the same by a user when the cargo carrier or the quick connector is correctly supported on the adapter.

The cargo carrier may comprise a base body. A lower surface of the base body may comprise a geometry that is formed matingly with an upper surface of the adapter. The cargo carrier or load receptacle may comprise a designated supporting section configured to be supported on the adapter. The designated supporting section may be formed corresponding to an upper surface of the adapter. The supporting section may comprise a recess formed in the bottom wall of the cargo carrier.

A fixation unit may be provided. The fixation unit may be a quick connector. The supporting section of the cargo carrier may comprise the fixation unit. The fixation unit is configured for attaching the cargo carrier to a load carrier, for example to a bike carrier. The fixation unit may be configured for attaching the cargo carrier directly to the load carrier or indirectly via an adapter, for example the adapter as described in other parts of this disclosure. The fixation unit may be configured such that it is only operable when the cargo carrier is correctly placed on the adapter and/or load carrier.

The fixation unit may comprise an actuating member operable by a user for transferring the fixation unit between a locking state and an unlocking state. The fixation unit may be coupled to the cargo carrier and may be configured to lock and unlock the cargo carrier on the load carrier. The fixation unit may further comprise a safety arrangement which is configured to activate the actuating member only when the fixation unit is correctly positioned on the counterpart to which it is to be fixated.

The actuating member may be a rotatable knob or a rotatable lever. The safety arrangement may comprise a blocking member movable between a blocking position in which it blocks a movement of the actuating member and an unblocking position in which it does not block a movement of the actuating member. In other words, a movement locking of the actuating member is released when the blocking member is moved to the unblocking position. The blocking member may be biased towards the blocking position by an urging member. The urging member may be a spring. The actuating member may be a rotatable knob rotatable about a rotation axis. The blocking member may be a disc-shaped plate with a hole in which the actuating member may be received and which plate may be movable along the rotation axis between the blocking position and the unblocking position. In the blocking position, the blocking member establishes a formlocking connection of the actuating member with a base portion of the fixation unit and therefore blocks a movement of the actuating member. In the unblocking position, the blocking member is disengaged from the base portion and/or the actuating member so that a movement of the actuating member relative to the base portion is allowed. The blocking member may be configured to be activated by the activation portion. The blocking member may be configured to be moved towards the unblocking position when the cargo carrier or fixation unit is positioned on the adapter such that an activation portion of the adapter is received in the fixation unit and shifts the blocking member towards the unblocking position. In some configurations, the blocking member may be translatory movable, for example along a straight path. In some configurations, the blocking member may be rotatory movable.

The fixation unit may be configured to automatically transfer from an unlocked state to a locking state when the cargo carrier is correctly placed on the adapter. The actuating member may be configured such that a user may load the actuating member by moving the same against an urging force into a preloaded standby position where the actuating member is automatically locked. The safety arrangement may be configured to release a movement of the actuating member from the standby position and to allow the actuating member to move to the locking position when the cargo carrier is correctly placed on the load carrier. The activation portion provided on the adapter may serve as a trigger for the safety arrangement. The activation portion may serve as an operating member for the safety mechanism and may release the movement of the actuating member once it is received in the fixation unit.

The cargo carrier or load receptacle may comprise two or more designated supporting sections each configured to contact an adapter. For example, a cargo carrier or load receptacle comprising four supporting sections may be provided. In some configurations, the cargo carrier or load receptacle may comprise auxiliary supporting sections each configured to contact an upper surface of the wheel tray. A distance between the designated supporting sections may be smaller than a distance between the auxiliary supporting sections. In some embodiments, the designated supporting sections are arranged between the auxiliary supporting sections. In other embodiments, the auxiliary supporting sections are configured to contact the wheel tray or wheel tray arms at a free end portion of the wheel tray or the wheel tray arms. In some configurations, the auxiliary supporting sections may be configured to contact the bridging portion connecting free end portions of two adjacent wheel trays or wheel tray arms, for example of foldable wheel tray arms.

In some configurations, the fixation unit or the quick connector may be configured for a tool-free fixation of the cargo carrier to a load carrier. The fixation unit may be mountable on the cargo carrier and may be configured to cooperate with a connection interface on the load carrier. The connection interface may be provided directly on the load carrier or may be provided on an adapter provided on the load carrier, for example on an adapter as described in other parts of this disclosure. In the alternative, the connection interface may be provided directly on the load carrier, for example on a wheel tray of a bike carrier or directly on the roof rack. In other configurations, the connection interface may be provided on an adapter configured to be attached to a roof rack. The quick connector and the connection interface may be configured such that an operation of the quick connector by a user is only possible when the quick connector is correctly supported on the connection interface.

Further disclosed is an adapter for securing a cargo carrier to a base. The adapter may comprise one or more of the before mentioned features. The adapter may be embodied as an adapter described in other portions of this specification. The base may be a load carrier fixable to a vehicle. For example, the base may be a bike carrier or a roof rack.

The adapter may be configured to convert a base portion of the base into a supporting portion for the cargo carrier. The base portion may be a wheel tray portion of a bike carrier. The base portion may be a supporting frame portion of a load carrier, for example of a bike carrier. Accordingly, the adapter renders the cargo carrier and the base compatible with each other in that it provides a suitable supporting possibility on the base portion. This allows to support the cargo carrier sufficiently and reliably on the base on portions of the base that are otherwise not sufficiently suitable for supporting the cargo carrier or do not provide a sufficiently safe support. In this way, cargo carriers of one and the same type can be mounted to different bases, for example to different load carriers, without having to design the cargo carriers according to the different bases. Different adapters for the different bases may be provided whereas each adapter may allow to support one and the same cargo carrier.

In another configuration, the adapter may be configured to act as an interface between the base and the cargo carrier. An interface between the base and the cargo carrier may be understood as a configuration allowing to support the cargo carrier on the base and/or to fixedly attach the cargo carrier to the base. In some configurations, the adapter may be configured to be fixedly and detachably coupled and interlocked with the base and detachably coupled and interlocked with the cargo carrier. For example, the adapter may be configured to be first attached to the base and to allow a successive fixation of the cargo carrier thereon. In such a configuration, the adapter may be configured such that the coupling between the adapter and the base cannot be released once the cargo carrier is attached to the adapter. In some configurations, the adapter may be configured to be coupled to the base and to only provide a support for the cargo carrier thereon wherein the cargo carrier is fixedly held on the adapter by fixedly coupling the cargo carrier directly to the base so that the cargo carrier only contacts and supports the adapter without being interlocked with the same. The adapter may be configured to be attached to and detached from the base. The adapter may be configured to be attached to and detached from the base in a tool-free manner, for example by using a wheel fixation arrangement for fixing a wheel on the base, for example a wheel fixation arrangement comprising a strap and a strap receiver.

Accordingly, a user may attach and detach the adapter without using tools. Furthermore, the adapter may be configured such that once it was attached and detached, a user may reattach the adapter. The adapter is configured to be non-destructively attachable and detachable from the base.

In some configurations, an accessory mountable on the base may be provided. The base may be a load carrier detachably mountable on a vehicle. In other words, the load carrier may be configured to be attached to and detached from the vehicle. In some embodiments, the base or load carrier described in this specification is a rear mountable load carrier, for example a load carrier mountable on the trailer coupling of a vehicle. The base may be a cargo carrier, for example a load receptacle, for example a box. The accessory may be a cargo carrier such as a load receptacle, for example a box or a basket. In other configurations, the accessory may be an adapter as described in other sections of this specification. The accessory may comprise at least one positioning feature to ensure correct placement of the accessory on the base. The accessory may be designed such that it geometrically fits against or to the base portion, for example such that it is formed complementary to a base portion, in particular with an upper contour of the base portion, at a predefined position of the base portion such that a correct mounting position on the base portion may be easily found by a user. For example, the accessory may be configured such that it geometrically fits against the base portion such that its lower portion matches with an upper portion of the base portion at the correct mounting position, for example in a way that a movement of the accessory in at least one direction along the base portion or base, in particular in transversal direction or cross direction of the base portion or base, is blocked once the accessory is arranged in the correct mounting position on the base portion. The accessory may comprise a positioning portion for correctly placing the accessory on the base portion. The positioning portion may be mechanically coded or shaped such that the accessory or positioning portion of the accessory geometrically matches with the base portion at the predefined position and/or in a predefined orientation. In particular, the positioning portion of the accessory may match with a positioning section of the base portion, for example such that they geometrically engage with each other in a formlocking manner to prevent a movement of the accessory relative to the base portion, for example a movement of the accessory in transversal direction or cross direction of the base. The positioning portion of the accessory may be provided on a lower side of the accessory and/or on a lateral side of the accessory. The positioning portion may be or may comprise a hook-like portion configured to be hooked on the base portion. The positioning portion of the accessory may comprise a recess formed according to the shape or outer contour of the base portion such that a portion of the base portion may be received in the positioning portion. The positioning portion may be configured such that any movement in a direction which is different from a detachment direction, for example a vertical direction, in which the positioning portion is disengaged from the base portion, is prevented. In one configuration, the accessory may be inserted onto the base portion at the predefined position in an insertion direction, for example in vertical direction, and any movement in a direction cross or perpendicular to the insertion direction is then prevented by the formlocking engagement between accessory and base portion.

The accessory may further comprise a supporting portion configured to be received in the base portion. The supporting portion may be formed corresponding to the shape of the base portion. The supporting portion may comprise a protrusion or a recess that may be shaped matingly with an upper surface geometry of the base portion. The supporting portion may be formed corresponding to a wheel supporting section of a wheel tray portion to get in surface contact with a wheel supporting surface defined by said wheel supporting section. The wheel supporting section may be formed like a trough and/or may be formed or comprise an elongate recess, for example an elongate recess formed in the bottom of the wheel supporting section. The elongate recess may be a T-track and/or may extend in main extension direction of the wheel supporting section, wherein the main extension direction may be a transversal direction or cross direction of the base. The transversal direction or cross direction of the base may correspond to a transversal direction or cross direction of a vehicle to which the base is mountable. The supporting portion may be provided on a lower surface of the adapter. The supporting portion may be integrally formed with or act as the positioning portion.

In some configurations, the adapter may be designed such that it geometrically fits against or to the base portion at a predefined position of the base portion such that a correct mounting position on the base portion may be easily found by a user. For example, the adapter may be configured such that it geometrically fits against the base portion such that its lower portion matches with an upper portion of the base portion at the correct mounting position, for example in a way that a movement of the adapter in at least one direction along the base portion or base is blocked once the adapter is arranged in the correct mounting position on the base portion.

In some configurations, the adapter comprises a positioning portion for correctly placing the adapter on the base portion. The positioning portion may be mechanically coded or shaped such that the adapter or positioning portion of the adapter geometrically matches with the base portion at the predefined position and/or in a predefined orientation. In particular, the positioning portion may match with a positioning section of the base portion, for example such that they geometrically engage with each other in a formlocking manner. The positioning portion may be mechanically coded or shaped such that the adapter or positioning portion of the adapter only geometrically matches with the base portion at the predefined position and/or in a predefined orientation on the base portion. Accordingly, a configuration may be provided in which the adapter geometrically fits to the base portion only at the predefined position. The base may comprise multiple base portions. Accordingly, multiple adapters may be mounted to such a base at the respective positions on the base portions.

The positioning portion may be provided on a lower side of the adapter and/or on a lateral side of the adapter. The positioning portion may be or may comprise a hook-like portion configured to be hooked on the base portion. The positioning portion of the adapter may comprise a recess formed according to the shape or outer contour of the base portion such that a portion of the base portion may be received in the positioning portion. The positioning portion of the adapter may comprise a laterally protruding free end portion configured to partially enclose an upper edge portion of the base, for example of the wheel tray portion, and/or to be received in a guiding recess on the base, for example in a guiding recess in the wheel tray portion, for example in the outer circumference of the wheel tray portion, or in a portion connecting adjacent wheel tray portions. The adapter may comprise two lateral positioning portions, one on each lateral side of the adapter. The adapter may be configured symmetrical.

An upper side or upper portion of the adapter may be configured to engage with a lower side of the cargo carrier in formlocking manner. For example, the upper side or upper portion of the adapter may be configured such that a movement of the cargo carrier relative to the adapter is blocked in at least one direction, for example in cross direction or transversal direction of the load carrier and/or along the load carrier. The upper side or upper portion of the adapter may be configured such that a correct alignment or positioning of the cargo carrier on the adapter is facilitated. The upper side or upper portion of the adapter may be formed in relief to provide a suitable shape for an engagement with the cargo carrier and/or for supporting the cargo carrier and/or for fixation of the adapter on the base. The upper side or upper portion may comprise a protruding section to be inserted or received in a recess formed in the cargo carrier. The upper side or upper portion may comprise a recess for receiving a fixation means for fixing the adapter to the base. The upper side or upper portion may comprise a supporting surface configured to support the cargo carrier in the direction of gravity. The upper side or upper portion may comprise an abutment surface forming a lateral stop for the cargo carrier, for example a stop in cross direction or transversal direction of the base or load carrier. The abutment surface may extend in upward direction, for example in vertical direction, when the adapter is mounted on the base. The abutment surface may extend in longitudinal direction of the base or in vehicle travel direction of the base when the base is mounted on a vehicle. A corresponding inverse arrangement is also possible. For example, the lower side or lower portion of the cargo carrier may be formed in relief and provide one of the above shapes instead of the adapter, and the adapter is correspondingly formed.

The adapter may be configured to act as a plug or as a socket of a plug and socket type connection, for example as a protrusion to be inserted into a recess on the cargo carrier. The protrusion may extend in vertical upward direction when the adapter is mounted on the load carrier. In some configurations, the adapter may comprise a stepped portion or a protrusion on its upper side which is configured to be received in a recess in the bottom or lower side of the cargo carrier. In some configurations, the adapter may comprise a stepped portion or a protrusion on its upper side which is configured to act as a stop in transversal direction of the load carrier when the adapter is mounted on the load carrier. The stepped portion may extend in longitudinal direction of the load carrier, more precisely in the direction of travel of a vehicle to which the load carrier is mounted. The stepped portions of two adapters that are symmetrically arranged with respect to a middle plane of a load carrier or base on which they are mounted may be configured to define or limit a receiving space in which a portion of the cargo carrier can be arranged. In other words, two adapters may be arranged on the base such that surfaces on vertically extending portions of the stepped portions face each other and limit a receiving space. A receiving portion on the cargo carrier may be configured to be received in the receiving space. In this way, a user may shift or slide the cargo carrier on the adapter until the receiving portions is correctly placed over the receiving space and engages therewith which provides feedback to the user that the cargo carrier is correctly placed on the adapters.

The upper side of the adapter may be configured such that the cargo carrier may fall into place or move by gravity into an attachment position by a vertical downward movement of the cargo carrier in relation to the adapter as soon as the cargo carrier is correctly positioned in relation to the adapter. A user may receive audio feedback by an engagement sound when the cargo carrier clicks into place.

The adapter may comprise an adapter mounting portion configured to fix the adapter on the base portion. The adapter mounting portion may be configured to support a suitable fastening arrangement for coupling the adapter to the base portion. The fastening arrangement may comprise a fastening member such as a bolt, a bracket, a nut or a strap.

The adapter mounting portion may be configured to cooperate with a fastening arrangement already existing or already provided on the load carrier. The fastening arrangement may be a fastening arrangement that is permanently provided on the load carrier. The fastening arrangement may be a fastening arrangement that is normally used for purposes other than attaching the adapter, for example a strap that is used for fixing a load to the load carrier, for example a wheel strap for fixing a wheel of a bike on the load carrier. The strap may be provided on a wheel tray portion for supporting the wheel of a bike.

The adapter mounting portion may comprise a strap receiving portion configured to receive a strap of the base portion therein. The strap may be a strap which is normally used for fixing a wheel of a bike on the base portion. The adapter and the strap receiving portion can be configured such that the adapter can be fixed on the base portion using the strap of the base portion. The configuration of the adapter may be such that the adapter may be clamped on the base portion by the strap instead of a wheel of a bike. In particular, the strap may comprise a fixed end fixedly mounted on the base portion and a free end detachably receivable and lockable in a strap receiver. The strap receiver may be provided on the base portion on a side opposite to the side where the fixed end of the strap is attached. A fixation loop enclosing the adapter may be formed by inserting the free end portion of the strap into the strap receiver. The strap receiver may be a pump buckle allowing to tighten the strap and reducing the dimension of the fixation loop by operating the same. In this way, the adapter may be clamped against the base portion.

The strap receiving portion may comprise a channel or a recess extending in a direction which extends cross to the main extension direction of the base portion when the adapter is mounted on the base portion. The channel or recess may extend in longitudinal direction or travel direction of the base, for example of a load carrier, when the adapter is mounted on the base portion. The longitudinal direction may correspond to a vehicle travel direction of a vehicle to which the base, for example a load carrier, is mountable. The recess may be formed such that the strap is fully accommodatable therein such that the strap does not protrude from an upper side of the adapter when it is inserted in the recess. The strap receiving portion may be provided on an upper surface of the adapter and/or on at least one side surface.

In some configurations, the adapter mounting portion may comprise a fixation opening configured to receive or accommodate a fastening member, such as a screw or a threaded bolt. The adapter mounting portion may comprise the fixation opening in addition or alternatively to a strap receiving portion. With such a configuration, the adapter may be coupled to a load carrier using the fastening member. The base, for example the load carrier, may comprise a suitable fixation portion, for example with a threaded opening for an engagement with a fastening member or a through opening allowing to pass a fastening member therethrough and fix the same using a counter member, such as a nut. The fixation portion may also be used for direct attachment of a cargo carrier on the wheel tray portion. The fixation portion may be a T-track. The fastening member may be configured to engage with the T-track. The fastening member may comprise an engaging portion rotatable between a locking position and an unlocking position. The engaging portion

The adapter may further comprise a supporting portion configured to be received in the base portion. The supporting portion may be formed corresponding to the shape of the base portion. The supporting portion may comprise a protrusion or a recess that may be shaped matingly with an upper surface geometry of the base portion. The supporting portion may be formed corresponding to a wheel supporting section of a wheel tray portion to get in surface contact with a wheel supporting surface, for example a concave surface, defined by said wheel supporting section. The wheel supporting section may be formed like a trough and/or may be formed as or comprise an elongate recess. The supporting portion may be provided on a lower surface of the adapter. The supporting portion may be integrally formed with or act as the positioning portion.

In some configurations, the adapter comprises a connection interface or fixation portion for receiving and/or engaging with a fixation member or fixation unit used for fixing the cargo carrier on the adapter. The fixation portion may comprise one or more threaded openings for receiving bolts or screws for fixing the cargo carrier on the adapter. The fixation portion may comprise an opening configured to receive an engaging portion of an engaging member of a fixation unit. The opening may be a non-round opening. The engaging portion may comprise a non-round shape corresponding to the non-round opening such that the engaging portion is insertable into and removable from the opening only when it is rotated to a predetermined unlocking position in which the engaging portion is aligned with the non-round opening.

The engaging portion may comprise at least one protrusion, for example two protrusions. The engaging portion may be T-shaped. The engaging portion may comprise two protrusions extending in different directions, for example extending away from each other on opposite sides of the engaging member. At least one protrusion may be wedge shaped or tapered. The engaging portion may be configured as a male coupling partner of a bayonet mount. The interface portion may be configured as a female receptor of a bayonet mount.

The adapter may comprise a key portion or activation portion which is configured to render a locking mechanism of a fixation unit, for example provided on the cargo carrier, operable and/or to release a movement of an engaging portion of the locking mechanism when the fixation unit and/or the cargo carrier is correctly placed on the adapter. The adapter may comprise an activation portion which interacts with a locking release portion, for example with a blocking member, in the cargo carrier and/or in the fixation unit, when the cargo carrier is correctly supported on the adapter. The activation portion may comprise one or more protrusions. Each protrusion may protrude in vertical upward direction when the adapter is mounted on the base portion. The cargo carrier and/or the fixation unit may comprise one or more recesses corresponding to the number of protrusions and arranged at a position and/or in a pattern corresponding to the position and/or pattern and/or shape of the one or more protrusions on the adapter. The one or more recesses may grant access to and/or may accommodate the locking release portion. For example, the locking release portion may be provided in a housing of the fixation unit and may be operated by inserting a protrusion through the recess. The activation portion can be configured to move or apply a force on a force receiving portion of the locking release portion, for example on a lower surface of the blocking member, in the cargo carrier and/or in the locking mechanism. The force receiving portion may be force transmittingly coupled to the locking mechanism or is an integral portion of the locking mechanism in the fixation unit so that the activation portion may unlock the locking mechanism to allow an operation of the same by a user.

Further disclosed is a fixation unit configured for tool-free fixation of an accessory to a load carrier. The fixation unit may be embodied as a quick connector, in particular as a connector that allows operation by a user without having to change one's grip on an operating member or portion. The accessory may be a cargo carrier.

The fixation unit may be mountable on the accessory and may be configured to cooperate with a connection interface. The connection interface may be provided directly on the load carrier or may be provided on an adapter provided on the load carrier. The connection interface may be provided directly on a base portion of the load carrier, for example on a wheel tray portion of a bike carrier or directly on or in a roof rack, or on an adapter configured to be attached to a roof rack, for example by means of a T-slot in a cross bar or by clamping to a cross bar of the roof rack, or integrated on any other type of base for an accessory, such as a cargo carrier.

The fixation unit may comprise an engaging portion engageable with the connection interface by a locking movement. The locking movement may at least include a rotation, for example a rotation in an angular range from 80 degrees to 150 degrees, for example about an angle of 90 degrees. The locking movement may comprise a translatory movement of the engaging portion, for example along a rotation axis of the engaging portion. The locking movement may comprise a translatory movement followed by a rotation of the engaging portion. The locking movement may be or may comprise a movement from an unlocking position in which the engaging portion does not engage with the connection interface to a locking position in which the engaging portion is in a final engagement position with the connection interface. The engaging portion may be configured to be movable from a retracted position in which it is at least partially accommodated in the fixation unit to an extended or deployed position in which it is moved out of the fixation unit to a position in which a rotational movement is possible. In the extended position, which may also be referred to as unlocking position, a rotation to the locking position may thus be performed after the translatory movement. The unlocking position may thus be an intermediate position between the retracted position and the locking position.

The fixation unit may comprise a safety arrangement configured to normally block the locking movement of the engaging portion to a locking position. For example, the safety arrangement may be configured to normally block a rotation of the engaging portion from an unlocking position to the locking position, and to allow the engaging portion to perform a locking movement when the fixation unit is correctly positioned on the connection interface and interacts with an activation portion, for example an activation portion as mentioned in other sections of this specification.

The safety arrangement may comprise a blocking member, for example the blocking member as already described before, wherein the blocking member is configured to block the locking movement of the engaging portion to the locking position. The blocking member may be movable, for example translatory movable, between a blocking position in which the locking movement, for example a rotation, of the engaging portion is blocked and an unblocking position in which the locking movement of the engaging portion is allowed or may be performed or caused by a user. The blocking member may be biased towards the blocking position by an urging member. The urging member may be or may comprise an elastic or flexible member, such as a spring. The blocking member may be configured to engage with a locking portion operatively coupled to the engaging portion. The locking portion and the engaging portion may be connected so as to jointly move. The blocking member may be configured and arranged to block a rotation of the locking portion. The blocking member may comprise an opening for receiving the locking portion.

The blocking member may comprise an inner recess for receiving an engaging section provided on the locking portion. The inner recess may be formed in an inner surface of the blocking member that limits the opening. The inner recess may extend along an entire length of the opening. The blocking member may be configured to slidably receive the locking portion in the opening and the recess. The locking portion and the blocking member may be movable relative to each other. The blocking member may be non-rotatably but translatory movably held on a bottom portion of the fixation unit. The bottom portion may be configured to be attached to an accessory, for example a cargo carrier. The blocking member may be axially guided so as to be movable only along a middle axis of the fixation unit, for example along a middle axis of an elongate fixation member comprising the engaging portion and the locking portion. The blocking member may be in engagement with guiding portions, for example guiding protrusions on the bottom portion. The blocking member may comprise outer guiding recesses for accommodating the guiding protrusions. The blocking member may be movable towards and away from the bottom portion. The blocking position may be a position in which the blocking member contacts the bottom portion. The unblocking position may be a raised position in which the blocking member is positioned at a distance from the bottom portion thereby providing a space or gap between the blocking member and the bottom portion. The blocking member may be moved to the unblocking position by means of the activation portion. The activation portion may be configured to contact a lower surface of the blocking member and to apply a force on the lower surface. The locking portion may be moved downwards towards the bottom portion relative to the raised blocking member up to a position in which the engaging sections are positioned in the gap between the blocking member and the bottom portion and disengaged from the inner recesses rendering the locking portion rotatable relative to the blocking member.

The engaging portion of the fixation unit may be configured as a male part of a bayonet mount. The engaging portion may be provided on an elongate engaging member, for example on a lower portion of the engaging member. The engaging portion may comprise at least one protrusion, for example two protrusions. Each protrusion may be wedge shaped or tapered. The engaging portion may be T-shaped. The engaging portion may comprise two radial protrusions extending in different directions, for example extending away from each other on opposite sides of the engaging member. The engaging portion may be configured movable in longitudinal direction of the fixation unit. The engaging portion may be configured retractable into an opening or recess in the bottom portion or towards the bottom portion. The opening or recess may be formed with a shape mating with the engaging portion such that the engaging portion may be received in formlocking manner and blocked from being rotated. The engaging portion may be loaded or biased by an urging member or urging portion in retracting direction. The engaging portion may comprise a dimension allowing it to be passed into a T-track or T-groove in a direction perpendicular to the extension direction of the T-track and to be locked with the T-track by subsequently rotating the engaging portion once it is arranged within the T-track. For example, the engaging portion may comprise protrusions having a width that is smaller than a width of an upper groove slot of the T-track or T-groove.

The fixation unit may comprise an actuating member operable by a user and operatively coupled to the engaging portion so as to jointly rotate with the engaging portion. The actuating member may comprise a rotatable knob, a rotatable handle or a rotatable lever. The actuating member may be movable relative to the engaging portion between an extended position and a retracted position. When positioned in the retracted position, the actuating member may be blocked from rotating by a geometric stop portion. The actuating member may be received in an accommodating recess and the geometric stop portion may be provided by a side wall of the accommodating recess.

Further disclosed is a coupling system. The coupling system may comprise a fixation unit and a connection interface. The fixation unit may comprise one or more of the features of fixation units described in other sections of this specification. The connection interface may be provided on a load carrier or on an adapter mountable on the load carrier, for example an adapter as described in other sections of this specification. The connection interface may be configured as described with respect to the connection interface of the adapter mentioned in other sections of this specification. The fixation unit and the connection interface are configured such that an operation of the fixation unit by a user is only possible when the fixation unit is correctly supported on the connection interface.

Also disclosed is a cargo carrier. The cargo carrier may be a cargo box or a load receptacle. The cargo carrier may comprise a base body. The base body may comprise a designated supporting section. The designated supporting section may be configured to be supported on a load carrier or on an adapter mounted on or mountable to a load carrier. The adapter may be an adapter as described in other sections of this specification. The designated supporting section may be configured to be supported on an interface portion, for example an interface portion of an adapter as described in other sections of this specification, or on an interface portion provided directly on a load carrier, for example on a wheel tray portion or a frame portion of the load carrier.

The designated supporting section and/or other portions facing towards the load carrier of the base body may be shaped according to the load carrier and/or according to the adapter to which it is mountable. For example, the designated supporting section may be shaped to geometrically fit on a base portion of a base, such as on a wheel tray portion of a bike carrier. The designated supporting section may be configured like the supporting portion of an adapter as described in other portions of this specification. For example, the designated supporting section may be configured to be received in the base portion, for example in a wheel tray portion of a bike carrier. The designated supporting section may alternatively be configured to receive the base portion at least partially, for example to at least partially receive a wheel tray portion of a bike carrier. For that, the designated supporting section may comprise a recess or groove. The designated supporting section may be formed corresponding to the shape of the base portion and may comprise a protrusion or a recess that may be shaped matingly with an upper surface geometry of the base portion. The designated supporting section may be formed corresponding to a wheel supporting section of a wheel tray portion, for example to get in surface contact with a wheel supporting surface defined by the wheel supporting section. The wheel supporting section may be formed like a trough and/or may be formed or comprise an elongate recess. The designated supporting section may comprise a protrusion shaped corresponding to the wheel supporting section. The designated supporting section may be provided on a lower surface of the cargo carrier.

The supporting section may comprise a recess formed in a bottom wall or lower surface of the base body. The bottom wall or lower surface of the base body, in particular said supporting section, may comprise a geometry that is formed matingly with an upper surface of said adapter and/or with an upper portion of the load carrier, for example with an upper portion of a wheel tray of a bike carrier.

The designated supporting section may be configured to be detachably fixed to a pivotable wheel tray portion at a first section, for example using said adapter or by directly attaching said supporting section to said wheel tray portion. The cargo carrier, for example the base body, may comprise an auxiliary supporting section configured to contact an upper surface of the same wheel tray portion at a second section. The auxiliary supporting section may be provided further outward from the designated supporting section such that the second section is closer to a free end of the wheel tray portion than the first section or such that the second section is further away from a coupling section of the wheel tray portion than the first section.

The cargo carrier may comprise two designated supporting sections and two auxiliary supporting sections. A distance between the designated supporting sections may be smaller than a distance between the auxiliary supporting sections. The designated supporting sections may be arranged between the auxiliary supporting sections. The auxiliary supporting sections may be configured to contact the wheel tray portions at a free end portion of the wheel tray portions. The auxiliary supporting sections may be configured to contact a bridging portion connecting free end portions of two adjacent wheel trays.

Further disclosed is a load carrier fixable to a vehicle. The load carrier may comprise a supporting structure for supporting a load, for example a bike, to be transported, from below. The supporting structure may comprise a frame configuration with at least one supporting beam. The load carrier may comprise a vehicle coupling portion, for example a load carrier coupling, rigidly coupled to the supporting structure and configured to be coupled to a vehicle, for example to a trailer coupling on the vehicle. The load carrier may comprise a connection interface configured to be engaged by a fixation unit, for example a fixation unit as described in other sections of this specification. The connection interface may be part of an adapter mounted to the load carrier, for example an adapter as described in other sections of this specification. The connection interface may be directly provided on the supporting structure or for example in the wheel tray portion. The connection interface may comprise one or more of the features described in this specification in connection with a connection interface provided on the adapter.

The load carrier may be configured as a bike carrier and may comprise a bike supporting portion. Each bike supporting portion may comprise a wheel tray portion for supporting a wheel of a bike. Each wheel tray portion may be pivotably coupled to the supporting structure via a coupling section and may be pivotable between a use configuration in which the wheel tray portion is unfolded and available for supporting a wheel of a bike, and a stowage configuration in which the wheel tray portion is folded for reducing the size of the load carrier for stowing purposes.

The wheel tray portion and/or the supporting structure may comprise a positioning section providing a geometric stop or abutment on said wheel tray portion, for example against a movement along a longitudinal extension direction of the wheel tray portion. The longitudinal extension direction of the wheel tray portion may be a direction extending cross, for example perpendicular to a longitudinal direction of the load carrier and may extend cross, for example perpendicular, to a travel direction of the load carrier when mounted on a vehicle. The positioning section may be configured to cooperate with an adapter, for example an adapter as described in other sections of this specification. The adapter may be geometrically configured to fit on the positioning section, for example such that a movement of the adapter along the wheel tray portion is blocked in at least one direction. The positioning section may be configured to cooperate with a designated supporting section on a cargo carrier, for example a designated supporting section as described in other sections of this configuration. The designated supporting section may be geometrically configured to fit on the positioning section of the wheel tray portion, for example such that a movement of the supporting section along the wheel tray portion is blocked in at least one direction.

The wheel tray portion may comprise a strap receiver and a strap. The strap receiver and the strap may be provided at the positioning section. The wheel tray portion may comprise or form the connection interface. The connection interface may comprise a through hole or a T-slot for receiving a fastener. The wheel tray portion may comprise a first section for fixedly attaching the cargo carrier to the wheel tray portion, for example via an adapter or directly via the designated supporting section. The wheel tray portion may comprise a second section for contacting an auxiliary supporting section of the cargo carrier. The second section may be configured to loosely contact the auxiliary supporting section or may be configured to be fixedly attached to the auxiliary supporting section.

Also disclosed is a cargo carrying system comprising a load carrier, for example a load carrier as described in other sections of this specification, and a cargo carrier as described in other sections of this specification.

In some configurations, at least one adapter may be provided on the load carrier. For example, four adapters may be provided on the load carrier. At least one fixation unit may be provided for detachably coupling the cargo carrier on the load carrier. The load carrier may be a bike carrier and may comprise a bike carrying portion comprising two foldable wheel tray portions, one left wheel tray portion and one right wheel tray portion. The adapters may be arranged on the wheel tray portions such that they do not interfere with each other or at least partially pass each other when folding the wheel tray portions with adapters mounted thereon. The adapters may be non-symmetrically arranged on the right and left wheel tray portions of the bike carrier with respect to a middle plane of the bike carrier. The adapters may be offset or comprise an off-set alignment and/or wherein any protruding sections of the adapters are off-set to each other to avoid a contact between them when folding said wheel tray. In an alternative configuration, the wheel tray portions may not be foldable but detachably mounted to the load carrier, for example coupled to end portions of profile rails mounted on the load carrier. Furthermore, in configurations in which the wheel tray portions can be detached from the load carrier, it is possible to configure the adapters such that they can be attached to the load carrier instead of the wheel tray portions, for example by attaching them to end portions of profile rails provided on the load carrier.

In some configurations, the load carrier is a bike carrier comprising pivotable wheel tray portions, wherein the cargo carrier is directly attachable to a wheel tray portion of the bike carrier. For example, the cargo carrier may be attached to the wheel tray portion by a bracket extending around the wheel tray portion on a lower side and fixed to the base body of the cargo carrier. The bracket may comprise a U-shaped bar extending around the wheel tray portion and wherein the bracket may be configured to extend into the base body and fixed by a suitable fastening member, for example a nut. In other configurations, the wheel tray portion may comprise a fixation groove, for example a T-slot. A suitable fastener may be received in the fixation groove and may be fixedly coupled to the base body. The cargo carrier may be fixed to the wheel tray portion by a fastener that extends through an opening in the wheel tray portion and through the lower surface of the cargo carrier, for example through an opening formed in the lower surface of the cargo carrier.

Furthermore, a cargo carrier, for example a box or load receptacle, comprising an attachment portion for mounting a wheel unit is disclosed. The cargo carrier may comprise one or more of the features described in other sections of this specification. The cargo carrier may comprise a base body supportable on a load carrier. The cargo carrier may further comprise a lid hingedly coupled to the base body. A wheel unit is provided and attachable to the cargo carrier at a lower corner portion of the base body. The base body may comprise an accommodating recess for receiving the wheel unit. The wheel unit may be a separate unit or component that is configured to be attached to the cargo carrier by suitable fixation means such as bolts, screws or rivets. The wheel unit may comprise a base section configured to rotatably support at least one wheel thereon and configured to be fixedly attached to the base body so as to be non-movable relative to the base body. Two wheels may be provided on the base section, but it is possible to provide a different number of wheels, for example only a single wheel. Each wheel is rotatably supported on the base section of the wheel unit. The base section may be a rigid member. The base section may be an elongate member. The base section may be formed matingly with the accommodating recess in the base body, for example such that a transition from an outer surface of the base section to an outer surface of the base body is substantially stepless and/or gapless. Furthermore, the outer side of the base section may be formed corresponding to the shape of corner portions adjacent to the accommodating recess, for example with the same curvature or radius. Providing the wheels on a separate component provides the benefit of a higher design freedom and allows for a more robust connection of the wheels to the load carrier.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a front perspective view on a cargo carrying system comprising a load carrier and a cargo carrier mounted on the load carrier.
Fig. 2 shows a rear perspective view on the cargo carrying system of Fig. 1.
Fig. 3 shows a front perspective view of the load carrier of the cargo carrying system shown in Figs. 1 and 2.
Fig. 4 shows a perspective view on a wheel tray portion of the load carrier and of an adapter for supporting the cargo carrier positioned on the wheel tray portion.
Fig. 5 shows an enlarged perspective view on a mounting position of the wheel tray portion where the adapter is mountable.
Fig. 6 shows a plan view on the wheel tray portion of Fig. 4.
Fig. 7 shows a perspective view on an adapter according to a first embodiment.
Fig. 8 shows a perspective view on an adapter according to a second embodiment.
Fig. 9 shows a further perspective view on the adapter according to the first embodiment.
Fig. 10 shows the adapter according to the first embodiment from below.
Figs. 11-14 show different views on the adapter according to the second embodiment and on a fixation unit coupled to the adapter.
Fig. 15 shows a perspective view on interior components of the fixation unit.
Fig. 16 shows a sectional view of a cargo carrier portion fixedly mounted to the adapter according to the second embodiment by means of the fixation unit.
Fig. 17 shows a section through the cargo carrier portion, the fixation unit and the adapter wherein cargo carrier portion and fixation unit are separated from the adapter.
Fig. 18 shows a perspective partially sectional view of the cargo carrier comprising a fixation unit and configured to be supported on the adapter.
Fig. 19 shows an exploded view of a fixation unit according to an embodiment.
Fig. 20 shows a rear view on a cargo carrier supported on a load carrier.
Fig. 21 shows a rear perspective view of the cargo carrier supported on the load carrier shown in Fig. 20.
Fig. 22 shows a perspective illustration of a base body of a cargo carrier according to an embodiment.
Figs. 23 and 24 show plan view on a base body of a cargo carrier according to a further embodiment.
Figs. 25 and 26 show different perspective illustrations of a further fixation unit according to an embodiment.
Fig. 27 shows a perspective illustration of another fixation unit according to a further embodiment.
Figs. 28-30 show different perspective illustrations of a further fixation unit according to another embodiment.
Fig. 31 shows a perspective and sectional illustration of another fixation unit according to still another embodiment.
Fig. 32 shows a modification of the embodiment of Figs. 25 and 26.
Fig. 33 shows a perspective view of a cargo carrier according to another embodiment.
Fig. 34 shows a perspective view of a base body of the cargo carrier of Fig. 33.
Fig. 35 shows a perspective view of a wheel unit of the cargo carrier of Fig. 33.
Fig. 36 shows a further adapter according to an embodiment.
Fig. 37 shows a side view of the adapter according to Fig. 36.
Fig. 38 shows a configuration in which two of the adapters according to Figs. 36 and 37 are mounted on a bike carrier.
Fig. 39 shows a wheel tray portion with an adapter according to Figs. 36 and 37 mounted thereon.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free).

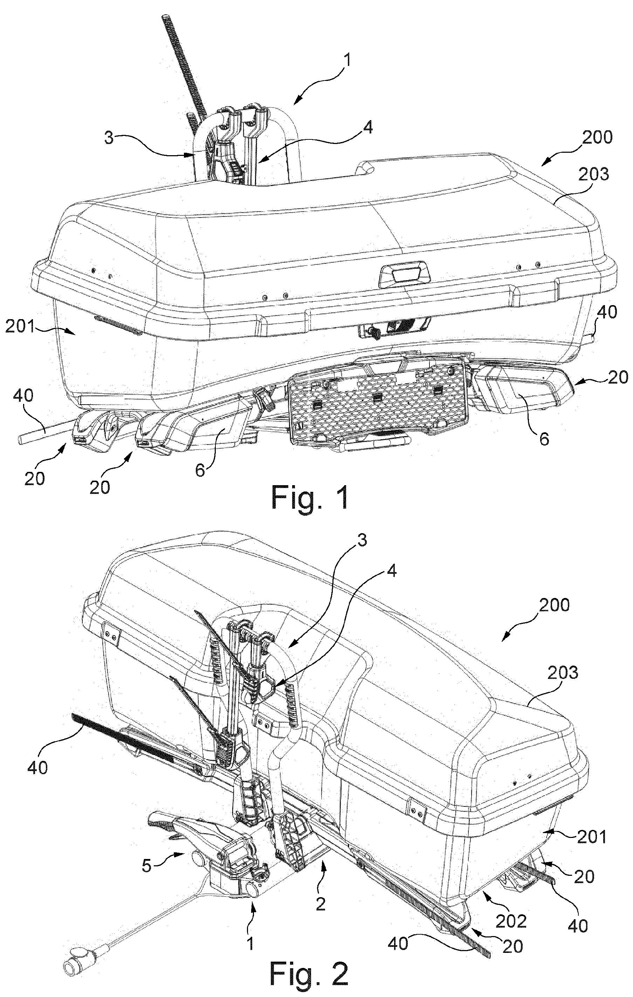

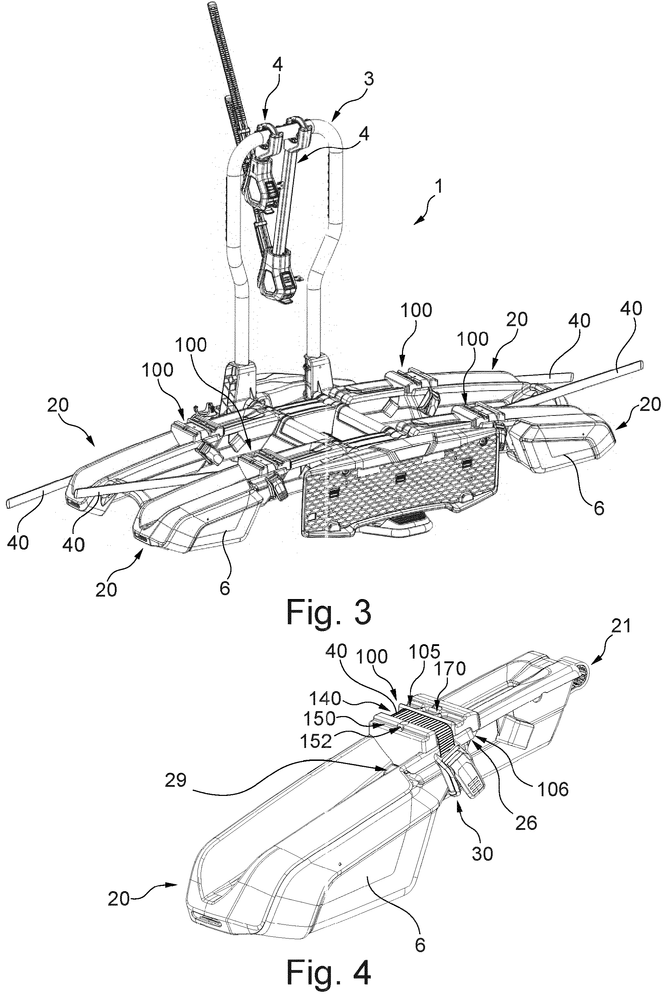

Figs. 1 and 2 shows a cargo carrying system in which a cargo carrier 200 is supported on a load carrier 1, for example by means of at least one adapter 100. However, in alternative configurations, the cargo carrier 200 may be directly supported on the load carrier 1 without using an adapter. The load carrier 1 may be a bike carrier. The cargo carrier 200 may be a load receptacle, for example a box or a basket. An exemplary bike carrier 1 is shown in Fig. 3.

The bike carrier 1 comprises a supporting structure 2, a load carrier coupling 5 and a supporting frame 3.

The supporting structure 2 may comprise a frame configuration. The supporting structure 2 may comprise a supporting beam, for example two supporting beams extending in parallel to each other. The supporting structure 2 may be configured to support bikes from below. Accordingly, the supporting structure 2 may be configured to take the main weight of a transported bike in the direction of gravity.

The load carrier coupling 5 is rigidly coupled to the supporting structure 2 and is configured to be coupled to a trailer coupling on a vehicle. The load carrier coupling 5 is provided on a rear portion of the supporting structure 2.

The supporting frame 3 may be provided close to or adjacent the load carrier coupling 5 and on the rear portion of the supporting structure 2. The supporting frame 3 extends upward from the supporting structure 2. The supporting frame 3 is configured to provide an additional support for bikes to be transported. As best seen in Fig. 3, bike arms 4 may be coupled to the supporting frame 3 at one end portion thereof and may be coupled to a bike to be transported at the other end portion thereof.

The bike carrier 1 further comprises base portions that in the present configuration are exemplary embodied as wheel tray portions 20 each configured to support a wheel of a bike from below. Two wheel tray portions 20 may form a bike supporting portion. The wheel tray portions 20 may be provided as separate parts or may correspond to different regions of a single wheel tray extending in width direction of the bike carrier 1. The wheel tray portions 20 may be pivotably coupled to the supporting structure 2. The wheel tray portions 20 may be pivotable between a use configuration in which the wheel tray portions 20 are unfolded and available for supporting wheels of a bike and a stowage configuration in which the wheel tray portions 20 are folded towards each other for reducing the size of the bike carrier 1 for stowing purposes.

Each wheel tray portion 20 comprises a coupling section 21 configured to pivotably couplable the wheel tray portion 20 to the supporting structure 2, for example to a supporting beam. Each wheel tray portion 20 comprises a wheel supporting section 23 provided in an upper portion of the wheel tray portion 20. The wheel supporting section 23 defines a wheel supporting surface 25 configured to be contacted by a wheel of a bike to be transported. The wheel supporting section 23 may be configured as an elongate recess or trough allowing to receive wheels of different diameters.

Each wheel tray portion 20 may comprise a fixation strap 40 and a strap receiver 30. A fixed end portion of the fixation strap 40 may be attached on one lateral side of the wheel supporting section 23 and the strap receiver 30 may be provided on an opposite lateral side of the rear supporting section 23. A free end portion of the fixation strap 40 is engageable with the strap receiver 30 to form a fixation loop for attaching the wheels of a supported bike. The strap receiver 30 may comprise a pump buckle mechanism with a pivotable operating lever allowing to tighten an inserted strap 40 by performing a reciprocating pivoting movement of the operating lever. The rearmost wheel tray portions may comprise rear lights 6.

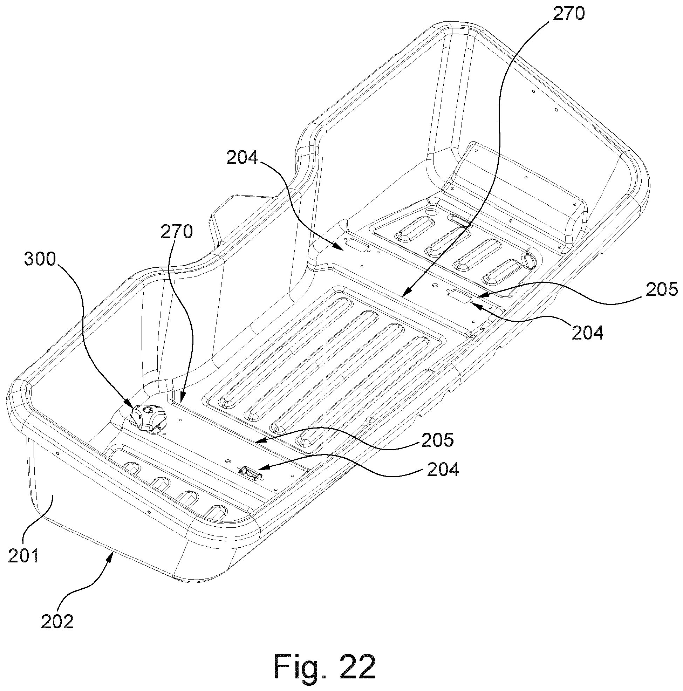

The cargo carrier 200 comprises a base body 201. The base body 201 comprises a trough shape and forms a lower portion of the cargo carrier 200. The base body 201 is opened to the top and configured to receive cargo to be transported. An exemplary configuration of the base body 201 is shown in Fig. 22.

The cargo carrier 200 further comprises a lid 203 hingedly coupled to the base body 201 and configured to open and close the opening of the base body 201. The base body 201 may be a molded base body, for example manufactured by injection molding. In some configurations, the base body 201 may comprise an integral configuration consisting of only a single piece. The base body 201 may comprise a supporting portion 205 which is configured to be supported on the load carrier 1. The supporting portion 205 may also be referred to as supporting section 205.

The supporting portion 205 may be reinforced by a reinforcing portion 206. The reinforcing portion 206 may be provided on a lower side 202 of the supporting portion 205. The reinforcing portion 206 may be made from metal. The reinforcing portion 206 may comprise a metal plate. The reinforcing portion 206 may extend in depth direction of the base body 201. The depth direction corresponds to a vehicle travel direction in the configuration as shown when the cargo carrier 200 is mounted on the load carrier 1. In some configurations, the extension of the supporting portion 205 in depth direction of the base body 201 is larger than the extension of the supporting portion 205 in the width direction of the base body 201. In some configurations, the extension of the reinforcing portion 206 in depth direction of the base body 201 is larger than the extension of the reinforcing portion 206 in the width direction of the base body 201.

The supporting portion 205 may define a recess on the lower side 202 of the base body 201. The recess may be provided such that steps or stepped portions 270 may be visible on an inner bottom surface of the base body 201. The stepped portions 270 may serve as an abutment portion for correctly positioning the base body 201 on the load carrier. A counterpart on the load carrier on which the supporting portions 205 are supportable may be configured as a protrusion that protrudes into the recess when the base body 201 is correctly placed on the load carrier. In general, the supporting portions 205 and portions on the load carrier on which the supporting portions 205 are supported may be mechanically coded to engage with each other when the base body 201 is correctly positioned on the load carrier. Accordingly, the correct mounting position may be found by slidably shifting the cargo carrier 200 on the load carrier. The supporting portion 205 may be provided such that an elevation or elevated portion is provided on the inner bottom surface of the base body 201. The reinforcing portion 206 may be accommodated in the recess. The base body 201 may comprise two supporting portions 205. The two supporting portions 205 may be provided symmetric to an imaginary vertical middle plane extending in depth direction and height direction of the base body 201.

A lower surface of the base body 201 may comprise a geometry that is formed matingly with an upper surface 105 of an adapter 100. The cargo carrier may comprise a designated supporting section 205 configured to be supported on the adapter 100. The designated supporting section 205 may be formed corresponding to an upper surface 105 of the adapter 100. The supporting section or supporting portion 205 may comprise a recess formed in the bottom wall of the cargo carrier 200.

At least one supporting portion 205 may be configured fixable to the load carrier 1. At least one supporting portion 205 may comprise an opening or recess 204 for receiving a fixation or fastening member 208 or a fixation unit 300.

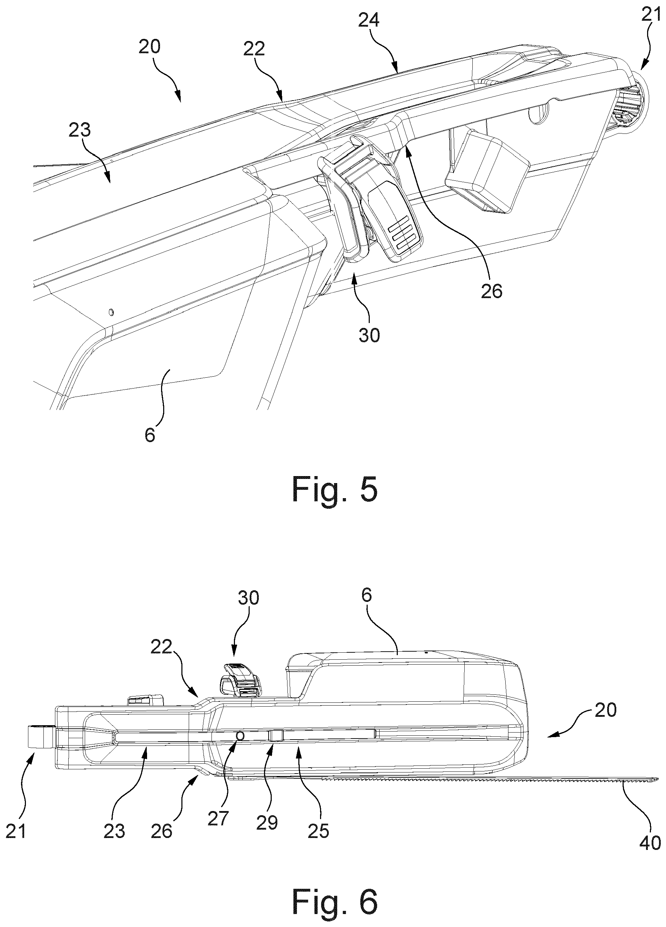

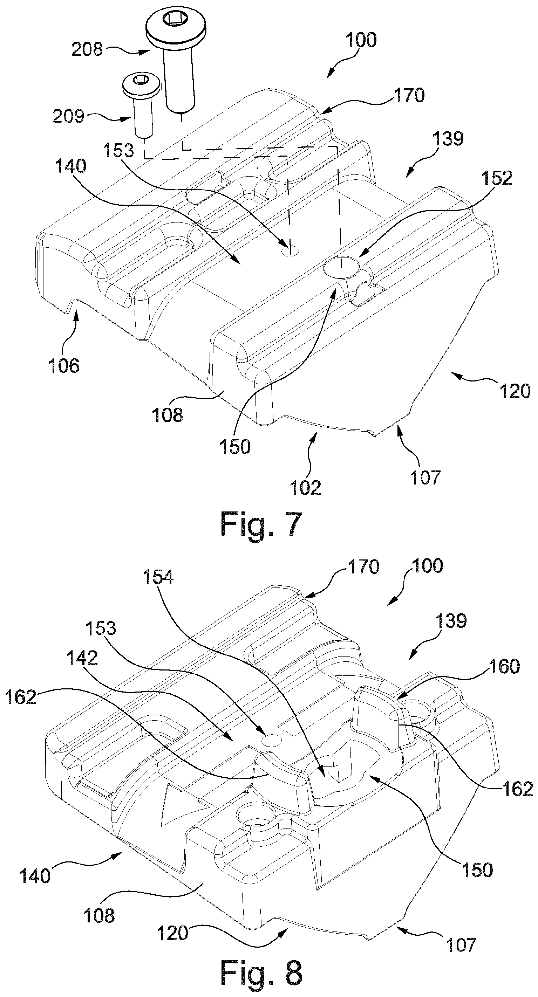

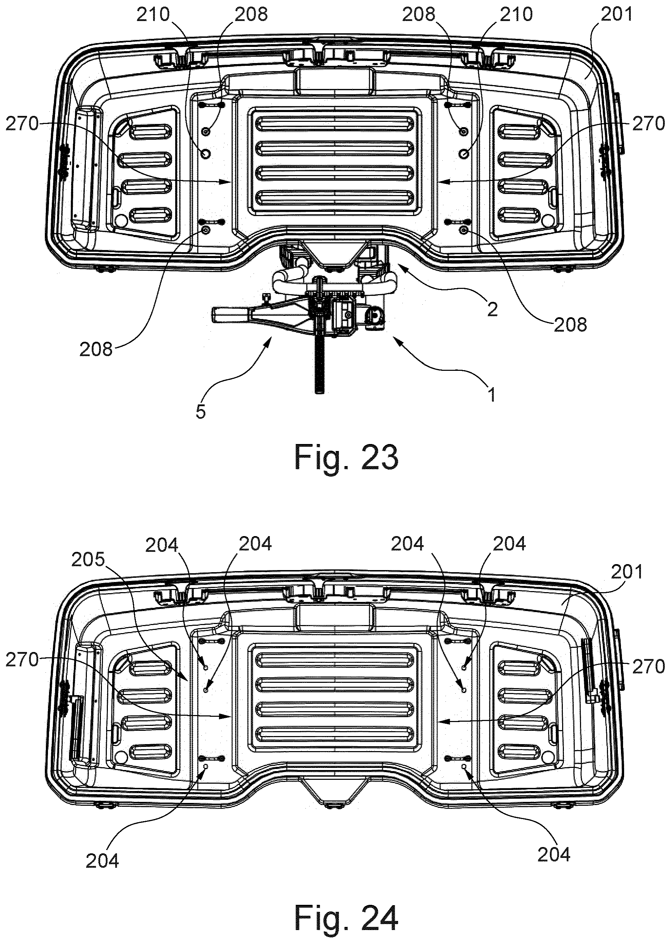

Fig. 22 shows a configuration in which a fixation unit 300 is provided on base body 201 and partially received in an opening or recess 204. Fig. 23 shows a configuration in which fastening members 208, for example threaded bolts or fixation screws, are received in openings or recesses 204. The threaded bolts or fixation screws can be used for attaching the base body to an adapter 100, for example by engaging a threaded opening or threaded hole 152 (see Fig. 7). The threaded bolts or fixation screws can be used for attaching the base body directly to the load carrier 1, for example via a fixation portion 27 in a wheel tray portion 20 (see Fig. 6). As is best seen in Fig. 24, multiple openings or recesses 204 may be provided in each supporting portion 205. A single opening or recess 204 may be provided in the rear portion of the supporting portion 205 and two or more openings or recesses 204 may be provided in a front portion of the supporting portion 205. For example, two openings or recesses 204 may be provided in the front portion such that the distances between the openings 204 in the front portion and the opening in the rear portion are different. Accordingly, differently spaced openings are available for the fixation of the cargo carrier 200 on the load carrier 1. This qualifies the cargo carrier 200 to be mounted on different load carriers. If the load carrier is a bike carrier, the distance between the front and rear openings 204 may correspond to a distance between the bike supporting portions of the bike carrier, for example the distance between wheel trays or wheel tray portions 20 of the bike carrier 1. Accordingly, the rear openings in the supporting portions 205 may be configured for a fixation on the rearmost bike supporting portion of the bike carrier 1 and the front openings are available for fixation on an adjacent and/or foremost bike supporting portion of differently dimensioned bike carriers with differently spaced bike supporting portions or differently spaced wheel trays. As is best seen in Fig. 23, openings that are not used for fixation purposes may be closed by cover members 210. In the embodiment of Fig. 23, the foremost and rearmost openings 204 of each supporting portion 205 are used for a fixation of the base body 201 on wheel tray portions 20 of the bike carrier 1.

The wheel tray portions 20 may be provided with guiding features such as protrusions or recesses to ensure the correct placement of the adapters 100 on the wheel tray portions 20 such that they fit with the cargo carrier 200 to be mounted thereon. In some configurations, the wheel tray portion 20 comprises a positioning section 26. The positioning section 26 is provided at a predetermined or predefined position 22 along the longitudinal extension of the wheel tray portion 20. The positioning section 26 may be provided to create a geometric stop or abutment. For example, the positioning section 26 may be provided by a step on a lateral outer surface side of the wheel tray portion 20 as best seen in Figs. 5 and 6. The positioning section 26 may form one part of a formlocking connection or positive connection. The positioning section 26 may in some configurations be provided to cooperate with an adapter 100 configured to secure the cargo carrier 200 to the wheel tray portion 20. Accordingly, the adapter 100 may be geometrically configured to fit on the positioning section 26, for example such that a movement of the adapter along the wheel tray portion 20 is blocked in at least one direction. In other configurations, the positioning section 26 may be configured to cooperate directly with a supporting portion of the cargo carrier.

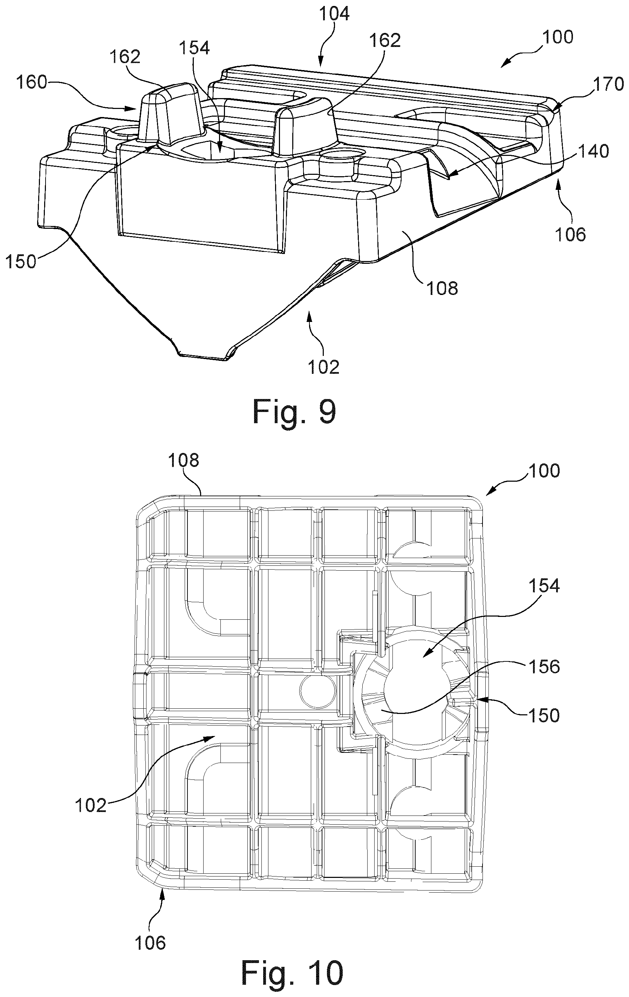

Exemplary configurations of an adapter 100 which is configured to support and/or secure a cargo carrier 200 on a load carrier, for example on one of the load carriers 1 as described before, will be described with reference to Figs. 7-10. In all of the shown exemplary configurations, the adapter 100 is configured mountable on a wheel tray portion 20 to convert the wheel tray portion 20 of the bike carrier 1 into a supporting portion for a cargo carrier 200 and/or to act as an interface between the wheel tray portion 20 and the cargo carrier 200. However in some configurations, the adapter may instead be mountable directly to the supporting structure 2 of the bike carrier 1. The adapter 100 may be a wheel tray block mountable on an upper side 24 of the wheel tray portion 20.

Each adapter 100 comprises an adapter mounting portion 139 which is configured to fix the adapter 100 on the wheel tray portion 20. The adapter mounting portion 139 may be configured to provide a support for a force transfer member or coupling member which is configured to couple the adapter mounting portion 139 to the wheel tray portion 20. The force transfer member or coupling member may be a rigid member such as a bolt, a screw a or a bracket. For example, the adapters 100 may be mounted on the wheel trays or wheel tray portions 20 by means of a fastener 209 (see Fig. 7), for example a screw or threaded bolt engaging with or accommodated in a fixation portion 27 (see Fig. 6), for example a threaded opening, in the wheel tray or wheel tray portion 20, a bracket enclosing the wheel tray or wheel tray portion 20, wherein the bracket may be U-shaped with free ends protruding into the adapter to be mounted and fixed thereon, or a T-bolt may be received in a T track formed in the wheel tray and coupled to the adapter 100 by means of a nut.

In some configurations, the adapter mounting portion 139 is configured to allow a fixation of the adapter 100 on the wheel tray portion 20 using parts of wheel tray portion 20. For example, the adapter mounting portion 139 may be configured to cooperate with the strap 40 on the wheel tray portion 20. For example, the adapter mounting portion 139 may be configured to be clamped onto the wheel tray portion 20 using the strap 40. The strap 40 on the wheel tray may be a strap 40 which is normally used for fixing the wheel of a bike on the wheel tray.

In some configurations, the adapter 100 comprises a strap receiving portion 140. The strap receiving portion 140 is configured such that the adapter 100 can be fixed on the wheel tray using the strap 40 of the wheel tray. Fig. 4 shows an exemplary arrangement in which the adapter 100 is mounted on the wheel tray portion 20 using the strap 40. The strap 40 is wound around the adapter 100, received in the strap receiving portion 140 and inserted into and tightened by the strap receiver 30. In this way, the adapter is securely held on the wheel tray portion 20. The adapter mounting portion 139 may comprise the strap receiving portion 140 which is configured to receive the strap 40 of the wheel tray portion 20. The strap receiving portion 140 may comprise a receiving arrangement for receiving the strap 40, for example a channel or recess 142. The receiving arrangement may be configured to prevent a relative movement of the adapter in a direction cross to the main extension direction of the strap 40 when the strap is coupled to the strap receiver 30 and/or in main extension direction of the wheel tray portion 20 along the upper surface of the wheel tray portion 20. The channel or recess 142 may extend in a direction which extends inclined to, for example cross to the main extension direction of the wheel tray portion 20 when the adapter 100 is mounted on the wheel tray. The recess may be formed such that the strap 40 is fully accommodatable therein, for example such that the strap 40 does not protrude from an upper side 104 of the adapter 100 when it is inserted in the recess. In some configurations, a channel may be provided through which the strap 40 may be passed for fixing the adapter 100 on the wheel tray in a manner such that the inserted strap 40 is at least partially concealed and not visible when viewing the mounted adapter 100 from above. In some configurations, the strap receiving portion 140 is provided on an upper surface 105 of the adapter 100. In addition or alternatively, the strap receiving portion 140 may be provided on at least one side surface 108 of the adapter 100.

In some configurations, the adapter mounting portion 139 may comprise a fixation opening 153 configured to receive or accommodate a fastening member, such as a screw or a threaded bolt (see Figs. 7 and 8). The adapter mounting portion 139 may comprise the fixation opening in addition or alternatively to the strap receiving portion 140. With such a configuration, the adapter 100 may be coupled to a load carrier using the fastening member. The load carrier 1 may comprise a suitable fixation portion 27, for example with a threaded opening for an engagement with a fastening member or a through opening allowing to pass a fastening member therethrough and fix the same using a counter member, such as a nut (see Fig. 6). It is noted that the fixation portion 27 may also be used for direct attachment of a cargo carrier 200 on the wheel tray portion 20.

The adapter 100 may be configured to cooperate with a geometry on the bottom of the cargo carrier 200 which facilitates correct alignment of the box on the adapters 100. The upper side 104 of the adapter 100 and a lower side 202 of the load receptacle or cargo carrier 200 which is supportable on the adapter 100 may be configured to engage in form locking manner. For example, the adapter 100 and the cargo carrier 200 may be configured to engage with each other such that a movement of the cargo carrier 200 relative to the adapter 100 is blocked in at least one direction, for example in cross direction of the bike carrier 1 and/or in longitudinal direction of the bike carrier 1, and/or such that a correct alignment of the cargo carrier 200 on the adapter 100 is facilitated. For this purpose, the adapter may comprise a protrusion 170 on its upper side which is configured to be received in a recess in the bottom or lower side of the cargo carrier 200. In general, a portion of the upper side of the adapter may be created in relief, for example with one or more protrusions protruding from the upper surface, and the lower side of the cargo carrier 200 can comprise a recess at least partially corresponding to the shape of this portion of the upper side of the adapter 100.

The adapter 100 may comprise a fixation portion 150 configured for receiving and/or engaging with a fixation member or a fastening unit used for fixing the cargo carrier 200 on the adapter 100. The fixation portion 150 may form or may comprise a connection interface. The fixation portion 150 may be configured to cooperate with a fastening unit 300 for fixing the cargo carrier to the adapter 100. The fastening unit 300 may be a quick connector.

As best seen in Fig. 7, the fixation portion 150 or connection interface may comprise one or more threaded holes 152 for receiving a fastening member 208 (see for example Fig. 23), for example a threaded bolt or a screw for fixing the cargo carrier 200 or load receptacle on the adapter 100. The threaded hole 152 may be provided by accommodating a threaded nut in an opening. Although not shown, it is noted that the fastening member 208 may comprise an operating portion that can be grasped and rotated by a user, for example a knob. The fastening member 208 may be configured to be tightened by a torque limiting tool to ensure a correct tightening force. In some configurations, the cargo carrier 200 may be directly mounted on the load carrier 1. The load carrier may comprise a fixation portion 27. As already mentioned before, the fixation portion 27 may be provided on a wheel tray portion of a bike carrier, for instance. The fixation opening 27 may be a threaded opening for an engagement with a fastening member or a through opening allowing to pass a fastening member therethrough and fix the same using a counter member, such as a nut. The fastening member 208 may be used to directly couple the cargo carrier 200 with the load carrier 1 without using an adapter as interface.

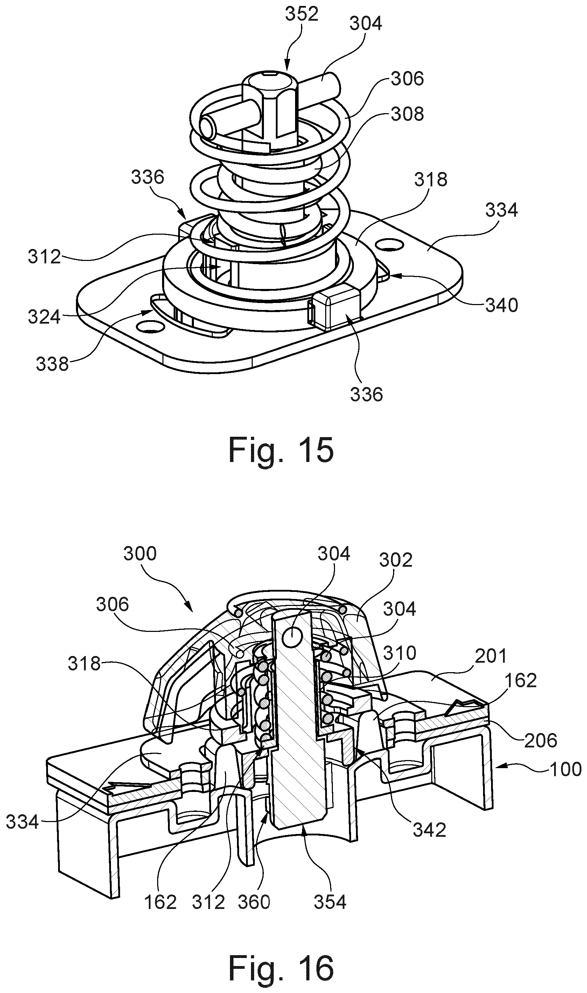

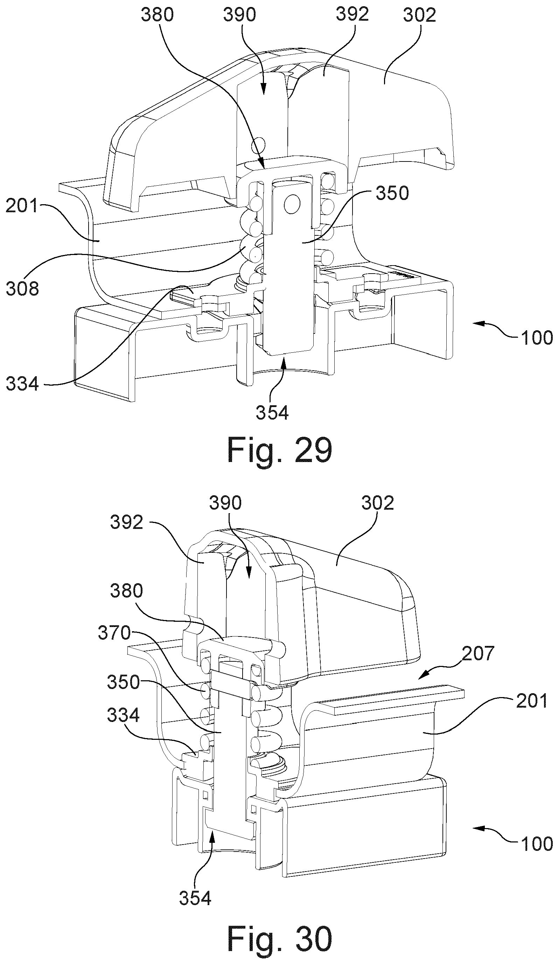

As best seen in Fig. 8, the fixation portion 150 or connection interface may alternatively be configured to receive an engaging portion 354 of an engaging member 350 of a fixation unit 300. Possible configurations of fixation units 300 are shown in Figs. 15 to 17, 19 and 25 to 32.

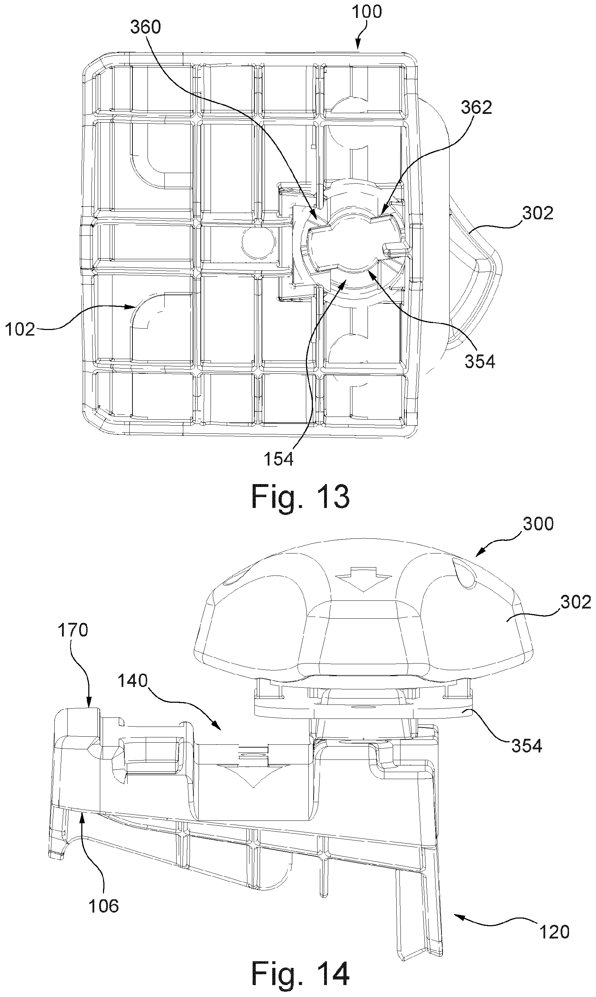

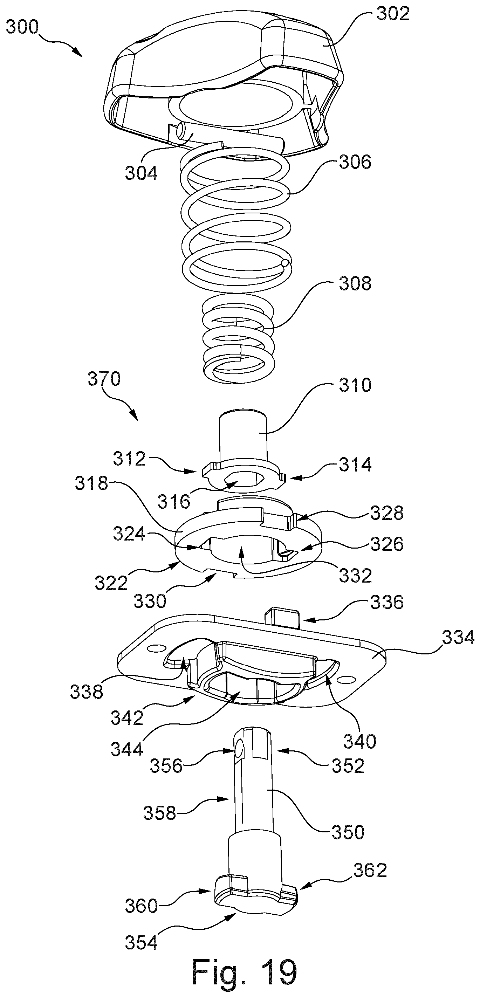

The fixation portion 150 may comprise an opening 154 configured to receive an engaging portion 354 of an engaging member 350 of a fixation unit 300. The opening 154 may be a non-round opening. The engaging portion 354 (see Figs. 13 and 19) may comprise a non-round shape corresponding to the non-round opening such that the engaging portion 354 is insertable into and removable from the opening 154 only when it is rotated to a predetermined unlocking position in which the engaging portion 354 is aligned with the non-round opening. The engaging portion 354 may comprise at least one protrusion 360, 362, for example two protrusions. The engaging portion 354 may be T-shaped. The engaging portion 354 may comprise two protrusions 360, 362 extending in different directions, for example extending away from each other on opposite sides of the engaging member 350. The engaging portion 354 may be configured to engage behind an abutment surface 156 provided adjacent a lower side of the opening 154 or extending radially from a lower end of the opening. For locking the fixation unit 300 and the cargo carrier 200 on the base portion, for example on the adapter 100, the engaging portion 354 may be rotated to a locking position once it was passed through the opening. In the locking position, the protrusion 360, 362 is positioned in alignment with the abutment surface 156 (see Fig. 13). The abutment surface 156 may face in insertion direction of the engaging portion 354, i.e. in a direction in which the engaging portion is translatory moved when inserting the same into and passing the same through the opening 154. The abutment surface provides a support surface for contacting the engaging portion 354, in particular the protrusions of the engaging portion, to block a movement of the engaging portion in a detaching or release direction that is opposite to the insertion direction. The engaging portion 354 may thus be engaged by a translatory movement followed by a rotation and disengaged by a rotation followed by a translatory movement. The abutment surface may be configured to be slidably contacted by the engaging portion 354, for example by the protrusions on the engaging portion when the engaging portion 354 is rotated. Each abutment surface 156 may be a cam surface with an apex portion that needs to be passed by the protrusion 360, 362 when traveling or sliding along the surface to the locking position or rest position so that the engaging portion needs to perform a translatory movement for allowing each protrusion to pass the apex portion. As will be further described later, the engaging portion 354 may be biased in detachment direction by an urging member so that sliding over the apex portion may only be possible against an urging force of the urging member. The abutment surface 156 may comprise an inclined surface section. The abutment surface 156 may comprise a step for blocking a movement out of the locking position. The abutment surface 156 may comprise a recess for at least partially accommodating a protrusion 360, 362 of the engaging portion 354. The recess may extend in detachment direction of the engaging member so that a protrusion 360, 362 may be received in or engaged with the recess by a movement of the engaging portion 354 in detachment direction. The engaging portion 354 may be biased in detachment direction by an urging member so that a protrusion 360, 362 may automatically engage with a recess and may only be disengaged from the recess against an urging force applied by the urging member.

As also seen in Fig. 8, the adapter 100 may comprise parts of misuse prevention configuration. The misuse prevention mechanism may comprise a poka yoke locking mechanism which is only operable when the cargo carrier 200 is correctly placed on the adapter 100. The adapter 100 may comprise a key portion or activation portion 160 which is configured to render a locking mechanism on the cargo carrier 200 operable or to activate the locking mechanism. The activation portion 160 may be configured to interact with a locking release portion in the cargo carrier 200 and/or in the fixation unit 300 when the cargo carrier 200 is correctly supported on the adapter 100. The activation portion 160 may comprise one or more protrusions 162. The cargo carrier 200 and/or the locking mechanism 370 may comprise one or more recesses 338, 340 arranged at a position and/or in a pattern corresponding to the position of the one or more protrusions 162 on the adapter 100. The activation portion 160 can be configured to move or apply a force on the force receiving portion in the cargo carrier 200 and/or locking mechanism 370 to move the force receiving portion towards an unlocking position. The force receiving portion is force transmittingly coupled to the locking mechanism 370 or is an integral portion of the locking mechanism 370 so that the activation portion 160 may unlock the locking mechanism 370 by moving the force receiving portion, to allow an operation of the same by a user. More details regarding misuse prevention and a cooperation between the adapter 100 and the fixation unit 300 will be described later and can also be found in the below aspects and in the summary portion.

In some configurations, at least two adapters 100 may be provided for supporting the cargo carrier 200. In some configurations, the bike carrier 1 may comprise four wheel tray portions 20 and a corresponding number of adapters 100. Accordingly, a configuration may be provided in which four adapters 100 are available for supporting the cargo carrier 200. The adapters 100 may commonly define a supporting plane for the cargo carrier 200.

The adapters 100 and/or wheel tray portions 20 may be configured such that folding of the wheel tray portions 20 is possible with the adapters 100 attached to the wheel tray portions 20. For example, the adapter 100 can be non-symmetrically arranged on the right and left wheel tray portions 20 of the bike carrier 1, to allow folding of the wheel tray portions 20 with adapters 100 fitted. For example, the adapters 100 on one and the same bike supporting portion may be arranged to extend laterally from the wheel tray portion 20 such that the total height of the wheel tray portion 20 in combination with the adapter 100 does not considerably increase in a region of the wheel tray portion 20 so that it is still possible to fold the wheel tray portions 20. Identical adapters 100 may be used on all positions of the bike carrier 1. In this way, only one molding tool may be used for manufacturing the adapters 100 which makes manufacturing cost efficient.

In some embodiments, the adapter 100 is designed such that it fits against the wheel tray portion 20 at the predefined position 22 such that a correct mounting position on the wheel tray may be easily found by a user. A lower side 122 of the adapter 100 may comprise a positioning portion 106 for correctly placing the adapter 100 on the wheel tray portion 20, in particular for correctly placing the adapter 100 at a predefined position in a longitudinal direction of the wheel tray arm and such that said adapter 100 is blocked from moving along the wheel tray arm in at least a first direction extending in longitudinal direction of the wheel tray arm and optionally also in a second direction opposite to the first direction. An upper side 24 of the wheel tray portion 20, for example an upper side 24 of the wheel tray arm, may comprise a positioning section 26 for correctly placing the adapter 100 on the wheel tray. A lower side 122 of the adapter 100 and an upper side 24 of the wheel tray may be configured to engage in formlocking member.

For example, the positioning portion 106 may be configured to accommodate a portion 26 of an upper edge or ridge of the wheel tray portion 20, for example in formlocking manner. The upper edge or ridge of the wheel tray portion 20 may comprise a step creating an abutment surface. The portion 26 of the upper edge or ridge may be a portion at which a width of the wheel tray arm changes. For example, the width may change from a narrow width portion provided closer to the coupling section 21 to a wider width portion. In addition or alternatively, a different positioning portion 107 may be provided instead or in addition to the already described positioning portion 106. The positioning portion 107 may be a protrusion or comprise a protruding portion as shown in Figs. 7 and 8 and may form a lowermost portion of the adapter 100. The positioning portion 107 may act as a stop that is in contact with a stop surface on the wheel tray portion 20 when the adapter 100 is correctly positioned on the wheel tray portion 20. The stop surface may be provided by a protrusion 29 formed on the wheel tray portion 20, for example in a longitudinal middle recess formed in the bottom of the wheel supporting surface 25. The positioning portion 107 may be a protrusion which, when the adapter 100 is supported on the wheel tray portion 20, extends into the recess formed in the bottom of the wheel supporting surface 25. The adapter may be shifted along the wheel supporting surface 25 along the recess until the positioning portion 107 contacts the protrusion 29 thereby reaching the correct mounting position on the wheel tray portion 20.

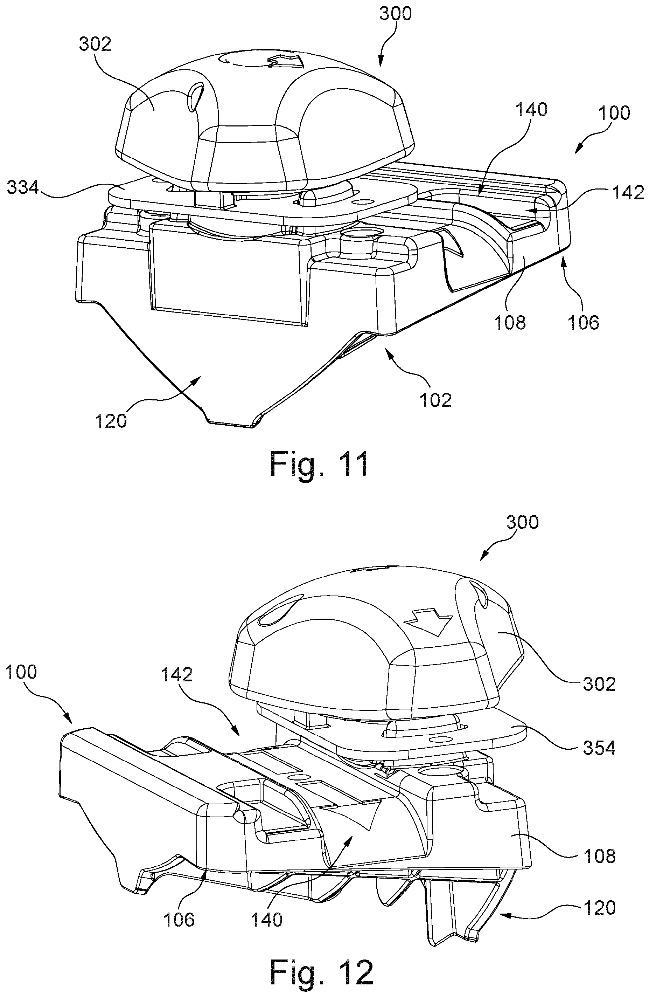

In some exemplary embodiments, the adapter 100 comprises a supporting portion 120 configured to be received in the wheel tray. The supporting portion 120 may be formed corresponding to the shape of the wheel tray. The supporting portion 120 may comprise a protrusion that may be shaped matingly with an upper surface geometry of the wheel tray. Multiple protrusions may be provided. Each protrusion may be formed as a rib as for example shown in Fig. 12. The supporting portion 120 may be provided on a lower surface or lower side 102 of the adapter 100.

In some embodiments, a mounted adapter 100 renders a wheel tray on which it is mounted unusable for supporting a bike. For example, when using the straps 40 for fixing the adapter 100 on the wheel tray portion, the strap is no longer available for the fixation of the wheel of a bike. Furthermore, the position on the wheel tray where the adapter is positioned may be a position at which the wheel of the bike normally rests on the wheel tray portion so that a correct placement of the wheel on the wheel tray portion is not possible.

Different fixation units 300, also referred to as fastening units, are disclosed. The fixation units 300 are generally suitable for attaching objects to other objects. Although the fixation units 300 are described to couple to the adapter 100, it is noted that other uses are conceivable in which a part, for example an accessory, is fixed to a carrying structure by means of the fixation unit 300. The use of the described fixation units is not limited to a use in combination with a cargo carrier and/or an adapter.

A fixation unit 300 according to an embodiment will be described with reference to Figs. 15 to17 and 19. As already noted, the fixation unit may also be referred to as fastening unit or quick connector. The fixation unit 300 may be configured to allow a tool-free attachment or fixation of the cargo carrier 200 to an accessory. The accessory may be a load carrier, a bike carrier, or may be an adapter serving as an interface on another member. The fixation unit 300 may be configured as quick connector. The fixation unit 300 may be configured to cooperate with a connection interface. The connection interface may be provided on the adapters 100 described herein or on another base portion, such as a wheel tray portion as described herein. The adapters may comprise a fixation portion 150 as a connection interface. The fixation unit 300 may be configured to be coupled to the fixation portion by a push and rotate operation.

The fixation unit 300 may comprise an actuating member 302, for example a handle or a knob. The fixation unit 300 may comprise an engaging member 350 which may be formed as a T-shaped locking pin but may in general comprise an elongate main body, for example a rod-like body with an engaging portion. The engaging member 350 may be provided such that oppositely oriented free ends of the T-shape or oppositely oriented protrusions 360, 362 are provided on a lower portion 354 of the engaging member 350 and can be used for an engagement with the connection interface or fixation portion 150. The lower portion 354 of the engaging member 350 forms or comprises an engaging portion.

The fixation unit 300 may further comprise a safety arrangement 370, also referred to as misuse prevention configuration 370, which is configured to activate or release the actuating member 302 or engaging member 350 when the cargo carrier is correctly positioned on the load carrier 1, for example positioned directly on the load carrier 1 or positioned on an adapter 100 provided on the load carrier 1. The misuse prevention configuration 370 or safety arrangement 370 may be provided to ensure that the fixation unit 300 may only be actuated when the fixation unit 300 is correctly arranged on the accessory to which it is mounted, for example correctly arranged on the adapters 100 as described herein or on other portions of load carriers, such as bike carriers 1. The misuse prevention configuration 370 may comprise a poka-yoke locking mechanism. For example, a blocking member 318 for blocking an operation of the fixation unit 300, for example blocking a movement of the engaging portion 354 and/or a movement of the actuating member 302 from an unlocking position to a locking position, may be provided. The blocking member 318 may be configured to normally actively block the operation of the quick connector 300. The blocking member 318 may be biased towards a blocking position and may be movable towards an unblocking position against an urging force in response to an interaction of the fastening unit 300 with the connection interface, for example the adapter 100. In this way, a rotation of the actuating member 302 and/or of the engaging member 350 can be prevented unless the fixation unit 300 is correctly arranged for fixation.

The engaging member 350 may comprise a shaft section 358. The engaging member 350 is operatively coupled to the actuating member 300. For example, the engaging member 350 and the actuating member 302 are operatively coupled such that a movement of the actuating member 302, for example of a knob, is transferred into a movement of the engaging member 350, for example into a translatory movement or a rotation of the engaging member 350. The engaging member 350 and the actuating member 302 may be rigidly coupled to each other, for example immovable relative to each other.

The engaging portion 354 may be provided on a first longitudinal end of the shaft section 358 and a coupling portion 352 may be provided on the other end, the second end of the shaft section 358. The coupling portion 352 and/or the engaging portion 354 may be integrally formed as a single unitary piece. The coupling portion 352 is configured to be force transmittingly coupled to the actuating member 302. In the configuration of Fig. 19, the coupling portion 352 comprises a fixation opening 356 for receiving a fixation pin 304. The actuating member comprises an accommodating opening for receiving the fixation pin 304. The fixation pin 304 may thus serve as a force transfer member that force transmittingly couples the actuating member 302 and the engaging member 350.

When the fixation unit 300 is in an unlocking configuration, the engaging portion 354 may be retracted into a correspondingly shaped opening 344 in a bottom portion 334 of the fixation unit 300. When the engaging portion 354 is positioned inside the opening 344, it is in formlocking engagement with the opening 344 and is prevented from being rotated. In this way, the engaging portion 354 will not protrude from the fixation unit 300 and the engaging portion 354 will be prevented from being damaged when handling the fixation unit 300 or the cargo carrier 200 to which it is associated or on which it is provided. Furthermore, the engaging portion 354 is held in a standby position in which it is correctly aligned for an insertion into a coupling partner, for example into the opening 154 of the fixation portion 150.

The bottom portion 334 may be formed by a plate like member which may on a lower side comprise a central lower protrusion 342 comprising the opening 344 for at least partially accommodating the engaging member 350. On an upper side of the bottom portion 334, a guiding protrusion 336 may be provided. As best seen in Figs. 19 and 15, two guiding protrusions 336 may be provided on opposite sides of the opening 344.

The bottom portion 334 may further comprise at least one recess 338, 340, for example provided as through holes. Each recess 338, 340 may be configured to receive an activation portion 160. The activation portion 160 may be provided on the adapter 100 or may be provided on another base portion, for example on a load carrier or bike carrier.

The engaging member 350 is received in the opening 344, for example slidably received in the opening 344. The shaft section 358 protrudes from an upper side of the opening 344 and between the guiding protrusions 336. The middle axes of the opening 344 and of the engaging member are aligned. A cylindrical guiding portion may be arranged adjacent to the engaging portion 354 and may form a bridging portion between the engaging portion 354 and the shaft section 358. The cylindrical guiding portion may be configured to be slidably supported in the opening 344 so as to be movable in its axial direction and rotatable about its longitudinal axis.

The safety arrangement 370 may comprise a locking portion 310. The locking portion 310 may be provided on the engaging member 350. The locking portion 310 may be a separate member provided on the engaging member 350 or may be integrally formed on the engaging member 350. The shaft section 358 may comprise a non-round outer circumferential surface and may be configured to support the locking portion 310 non-rotatably relative to the shaft section 358. The locking portion 310 may be a sleeve or ring-like member. The locking portion 310 may comprise an opening 316 in which the shaft section 358 is accommodated. The opening 316 comprises a cross section which corresponds to the cross section of the shaft section 358. The opening 316 is non-round. The shaft section 358 and the locking portion 310 are coupled so as to jointly rotate. Accordingly, a rotation of the shaft section is transferred to the locking portion 310. On the other hand, the shaft section 358 may only be rotated if the locking portion is allowed to rotate. The locking portion 310 may comprise at least one engaging section 312, 314. The engaging section 312, 314 may comprise a protrusion extending in radial direction of the locking portion 310. A rotation of the locking portion 310 may be blocked by arresting the locking portion 310 or by blocking a rotation of the locking portion 310.

The safety arrangement 370 may comprise a blocking member 318 movable between a blocking position in which it blocks a rotation of the actuating member and/or of the engaging member 350 or engaging portion 354, and an unblocking position in which it does not block a rotation of the actuating member 302 and/or of the engaging member 350 or engaging portion 354 or at least allows a movement of the engaging member 350 and of the locking portion 310 to a position at which rotating the engaging portion 354 is allowed and not blocked by the blocking member 318. In other words, a locking of the actuating member 302 is released or allowed to be released when the blocking member 318 is moved to the unblocking position. The locking of the actuating member 302 and/or of the engaging member 350 may be released by disengaging the blocking member 318 and the locking portion 310. The locking of the actuating member 302 and/or of the engaging member 350 may be allowed to be released by positioning the blocking member 318 in a release position or unblocking position in which the locking portion 310 can be moved relative to the blocking member 318 to a position in which the locking portion 310 is disengaged from the blocking member 318. The blocking member 318 may be biased towards the blocking position by an urging member 306. The urging member 306 may be a spring. The blocking member 318 may be configured to engage with the locking portion 310. The blocking member 318 may be configured and arranged to block a rotation of the locking portion 310 when the blocking member 318 is in the blocking position. In the blocking position, the blocking member 318 may be arranged to at least partially cover the recesses 338, 340 that are configured to receive the activation portion 160, for example the protrusions 162.

The blocking member 318 may be a ring-like member, for example a disc-shaped plate, with a hole or opening 332 in which the locking portion 310 may be at least partially received and which member or plate may be movable along the rotation axis of the engaging member 350 between the blocking position and the unblocking position. In the blocking position, the blocking member 318 permanently blocks a rotation of the engaging member 350, for example by establishing a permanent formlocking connection of the actuating member or of the engaging member 350 with a base portion or bottom portion 334 of the fixation unit 300 and therefore blocks a rotating movement of the actuating member 302 and of the engaging member 350. In the unblocking position, the blocking member 318 is disengaged or disengageable from the base portion and/or the actuating member and/or the engaging member 350 so that a rotating movement of the actuating member 302 and the engaging member 350 relative to the base portion 334 is allowed. The blocking member 318 may be configured to be operated by the activation portion 160. The blocking member may be configured to be moved towards the unblocking position when the cargo carrier 200 or fixation unit is positioned on the adapter 100 such that an activation portion of the adapter 100 is correctly positioned relative to the cargo carrier, for example received in the fixation unit, and shifts the blocking member towards the unblocking position. The activation portion may be a protrusion 160. However, it is also possible that the activation portion is a supporting portion on the base portion, for example on the adapter, and that a force transfer portion operatively coupled to the blocking member gets in contact with such supporting portion on the base portion leading to a movement of the blocking member 318 to the unblocking position.

The blocking member 318 may comprise an opening 332 for receiving the locking portion 310. The blocking member 318 may comprise inner recesses 324, 326 for receiving the engaging sections 312, 314 on the locking portion 310. The inner recesses 324, 326 may be formed in an inner surface of the blocking member 318 that limits the opening 332. The inner recess 324, 326 may extend along the entire length of the opening 332 and/or in parallel to an axial extension direction of the engaging member 350. The blocking member 318 is configured to receive the locking portion 310 in the opening 332 and the engaging sections in the recesses 324, 326. The locking portion 310 and the blocking member 318 may be axially movable relative to each other.

The blocking member 318 may be non-rotatably but translatory movably held on the bottom portion 334. The blocking member 318 may be axially guided so as to be movable only along the middle axis of the fixation unit 300. In some configurations, the blocking member 318 may be in engagement with the guiding protrusions 336 on the bottom portion 334. The blocking member 318 may comprise outer guiding recesses 328, 330 for accommodating the protrusions 336. The blocking member 318 may be movable towards and away from the bottom portion 334. The blocking position may be a position in which the blocking member 318 contacts the bottom portion 334. The unblocking position may be a raised position in which the blocking member 318 is positioned at a distance from the bottom portion 334 thereby providing a space or gap between the blocking member 318 and the bottom portion 334. Accordingly, a lower end of the inner recesses 324, 326 is uncovered so that the engaging sections 312, 314 may be moved out of engagement with the recess by a movement in longitudinal downward direction. The blocking member 318 may be moved to the unblocking position by means of the activation portion 160 urging the blocking member 318 towards the unblocking position. The activation portion 160 may contact a lower surface 322 of the blocking member 318 and apply a force on the lower surface. By moving the engaging member 350 in downward direction, for example by applying a pushing force on the operating member 302 in downward direction, the locking portion 310 may be moved downwards towards the bottom portion 334 relative to the raised blocking member 318 and up to a position in which the engaging sections 312, 314 are positioned in the gap between the blocking member 318 and the bottom portion 334 or below the raised blocking member 318 and are disengaged from the inner recesses 324, 326 whereby the locking portion 310 is now unlocked and allowed to be rotated relative to the blocking member 318. In this configuration, the actuating member 302 may be rotated and the engaging portion 354 may be engaged or rotated to the locking position.

The quick connector 300 may comprise two urging members 306, 308. The urging members 306, 308 may be springs. The urging members 306, 308 may comprise different resistance. A first urging member 306 may be configured and provided to apply a force on the actuating member 302 and/or on the engaging member 350 or on the engaging portion 354 such that the engaging portion 354 is biased towards a retracted position in which the engaging portion is received in the opening in the bottom of the quick connector or fastening unit 300. In addition or alternatively, the first urging member 306 may be configured and provided to apply a force on the blocking member 318 for urging the same towards the blocking position. For example, the first urging member 306 may be configured and arranged such that an upper end of the engaging member 350 and/or the actuating member 302 are urged away from the blocking member 318. The first urging member 306 may comprise a lower resistance and may exert a lower restoring force than the second urging member 308. The second urging member 308 with high resistance may be configured to be effective at least during an engaging process between the engaging portion 354 and the connection interface 150. In other words, the second urging member 308 may be effective when a user rotates the operating member for rotating the engaging member 350. The second urging member 308 and the first urging member 306 may be configured and arranged such that the second urging member 308 applies an urging force on the engaging member 350 only when the engaging member was moved against the urging force of the first urging member 306 for a predetermined distance from a standby position or unoperated position. In other words, the configuration may be such that a force application on the engaging member 350 by the second urging member 306 starts and is released at a predefined position in the translatory movement path of the engaging member 350. The predefined position may be a position of the engaging member 350 at which the engaging portion 354 is moved out of the opening 344 or may in general be a position at which the engaging portion 354 may be rotated to contact an engaging surface or abutment surface on the connection interface.

The engaging portion 354, for example the oppositely protruding protrusions, may be rotated by rotating the actuating member 302 of the quick connector once the actuating member 302 was pushed downwards against the force of the first urging member 306 for moving the engaging portion 354 out of the opening 344 in the bottom portion 334 of the quick connector 300 and/or for moving the engaging section 312, 314 out of the inner recesses 324, 326 to release a rotation of the engaging member 350. The engaging portion 354 may be configured to engage with an abutment surface 156, for example a cam surface 156, provided in the interface portion 150 when the engaging portion 354 is inserted into and rotated in the interface portion 150. The cam surface 156 and the engaging portion may be configured such that the engaging portion 354 is urged in a direction further away from the opening 344 in the bottom portion and/or against an urging force of the second urging member 308 when the engaging portion 354 is rotated. In other words, a contact between the engaging portion 354 and the cam surface 156 and the specific shape of the cam surface leads to a translatory movement of the engaging portion 354 against the urging force of the second urging member 308 upon rotating the engaging portion 354. The second urging member 308 may have a high resistance.

The cam surface 156 may be designed such that the protrusions 360, 362 on the engaging portion 354 need to pass an apex portion when moving them in sliding contact with and along the cam surface 156 to the locking position or rest position. At the apex portion the distance between the engaging portion 354 and the bottom portion 334 or bottom surface of the quick connector 300 into which the engaging portion may be retracted is the largest when moving the protrusions 360, 362 from the unlocking position to the locking position. In this way, the engaging portion 354 will securely remain in the locking position owing to the urging force of the second urging member 308 acting on the engaging portion 354 and maintaining the protrusions in a rest position on the cam surface. An unintentional movement of the engaging portion 354 from the locking position into the unlocking position is therefore prevented. Accordingly, an engagement between the engaging portion 354 and the adapter or other interface cannot come loose due to vibrations. The quick connector 300 may be configured such that the second urging member 308 with high resistance may be actuated by rotating a locking pin or protrusion on the engaging portion 354 such that the locking pin and the engagement portion is pulled downwards by contact with the connection interface, in particular by contact with the cam surface. The second urging member 308, for example the high resistance spring, can be configured to be arranged in a compressed state when the quick connector is in a locked state and the engaging portion was moved into the locking position, for example by passing the apex portion and/or by being positioned in a recessed locking portion in the cam surface. In some configurations, the blocking member 318 may be biased by the first urging member 306.

As best seen in Figs. 15 and 16, the first urging member 306 may be supported against an upper side of the blocking member 318 at one end and operatively coupled to the engaging member 350, for example by being supported against a lower side of the actuating member 302 or a fixation pin 304, at its other end to urge the actuating member 302 and the blocking member 318 away from each other. The first urging member 306 may be biased such that in an unloaded or unoperated state, the blocking member 318 is pushed into a blocking position, for example against the upper surface of the bottom portion 334, and the engaging portion 354 is held retracted in the opening 344 since the engaging member 350 is urged in opposite direction.

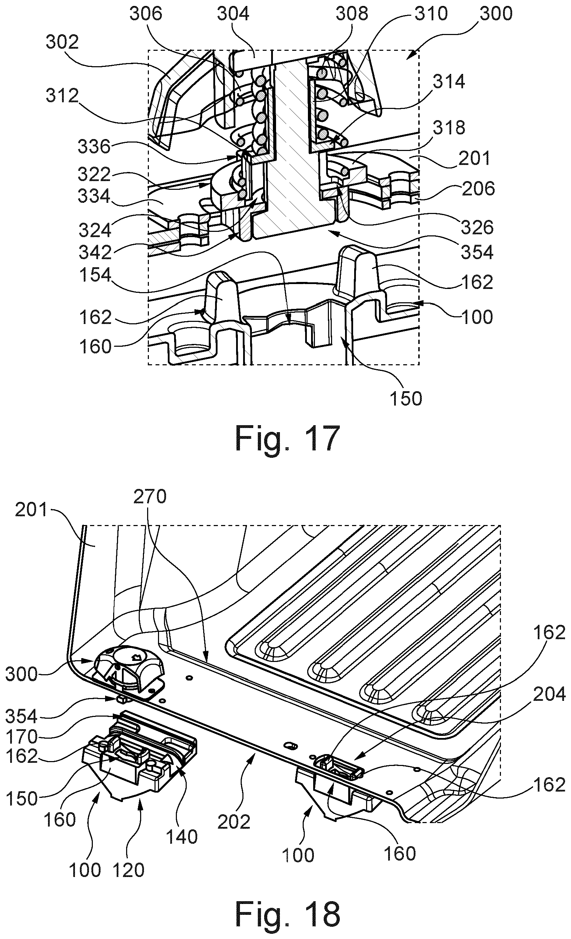

The function and use of an exemplary fixation unit 300 will be described with reference to Figs. 16 and 17. Fig. 17 shows a configuration in which the fixation unit 300 is positioned above and at a distance from an adapter 100. Fig. 16 shows a configuration in which the fixation unit 300 is correctly placed on and engaged with the adapter 100. In the configuration of Fig. 17, the blocking member 318 is in a blocking position and rests on the bottom portion 334 thereby covering portions of the recesses 338, 340 from above. In this state, the locking portion 310, more precisely the engaging sections 312, 314, is/are in engagement with the inner recesses 324, 326 of the blocking member 318. The blocking member 318 is in engagement with the guiding protrusions 336 (see Fig. 15) and, thus, held axially movable but non-rotatable. Therefore, the locking portion 310 cannot rotate and the actuating member 302 and engaging portion 354 cannot be rotated.

As best seen in Fig. 16, the blocking member 318 is pushed away from the bottom portion 334 by the protrusions 162 when the fixation unit 300 is correctly supported on the adapter 100. In this way, a gap is created between the blocking member 318 and the bottom portion 334 that is large enough for the engaging sections 312, 314 of the locking portion 310 to be moved out of and disengaged from the inner recesses 324, 326 by pushing the actuating member 302 downwards towards the bottom portion 334. Once the engaging sections 312, 314 are positioned in the gap and/or are disengaged from the inner recesses 324, 326, the engaging member 350 is allowed to rotate and the engaging portion 354 can be engaged with the interface portion 150 by rotating the actuating member 302. It is noted that in Fig. 16, the engaging portion 354 and the engaging sections 312, 314 of the locking portion are shown rotated.

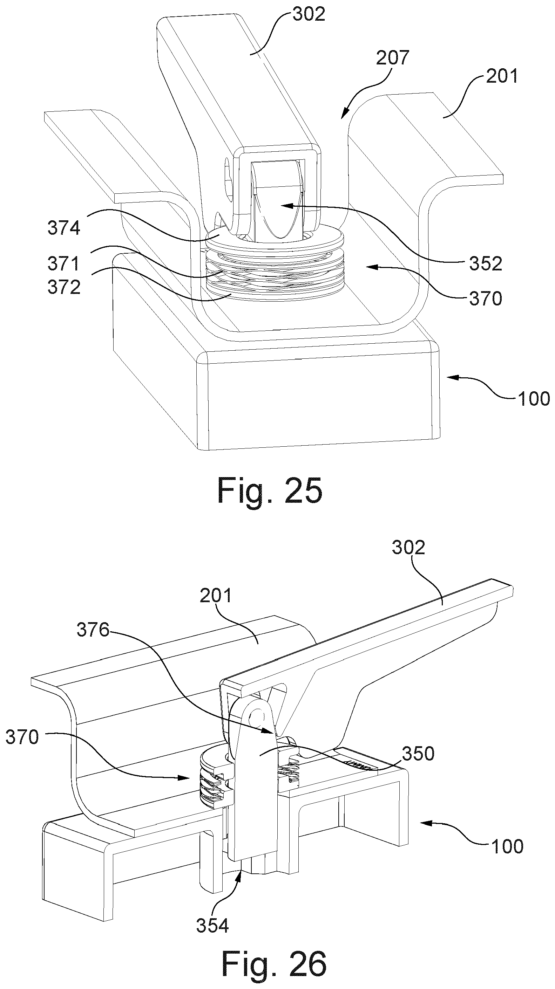

Further examples of fixation units 300 are described with reference to Figs. 25 to 32. All of the fixation units 300 comprise an engaging member 350 with an engaging portion 354 and a coupling portion 352 similar to the engaging member 350 described in connection with other configurations. The engaging portion 354 may again comprise protrusions 360, 362 and may be configured to engage with a connection interface or fixation portion, for example the fixation portion 150 described in connection with other configurations. The fixation portion 150 or connection interface may again be provided on an adapter 100. The fixation portion 150 again comprises an opening. The engaging portion 354 may be rotated to a locking position once it was passed through the opening. In the locking position, the protrusion 360, 362 is positioned in alignment with an abutment surface 156.

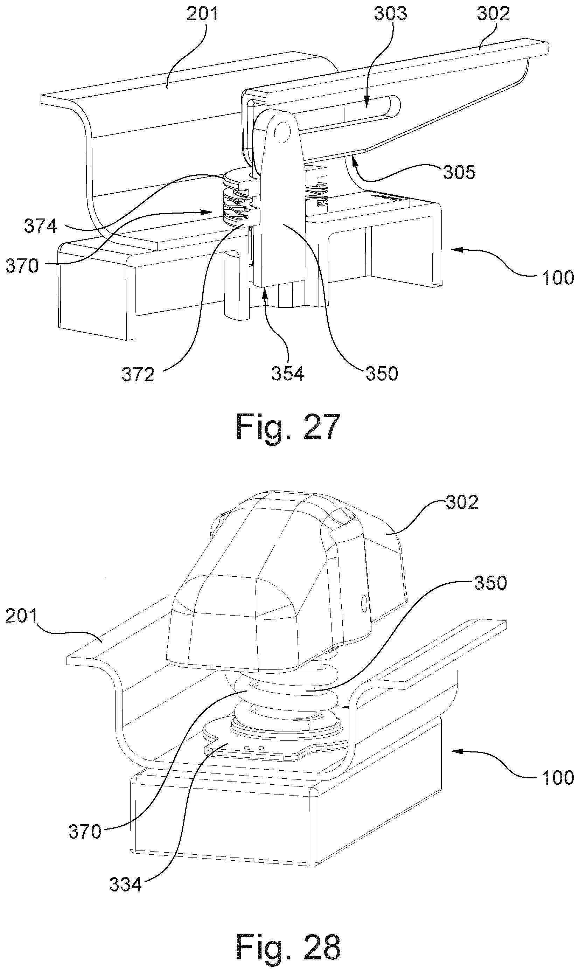

In some of the configurations, an urging portion 370 may be provided. The urging portion 370 may be configured to apply a force on the engaging member 350 in retraction direction to urge the engaging portion against the abutment surface 156. As best seen in Figs. 28 to 31, the urging portion 370 may have the function of the second urging member 308 as described in connection with other configurations. The urging portion 370 may in other configurations provide the function of a spring-loaded support, in particular in configurations in which the actuating member 302 is embodied as a lever. The urging portion 370 may comprise an urging member 371, for example a spring. The urging portion 370 may further comprise a lower supporting portion 372 and an upper supporting portion 374. The urging member 371 may be supported against the lower supporting portion 372 at one end thereof and against the upper supporting portion 374 at the other end thereof. The lower supporting portion 372 may be configured as a plate-like member comprising an opening for accommodating the engaging member 350. The upper supporting portion 374 may be configured as a plate-like member comprising an opening for accommodating the engaging member 350. The upper supporting portion 374 may be configured movable relative to the engaging member 350. The upper supporting portion 374 may be embodied as a sliding upper plate. The lower supporting portion 372 may be supported on the base body 201 of a cargo carrier 200.

Figs. 25 and 26 show an exemplary configuration of a fixation unit 300. The engaging member 350 is embodied as an elongate member which comprises the engaging portion 354 at a first end portion thereof and a coupling portion 352 at a second end portion thereof. An actuating member 302 embodied as a lever is pivotably coupled to the engaging member 350 at the coupling portion 352, for example by means of a pivot pin. The actuating member 302 is an excentric lever or cam lever that is slidably supported on the upper supporting portion 374 of the urging portion 370 to apply a force thereon when moved to a tightening position. The actuating member 302 is shown in the tightening position. In the tightening position a distance between a cam surface portion of the actuating member 302 which contacts the upper supporting portion 374, and the rotational center of the cam lever is larger than in an untightening position. The cam lever may be configured such that the tightening position corresponds to an over-dead-center position of the cam surface. The cam lever may further be configured to be transferred from an operating position to a locking position in which a movement of the lever in untightening direction is blocked. For that, the cam lever may be coupled to the pivot pin such that it is movable relative to the pivot pin when the lever is positioned in the tightening position. The cam lever may comprise a supporting slot 303 for slidably receiving the pivot pin.

The supporting slot 303 may be an L-shaped supporting slot (see Fig. 25). The slot may be provided such that the lower section of the L-shape extends towards a forward end of the cam lever in longitudinal direction of the cam lever and the vertical section of the L-shape extends perpendicular upwards with respect to the longitudinal direction of the cam lever. The cam lever may comprise a contact portion 376 that laterally abuts against the engaging member 350 and pushes the cam lever radially away from the pivot pin when the cam lever is transferred towards the tightening position. This forces the cam lever backwards during a closing movement such that the pivot pin is positioned in the forward section of the L-shaped supporting slot. In this way, the lever is blocked from moving upwards and the tension in the urging member 371 may be maintained.

The supporting slot 303 may in some configurations be a straight supporting slot (see modification in Fig. 27). The supporting slot 303 may extend in longitudinal direction of the cam lever. The cam lever may further comprise a blocking surface portion 305 providing an enlarged surface contact with the upper supporting portion 374 when the cam lever is positioned in the locking position. In the modification of Fig. 27, the blocking surface portion 305 extends in parallel with the supporting slot 303. When in the tightening position, the lever may be moved relative to the pivot pin to the locking position (towards the left in Fig. 27) in which the blocking surface portion 305 is moved over the upper supporting portion 374 and blocks a movement of the cam lever in untightening direction.

In another configuration, the straight slot may extend in a direction perpendicular to the longitudinal direction of the pivotable actuating member 302, for example a lever. In such a configuration, the upper supporting portion 374 may be arranged fixed on the engaging member 350 and non-movable relative to the engaging member 350. In such a configuration, the urging member 371 is compressed when the engaging portion 354 is rotated into the locking position due to a wedge action between the protrusions 360, 362 and the abutment surface 156. The lever may comprise a straight blocking surface portion 305 extending perpendicular to the straight slot and may be configured such that, once the lever is in the locking position, moves downward onto the upper supporting portion 374 to rest on the same. In this way, a movement of the lever in unlocking direction is rendered more difficult.

In some configurations, a rotation of the engaging member 350 and engaging portion 354 from the locking position to the unlocking position may be releasably blocked, for example by a geometric interference, for example a geometric interference between the actuating member 302 and a geometric stop portion 207 on the base body 201 or on the bottom portion 334, or between the engaging portion 354 and a geometric stop section in the interface portion 150.

The base body 201 may be configured such that it provides a geometric stop against a rotation of the actuating member 302. The base body 201 may comprise an accommodating recess 207 in which the actuating member 302, for example the lever as shown in Figs. 25 to Fig. 27 or Fig. 32 or an operating knob as shown in Figs. 28 to 30, can be arranged when rotated to the locking position. Accordingly, side walls of the accommodating recess 307 provide side stop portions preventing a rotation of the actuating member 302 and engaging member 350 when the lever is in the tightening position. In the embodiment shown in Figs. 25 to 27 and 32, the lever may be pivoted to be accommodated in the accommodating recess 207.

In the embodiment of Figs. 28 to 30, the knob is translatory movably coupled to the coupling portion 352 so as to be movable between a lowered position and an extended position while being rotation transmittingly coupled to the coupling portion 352. In other words, a telescopic knob or handle is provided. For example, the coupling portion may comprise or may be coupled to a force transmitting section 380. The force transmitting section 380 comprises a non-round outer circumference. For example, the force transmitting section 380 may comprise a square shape. The force transmitting section 380 may comprise a cylindrical but non-round outer circumference. The force transmitting section 380 may be configured as a cap mounted on an upper end portion of the engaging member 350. The force transmitting section 380 may be accommodated in a force receiving section 390 of the actuating member 302. The force receiving section 390 may comprise a non-round recess 392 for receiving the force transmitting section 380 slidably in axial direction. The actuating member 302 may be an elongate knob. In the locking position of the engaging member 350, the actuating member 302 is aligned with the accommodating recess 207 and may be pushed into the accommodating recess 207 by moving the actuating member 302 relative to the force transmitting section 380 and along the engaging member 350 towards the engaging portion 354. When positioned in the accommodating recess 207, the actuating member 302 is prevented from rotating. As is shown in the drawings, an urging portion 370 may be arranged to urge the force transmitting section 380 and the bottom portion 334 of the fixation unit 300 away from each other.

The engaging portion 354 may be configured as a male coupling partner of a bayonet mount and the interface portion 150 may be configured as a female receptor of the bayonet mount. The engaging portion 354 may comprise radial protrusions 360, 362. The radial protrusions 360, 362 may be wedge shaped or tapered. The engaging portion 354 may be loaded or biased by an urging member 371 or urging portion 370 in retracting direction.

In some configurations, the upper supporting portion 374 is formed as an integral part of the engaging member 350 or fixedly mounted to the engaging member 350. The upper supporting portion 374 may in such configurations also be referred to as fixed upper spring plate. In such configurations, the urging member 371 is only compressed through the rotating motion of the engaging portion 354 and is not additionally compressed through force application by the actuating member 302 on the upper supporting portion 374.

In some configurations, the upper supporting portion 374 is formed as a separate part movably mounted to the engaging member 350. The upper supporting portion 374 may in such configurations also be referred to as sliding upper spring plate. In such configurations, the urging member 371 is can be configured to be additionally, mainly or only compressed through force application on the upper supporting portion 374 by the actuating member 302.

In some configurations, the engaging portion 354 and the interface portion 150 are configured such that a rotation of the engaging portion 354 in the interface portion 150 is only allowed in one direction and locked in the other direction. For example, the abutment surface 156 may comprise a saw-tooth like section. As mentioned before, the radial protrusions 360, 362 may be wedge shaped or comprise an inclined surface and the abutment surface 156 may be formed with wedge shaped or inclined surface sections.

In some embodiments, the engaging portion 354 is retracted into the bottom portion 334 by an urging force of an urging member, for example the before described first urging member 306, and is extendable or deployable from the bottom portion 334 by pushing the actuating member 302 against the urging force applied by the urging member. In some embodiments, the engaging portion 354 is translatory movable against an urging portion having a varying spring stiffness. The urging portion may comprise two urging members, for example two compression springs. One compression spring may be configured to exert an urging force over the entire translatory moving range of the engaging portion 354 and the other compression spring may be arranged to only apply an additional urging force when the engaging portion 354 is rotated in the interface portion 150.

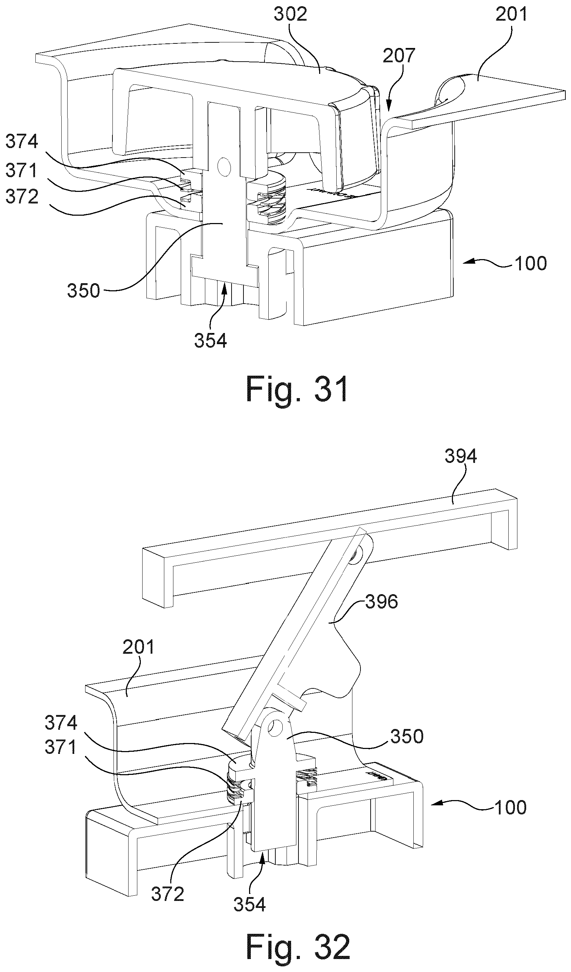

A basic configuration of a fixation unit 300 according to an embodiment is shown in Fig. 31. The actuating member 302, here a rotatable disc-like knob, that is coupled to the engaging member 350 is rotatable and accommodated in accommodating recess 207. However, recess 207 and knob are round so that a rotation is always possible. However, the accommodation of the actuating member 302 in the recess 207 prevents an unintended operation.

Fig. 32 shows a configuration in which a knob or handle portion 394 is hingedly coupled to the engaging member 350 by means of a lever 396. Lever 396 is hingedly coupled to the handle portion 394, for example to a middle portion of the handle portion 394, at a first end portion thereof and is hingedly coupled to the coupling portion 352 at a second end portion thereof. The handle portion 394 is movable between an extended position in which it is moved out of the accommodating recess 207 and a retracted position in which it is aligned with the accommodating recess 207 and accommodated in the accommodating recess 207. When accommodated in the accommodating recess 207, a rotation of the engaging member 350 is blocked.

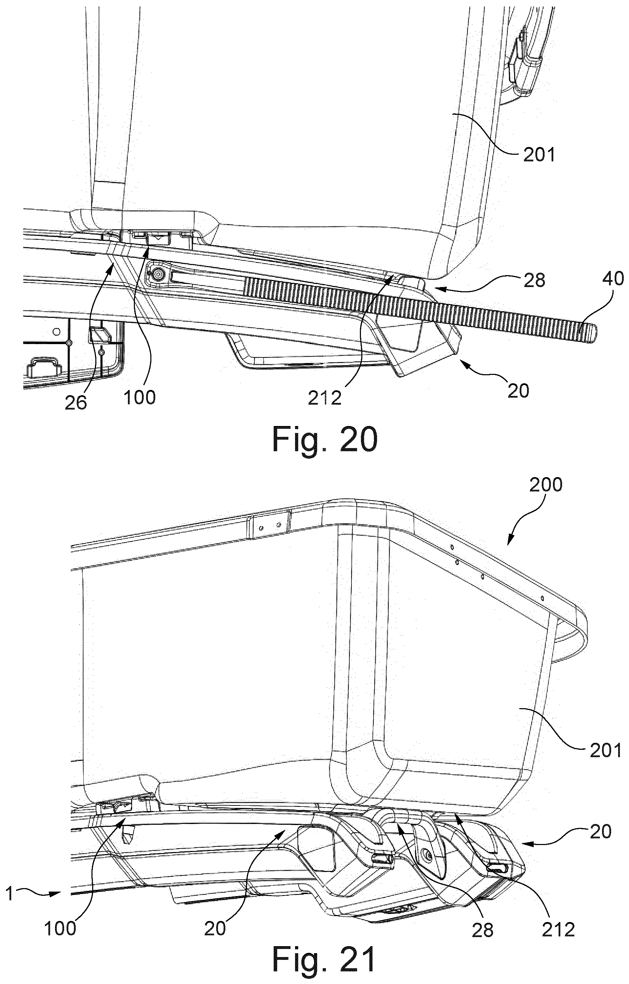

Figs. 20 und 21 show a possible configuration of a cargo carrier 200, for example a load receptacle, mountable on a bike carrier 1 with foldable wheel tray arms or wheel tray portions 20. The cargo carrier 200 may be configured to be attached to the bike carrier 1 in one of the before described ways, for example via one of the fixation units 300 and/or an adapter 100.

The load receptacle 200 may be configured to contact and/or to be supported on two different portions on the respective foldable wheel tray arm or portion. The load receptacle 200 may comprise a first supporting portion 205 which is configured to be fixedly mounted to the wheel tray arm. For example, the first supporting portion may be configured to be supported on and fixed to an adapter 100 mounted on a foldable wheel tray arm, for example an adapter 100 as described before and for example by a fixation unit 300 as described earlier. The first supporting portion 205 may be shaped according to the adapter 100 on which it is mountable.

The first supporting portion 205 may be configured to be mountable, directly or indirectly, to the foldable wheel tray arm 20 at a first position or first section, for example the positioning section 26 using the quick connector 300 as described herein. In general, the first supporting portion 205 may be configured to be fixed to the foldable wheel tray arm 20 in a formlocking manner using suitable fastening members or units like the quick connector or other fastening members such as screws, brackets and/or bolts.

The second supporting portion 212 may be configured to get in surface contact with a second section 28 of the foldable wheel tray arm 20. The second section 28 may be a section which is closer to the free end portion of the foldable wheel tray arm 20 than the first section. Accordingly, a further contact area between the load receptacle 200 and the wheel tray arms 20 of the bike carrier 1 may be provided further outward of the attachment points between the load receptacle and the foldable wheel tray arm towards the free ends of the foldable wheel tray arms 20. In this way, it is prevented that the wheel tray arms 20 pivot upwards when an upwardly directed force acts on the cargo box as can be the case when a vehicle on which the bike carrier 1 including the load receptacle 200 is mounted travels over a bump. The load receptacle 200 and the foldable wheel tray arms 20 may be configured such that the second supporting portion 212 only exerts little or no tensioning force on the foldable wheel tray arm 20 when the load receptacle is coupled to the foldable wheel tray arms 20 via the first supporting portion 205. However, it is possible to provide a second supporting portion 212 and/or second supporting portions that exert a tensioning force on the wheel tray arms 20 biasing the wheel tray arms 20 downwards when the load receptacle is attached to the bike carrier 1.

A load receptacle for attachment to a bike carrier with foldable wheel tray arms with direct attachment, more precisely without an adapter, may be provided. The load receptacle may be a load receptacle as described in other parts of this disclosure. The direct attachment between the load receptacle and the bike carrier 1 may be achieved by a U-shaped bar around the wheel tray. More precisely, the U-shaped bar may extend around the wheel tray and into the bottom of the load receptacle where it can be tightened and secured. Alternatively, at T-slot may be provided in the wheel tray into which a suitable fastener can be provided for extension through the bottom of the load receptacle for attaching the load receptacle thereto. In a further alternative, a fastener may be provided which extends through the wheel tray and through the bottom of the load receptacle.

The fixation unit 300 may be configured to automatically transfer from an unlocked state to a locking state when the cargo carrier 200 is correctly placed on the adapter 100. The actuating member may be configured such that a user may load the actuating member by moving the same against an urging force into a preloaded standby position where the actuating member is automatically locked. The safety arrangement may be configured to release a movement of the actuating member from the standby position and to allow the actuating member to move to the locking position when the cargo carrier 200 is correctly placed on the load carrier. The activation portion provided on the adapter 100 may serve as a trigger for the safety arrangement. The activation portion may serve as an operating member for the safety mechanism and may release the movement of the actuating member once it is received in the fixation unit.

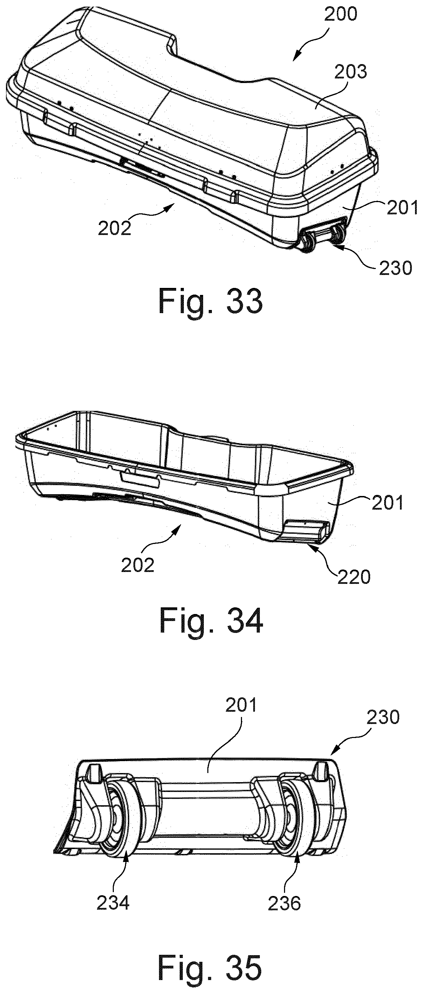

Fig. 33 shows a perspective view of a cargo carrier 200 according to an embodiment. The cargo carrier 200 may comprise features as disclosed in other sections of this specification. The cargo carrier 200 according to this embodiment comprises a base body 201 supportable on a load carrier and a lid 203 hingedly coupled to the base body. A wheel unit 230 is provided in a lower portion of the base body 201, for example in a lower longitudinal end portion of the base body 201 or a lateral lower edge portion of the base body 201. The wheel unit 230 may be a separate unit or component that is configured to be attached to the cargo carrier 200, for example at a corner or edge portion of the cargo carrier. An accommodating recess 220 may be provided in a lower corner portion of the base body 201. Fig. 34 shows a perspective view of the base body having such accommodating recess 220. The accommodating recess 220 is configured to receive the wheel unit 230. Fig. 35 shows a perspective view of a possible construction of the wheel unit 230. The wheel unit 230 comprises a base section 232 configured to rotatably support at least one wheel 234, 236 thereon and configured to be attached to the base body 201. In the shown embodiment, two wheels 234, 236 are provided on the base section 232 but it is possible to provide a different number of wheels, for example only a single wheel. Each wheel is rotatably supported on the base section 232 of the wheel unit 230. The base section 232 may be a rigid member. The base section 232 may be formed matingly with the recess 220, for example such that a transition from an outer surface of the base section 232 to an outer surface of the base body 201 is substantially stepless. Furthermore, the outer side of the base section 232 may be formed corresponding to the shape of corner portions adjacent to the recess 220, for example with the same radius. Providing the wheels on a separate component provides the benefit of a higher design freedom and allows for a more robust connection of the wheels to the load carrier.

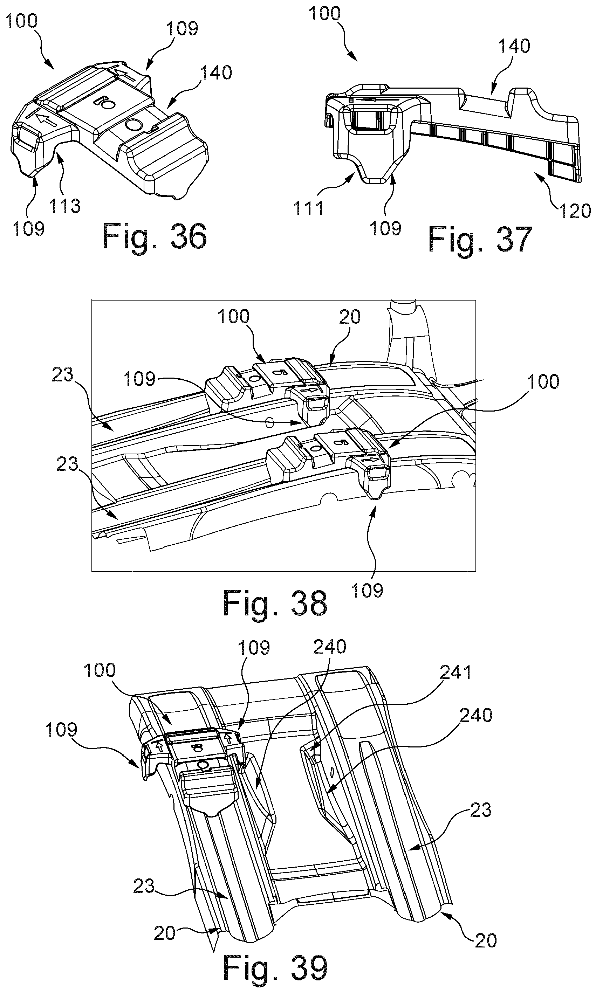

A further embodiment of an adapter 100 is shown in Figs. 36 to 39. This embodiment may comprise features of the adapters 100 that are described in other sections of this specification. For example, the modified adapter 100 as shown in Figs. 36 to 39 may be configured to be mounted on a wheel tray portion 20 comprising a wheel supporting section 23. The modified adapter 100 may comprise a supporting portion 120 that may be formed as described in other embodiments, for example such that the supporting portion 120 can be received in the wheel tray portion 20 and can be shaped matingly with an upper surface geometry of the wheel tray portion 20. The modified adapter 100 may comprise features for correctly positioning the same on the wheel tray portion 20 at a predetermined position, in particular a positioning portion. The modified adapter may differ from other adapters disclosed herein only by the specific configuration of the positioning portion. Other features may be implemented as described in other sections of this specification, in particular features for fixedly attaching the modified adapter 100 on the base portion or features for attaching a cargo carrier on the modified adapter 100 may be provided by configurations described in connection with adapter in other sections of this specification.

The modified adapter 100 may comprise a modified positioning portion 109 with at least one lateral positioning portion 109. The modified positioning portion 109 extends cross to an extension direction of the wheel supporting section 23 such that the positioning portion 109 laterally extends beyond an upper edge portion of the wheel supporting section. The positioning portion 109 may comprise a hook like shape extending from an upper portion of the modified adapter 100 and with a free end portion that extends downward thereby creating a receiving space between the free end portion and the main body of the modified adapter 100. The positioning portion 109 may be configured as a protruding wing. The receiving space may be limited by a stop surface 113, for example extending on the inside of the free end portion of the modified positioning portion 109 towards the main body of the modified adapter 100. The modified adapter 100 may be configured symmetrical. The modified adapter 100 may comprise positioning portions 109 on opposite sides or both lateral sides. Each modified positioning portion 109 may be configured to get in contact with or engage with surfaces on a base portion, for example a base portion of a bike carrier, in particular with a wheel tray portion. The free end portion of the modified positioning portion 109 may be configured as a stop and may comprise a contact section 111, for example a contact section 111 being oriented or facing in a forward direction of the modified adapter 100. The forward direction may in a mounted condition of the modified adapter 100 be a direction facing towards a middle portion of a bike carrier or towards the coupling section 21 of a wheel tray portion 20 or more generally a direction facing away from a free end of the wheel tray portion 20. The modified positioning portion 109 may be configured such that its free end portion is partially received in a guiding recess 240. The guiding recess 240 may be a groove formed in the wheel tray bottom, for example in a bottom portion formed between and/or connecting two adjacent wheel tray portions. The guiding recess 240 may be provided laterally outside of a wheel supporting section 23 and may extend along the wheel supporting section, for example in longitudinal direction of the wheel supporting section 23. Two guiding recesses 240 may be provided on opposite lateral sides of a wheel tray portion 20. With such a configuration, the adapter may be used on wheel tray portions having a guiding recess 240 on only one side so that only one of the modified positioning portions 109 is engaged with a guiding recess 240, or on a wheel tray portion having guiding recesses on both lateral sides so that both modified lateral positioning portion 109 are engaged with the guiding recesses 240. A wall portion 241 limiting the guiding recess 240 in longitudinal direction may act as a stop wall which is contacted by the modified positioning portion 109, more precisely by the contact section 111 when the modified adapter 100 is correctly positioned on the wheel tray portion 20. With such a configuration, the modified adapter 100 can be placed on the wheel supporting section 23 and pushed along the wheel tray portion 20, for example towards the center of the bike carrier, until the contact section 111 abuts with the wall portion 241. It is noted that, as seen in Fig. 37, the strap receiving portion 140 may by inclined or comprise an inclined strap supporting surface and the strap and the strap receiver may be arranged such that tightening the strap exerts a force in forward direction of the modified adapter 100. In this way, tightening the strap may increase a force by which the contact section 111 is pushed on the wall portion 241. Although the inclined strap supporting surface is described with respect to the modified adapter 100, it is noted that an inclined strap receiving portion 140 may generally be provided for generating a force pushing the positioning portion of the disclosed embodiments onto a counter part on the base portion.

In general, depending on the characteristics of the base, for example of a load carrier, in particular of a base portion such as a wheel tray portion or supporting frame portion of a bike carrier or a frame portion of a load carrier, the adapter can be configured and/or shaped and/or positioned differently. Furthermore, depending on the base to which the adapter is configured to be fixed, the adapter may be configured to be fixed to the base in different ways. Existing elements on a load carrier can be used for attaching the adapter on the load carrier, for example straps. In other configurations, it is possible that the adapter is configured to replace certain elements on the base or load carrier or to be mounted on the base or load carrier instead of elements or units coupled to the load carrier for a specific purpose. For example, wheel tray portions of a bike carrier may be configured detachable from a supporting frame and the adapter may then be fixed on the carrier instead of the wheel tray portions. In some configurations, wheel tray portions may comprise T-tracks in their wheel supporting sections that may be used for fixing the adapter using a T-bolt or similar fastening member. In other bike carriers, the wheel trays may be attached to a base frame and the adapters can be positioned between the base frame and the cargo carrier.

It is further noted that in some configurations, the adapters may be integrally formed with certain components of the load carrier or integrated in such components. For example, a wheel tray portion and/or a wheel holder mounted on the bike carrier may have a dual purpose of acting as an adapter. A strap associated with a wheel tray could be pulled on the underside and the associated strap receiver on the other side could be used for securing a wheel holder / adapter to a wheel tray.

Other features of the present invention will be apparent from consideration of the information contained above as well as in or in combination with configurations given in itemized structure of aspects below.

References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" and/or "formlocked" relate to configurations in which the parts or members are in positive engagement, positive mechanical engagement, or interlocking contact.

It is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing description will provide those skilled in the art with a convenient roadmap for implementing an exemplary embodiment, it being understood that various changes may be made in the function and arrangement of elements described in an exemplary embodiment without departing from the scope as set forth in the appended claims**.**

## Claims

1. Adapter (100) for securing a cargo carrier (200) to a bike carrier (1),
wherein said adapter (100) is configured to convert a wheel tray portion (20) of said bike carrier (1) into a supporting portion for said cargo carrier (200), and comprises
a supporting portion (120) configured to be received in said wheel tray portion (20),
an adapter mounting portion (139) configured to fix said adapter (100) on said wheel tray portion (20), wherein said adapter mounting portion (139) is configured to support a suitable fastening arrangement for coupling said adapter (100) to said wheel tray portion (20),
a fixation portion (150) for engaging with a fixation member or fixation unit (300) used for fixing said cargo carrier (200) on said adapter (100).

2. Adapter (100) according to claim 1,
wherein said adapter (100) is designed such that it geometrically fits against said wheel tray portion (20) at a predefined position (22) of said wheel tray portion (20) such that a correct mounting position on the wheel tray portion (20) may be easily found by a user,
and/or
wherein said adapter (100) comprises a positioning portion (106, 107, 109) for correctly placing said adapter (100) on said wheel tray portion (20),
wherein said positioning portion (106, 107) may be mechanically coded or shaped such that said adapter (100) or positioning portion (106, 107, 109) geometrically matches with said wheel tray portion (20) only at said predefined position (22) and/or in a predefined orientation, in particular matches with a positioning section (26, 29) of said wheel tray portion (20),
wherein said positioning portion (106, 107) may be provided on a lower side (102) of said adapter (100) and/or on a lateral side of said adapter (100),
and/or wherein said positioning portion (106) may be a hook-like portion configured to be hooked on said wheel tray portion (20),
and/or wherein said positioning portion (107) may be formed as a stop configured to contact a protrusion (29) on the wheel tray portion (20).

3. Adapter (100) according to one of the preceding claims,
wherein an upper side (104) of said adapter (100) is configured to engage with a lower side (202) of said cargo carrier (200) in formlocking manner, for example such that a movement of said cargo carrier (200) relative to said adapter (100) is blocked in cross direction of said load carrier (1) and/or such that a correct alignment or positioning of the cargo carrier (200) on the adapter (100) is facilitated,
wherein said adapter may be configured to act as a plug or as a socket of a plug and socket type connection, for example as a protrusion to be inserted into a recess on said cargo carrier (200), wherein said protrusion may extend in vertical upward direction when said adapter is mounted on said load carrier (1), or wherein the adapter (100) may comprise a stepped portion or a protrusion (170) on its upper side which is configured to be received in a recess in the bottom or lower side of the cargo carrier (200),
and/or wherein said upper side may be configured such that said cargo carrier (200) may fall into place or move by gravity into an attachment position by a vertical downward movement of said cargo carrier (200) in relation to said adapter (100) as soon as said cargo carrier (200) is correctly positioned in relation to said adapter (100).

4. Adapter (100) according to one of the preceding claims,
wherein said fastening arrangement may comprise a fastening member such as a bolt, a bracket, a nut or a strap,
and/or
wherein said fastening arrangement may be a fastening arrangement already existing on said load carrier (1), for example a fastening arrangement that is permanently provided on said load carrier and/or that is normally used for purposes other than attaching said adapter (100),
wherein said adapter mounting portion (139) may comprise a strap receiving portion (140) configured to receive a strap (40) of said wheel tray portion (20), for example the strap (40) which is normally used for fixing a wheel of a bike on said wheel tray portion (20),
and/or
wherein said adapter (100) and said strap receiving portion (140) are configured such that said adapter (100) can be fixed on said wheel tray portion (20) using said strap (40) of said wheel tray portion (20),
wherein said strap receiving portion (140) may comprise a channel or a recess (142) extending in a direction which extends cross to the main extension direction of the wheel tray portion (20) when the adapter (100) is mounted on said wheel tray portion (20),
wherein said recess (142) may be formed such that said strap (40) is fully accommodatable therein such that said strap (40) does not protrude from an upper side (104) of said adapter (100) when it is inserted in the recess (142),
and/or
wherein said strap receiving portion (140) may be provided on an upper surface (105) of said adapter (100) and/or on at least one side surface (108).

5. Adapter (100) according to one of the preceding claims,
wherein said supporting portion (120) may be formed corresponding to the shape of said wheel tray portion (20) and may comprise a protrusion (122) or a recess that may be shaped matingly with an upper surface geometry of said wheel tray portion (20), wherein said supporting portion (120) may be formed corresponding to a wheel supporting section (23) of said wheel tray portion (20) to get in surface contact with a wheel supporting surface (25) defined by said wheel supporting section (23), wherein said wheel supporting section may be formed like a trough and/or may be formed or comprise an elongate recess,
wherein said supporting portion (120) may be provided on a lower surface (103) of said adapter (100),
and/or wherein said supporting portion (120) may be integrally formed with or act as said positioning portion (106, 107).

6. Adapter (100) according to one of the preceding claims,
wherein said fixation portion (150) may comprise one or more threaded openings (152) for receiving threaded bolts (208) or screws for fixing said cargo carrier (200) on said adapter (100),
and/or
wherein said fixation portion (150) may comprise an opening (154) configured to receive an engaging portion (354) of an engaging member (350) of a fixation unit (300),
and/or
wherein said opening (154) may be a non-round opening and wherein said engaging portion (354) may comprise a non-round shape corresponding to said non-round opening such that said engaging portion (354) is insertable into and removable from said opening (154) only when it is rotated to a predetermined unlocking position in which said engaging portion (354) is aligned with said non-round opening,
and/or
wherein said engaging portion (354) may comprise at least one protrusion (360, 362), for example two protrusions, wherein said engaging portion (354) may be T-shaped and/or wherein said engaging portion (354) may comprise two protrusions (360, 362) extending in different directions, for example extending away from each other on opposite sides of said engaging member (350), wherein said at least one protrusion (360, 362) may be wedge shaped or tapered,
and/or
wherein said engaging portion (354) may be configured as a male coupling partner of a bayonet mount and wherein said interface portion (150) may be configured as a female receptor of a bayonet mount.

7. Adapter (100) according to one of claims 1 to 6,
wherein said adapter (100) comprises a key portion or activation portion (160) which is configured to render a locking mechanism (370) of a fixation unit (300), for example provided on the cargo carrier (200), operable and/or release a movement of an engaging portion (354) of said locking mechanism (370) when said fixation unit (300) and/or said cargo carrier (200) is correctly placed on said adapter (100),
wherein said adapter (100) may comprise an activation portion (160) which interacts with a locking release portion, for example with a blocking member (318), in said cargo carrier (200) and/or in said fixation unit (300), when said cargo carrier (200) is correctly supported on said adapter (100),
wherein said activation portion (160) may comprise one or more protrusions (162) and wherein said cargo carrier (200) and/or said fixation unit (300) may comprise one or more recesses (338, 340) arranged at a position and/or in a pattern corresponding to the position and/or pattern of said one or more protrusions (162) on said adapter (100), wherein said one or more recesses (338, 340) may grant access to or may accommodate said locking release portion,
wherein said activation portion (160) can be configured to move or apply a force on a force receiving portion of said locking release portion, for example a lower surface (322) of said blocking member (318), in said cargo carrier (200) and/or in said locking mechanism (370),
wherein said force receiving portion may be force transmittingly coupled to said locking mechanism (370) or is an integral portion of said locking mechanism (370) so that said activation portion (160) may unlock said locking mechanism (370) to allow an operation of the same by a user.

8. Fixation unit (300), for example a quick connector, configured for tool-free fixation of a cargo carrier (200) to the the adapter (100) according to any one of the preceding claims,
wherein said fixation unit (300) comprises an engaging portion (354) engageable with said fixation portion (150) by a locking movement, wherein said locking movement at least includes a rotation and wherein said locking movement may comprise a translatory movement of said engaging portion (354) followed by a rotation of said engaging portion (354), wherein said engaging portion (354) may be configured to be movable from a retracted position to an extended or deployed position followed by a rotation to a locking position,
and/or
wherein said fixation unit (300) may comprise a safety arrangement configured to normally block said locking movement of said engaging portion (354) to a locking position, for example a rotation of said engaging portion (354) from an unlocking position to said locking position, and to allow said engaging portion (354) to perform a locking movement when said fixation unit (300) is correctly positioned on said fixation portion (150) and interacts with an activation portion (160).

9. Fixation unit (300) according to claim 8,
wherein said safety arrangement comprises a blocking member (318) configured to block said locking movement of said engaging portion (354) to said locking position,
wherein said blocking member (318) is movable, for example translatory movable, between a blocking position in which said locking movement of said engaging portion (354) is blocked and an unblocking position in which said locking movement of said engaging portion (354) is allowed or may be performed or caused by a user,
wherein said blocking member (318) may be biased towards said blocking position by an urging member (306), for example by a spring,
wherein said blocking member (318) may be configured to engage with a locking portion (310) operatively coupled to said engaging portion (354), wherein said locking portion (310) and said engaging portion (354) may be connected so as to jointly move,
wherein said blocking member (318) may be configured and arranged to block a rotation of said locking portion (310),
wherein said blocking member (318) may comprise an opening (332) for receiving said locking portion (310),
wherein said blocking member (318) may comprise an inner recess (324, 326) for receiving an engaging section (312, 314) provided on said locking portion (310), wherein said inner recess (324, 326) may be formed in an inner surface of said blocking member (318) that limits said opening (332), wherein said inner recess (324, 326) may extend along an entire length of said opening (332), wherein said blocking member (318) may be configured to slidably receive said locking portion (310) in said opening (332) and said recess (324, 326), wherein said locking portion (310) and said blocking member (318) may be movable relative to each other,
wherein said blocking member (318) may be non-rotatably but translatory movably held on a bottom portion (334) of said fixation unit (300), wherein said bottom portion (334) may be configured to be attached to an accessory, for example a cargo carrier, wherein said blocking member (318) may be axially guided so as to be movable only along a middle axis of said fixation unit (300), for example along a middle axis of an elongate fixation member (350) comprising said engaging portion (354) and said locking portion (310),
wherein said blocking member (318) may be in engagement with guiding portions (336), for example guiding protrusions (336) on the bottom portion (334), wherein said blocking member (318) may comprise outer guiding recesses (328, 330) for accommodating said guiding protrusions (336), wherein said blocking member (318) may be movable towards and away from said bottom portion (334), wherein said blocking position may be a position in which said blocking member (318) contacts said bottom portion (334), wherein said unblocking position may be a raised position in which said blocking member (318) is positioned at a distance from said bottom portion (334) thereby providing a space or gap between said blocking member (318) and said bottom portion (334), wherein said blocking member (318) may be moved to said unblocking position by means of said activation portion (160), wherein said activation portion (160) may be configured to contact a lower surface (322) of said blocking member (318) and to apply a force on said lower surface (322),
wherein said locking portion (310) may be moved downwards towards said bottom portion (334) relative to said raised blocking member (318) up to a position in which said engaging sections (312, 314) are positioned in said gap between said blocking member (318) and said bottom portion (334) and disengaged from said inner recesses (324, 326) rendering said locking portion (310) rotatable relative to said blocking member (318).

10. Fixation unit (300) according to claim 8 or claim 9,
wherein said engaging portion (354) is configured as a male part of a bayonet mount,
wherein said engaging portion (354) may be provided on an elongate engaging member (350), for example on a lower portion of said engaging member (350),
wherein said engaging portion (354) may comprise at least one protrusion (360, 362), for example two protrusions, wherein each protrusion may be wedge shaped or tapered,
wherein said engaging portion (354) may be T-shaped and/or wherein said engaging portion (354) may comprise two radial protrusions (360, 362) extending in different directions, for example extending away from each other on opposite sides of said engaging member (350),
wherein said engaging portion (354) may be configured movable in longitudinal direction of said fixation unit,
wherein said engaging portion (354) may be configured retractable into an opening or recess (344) in said bottom portion (334) or towards said bottom portion, wherein said opening or recess (344) may be formed with a shape mating with the engaging portion such that said engaging portion (354) may be received in formlocking manner and blocked from being rotated, wherein said engaging portion (354) may be loaded or biased by an urging member (371) or urging portion (370) in retracting direction.

11. Fixation unit (300) according to one of claims 8 to 10, further comprising an actuating member (302) operable by a user and operatively coupled to said engaging portion (354) so as to jointly rotate with said engaging portion (354),
wherein said actuating member (302) may comprise a rotatable knob, a rotatable handle or a rotatable lever,
wherein said actuating member (302) may be movable relative to said engaging portion (354) between an extended position and a retracted position, and wherein when positioned in said retracted position, said actuating member (302) is blocked from rotating by a geometric stop portion,
wherein said actuating member (302) may be received in an accommodating recess (207) and said geometric stop portion may be provided by a side wall of said accommodating recess (207).

12. Coupling system comprising
a fixation unit (300) according to one of claims 8 to 11, and
a fixation portion (150), wherein said fixation portion (150) is provided on an adapter (100) according to one of claims 1 to 7 mounted to a bike carrier (1),
wherein said fixation unit (300) and said fixation portion (150) are configured such that an operation of said fixation unit (300) by a user is only possible when said fixation unit (300) is correctly supported on said fixation portion (150).

13. Cargo carrier (200), for example a cargo box or a load receptacle, said cargo carrier (200) comprising
a base body (201),
wherein said base body (201) comprises a designated supporting section (205) configured to be detachably supported on a fixation portion of an adapter (100) according to one of claims 1 to 7, and
wherein said supporting section (205) may comprise a recess (204) formed in a bottom wall or lower surface (202) of said base body (201), wherein said supporting section may be configured to support a suitable fastening arrangement for coupling said cargo carrier (200) to said adapter (100), for example a fastening arrangement comprising a fastening member such as a bolt, a bracket or a nut,
wherein said bottom wall or lower surface (202) of said base body (201), in particular said supporting section (205), may comprise a geometry that is formed matingly with an upper surface (105) of said adapter (100),
and/or
wherein said designated supporting section (205) is configured to be detachably fixed to a pivotable wheel tray portion (20) at a first section (26) using said adapter (100), and/or
wherein said cargo carrier (200), for example said base body (201), comprises an auxiliary supporting section (212) configured to contact an upper surface of the same wheel tray portion (20) at a second section (28), wherein said auxiliary supporting section (212) is provided further outward from said designated supporting section (205) such that said second section is closer to a free end of said wheel tray portion (20) than said first section or such that said second section is further away from a coupling section (21) of said wheel tray portion (20) than said first section,
and/or
wherein said cargo carrier (200) may comprise two designated supporting sections (205) and two auxiliary supporting sections (212), wherein a distance between said designated supporting sections (205) is smaller than a distance between said auxiliary supporting sections (212), and/or wherein said designated supporting sections (205) are arranged between said auxiliary supporting sections (212) and/or wherein said auxiliary supporting sections (212) are configured to contact said wheel tray portions (20) at a free end portion of the wheel tray portions (20) and/or wherein said auxiliary supporting sections (212) are configured to contact a bridging portion connecting free end portions of two adjacent wheel trays (20).

14. Load carrier (1) fixable to a vehicle, said load carrier (1) comprising
a supporting structure (2) for supporting a bike to be transported from below, wherein said supporting structure may comprise a frame configuration with at least one supporting beam,
a vehicle coupling portion (5), for example a load carrier coupling, rigidly coupled to said supporting structure (2) and configured to be coupled to a vehicle, for example to a trailer coupling on said vehicle, and/or
a fixation portion (150) configured to be engaged by a fixation unit (300) according to one of claims 8 to 11, wherein said connection interface (150) is part of said adapter (100) according to one of claims 1 to 7, and/or
wherein said load carrier (1) is configured as a bike carrier and comprises a bike supporting portion,
wherein each bike supporting portion comprises a wheel tray portion (20) for supporting a wheel of a bike,
and/or wherein each wheel tray portion (20) may be pivotably coupled to said supporting structure (2) via a coupling section (21) and may be pivotable between a use configuration in which said wheel tray portion (20) is unfolded and available for supporting a wheel of a bike, and a stowage configuration in which said wheel tray portion (20) is folded for reducing the size of the load carrier (1) for stowing purposes,
and/or wherein said wheel tray portion (20) or said supporting structure may comprise a positioning section (26) providing a geometric stop or abutment on said wheel tray portion (20), for example against a movement along a longitudinal extension direction of said wheel tray portion (20), wherein said positioning section (26) may be configured to cooperate with said adapter (100) according to one of claims 1 to 7, wherein said adapter (100) is geometrically configured to fit on said positioning section (26), for example such that a movement of said adapter along said wheel tray portion (20), for example in longitudinal direction of said wheel tray portion, is blocked in at least one direction, for example in a direction towards a middle plane of the load carrier or in a direction oriented away from the middle plane of the load carrier,
and/or wherein said load carrier (1) is a bike carrier and comprises a bike carrying portion comprising two foldable wheel tray portions (20), one left wheel tray portion and one right wheel tray portion, wherein said adapters (100) according to one of claims 1 to 7 are arranged on said wheel tray portions (20) such that they do not interfere with each other or at least partially pass each other when folding said wheel tray portions (20) with adapters (100) mounted thereon, wherein said adapters (100) may be non-symmetrically arranged on the right and left wheel tray portions (20) of the bike carrier (1) with respect to a middle plane of said bike carrier (1) and/or wherein said adapters may comprise an off-set alignment and/or wherein any protruding sections of the adapters, for example the protrusion (170) as mentioned in claim 3, are off-set to each other to avoid a contact between them when folding said wheel tray,
and/or wherein said wheel tray portion (20) may comprise a strap receiver (30) and a strap (40), wherein said strap receiver (30) and said strap may be provided at said positioning section (26),
and/or wherein said wheel tray portion (20) may comprise a first section (26) for fixedly attaching said cargo carrier to said wheel tray portion (20) and a second section (28) for contacting an auxiliary supporting section (212) of said cargo carrier (200), wherein said second section may be configured to loosely contact said auxiliary supporting section (212) or may be configured to be fixedly attached to said auxiliary supporting section (212).

15. Cargo carrying system comprising a load carrier (1) according to claim 14 and a cargo carrier (200) according to claim 13,
wherein at least one adapter (100) is provided on said load carrier (1), for example four adapters (100) are provided on said load carrier (1),
and/or
wherein at least one fixation unit (300) is provided for detachably coupling said cargo carrier (200) on said load carrier,
wherein said load carrier (1) is a bike carrier and comprises a bike carrying portion comprising two foldable wheel tray portions (20), one left wheel tray portion and one right wheel tray portion, wherein said adapters (100) are arranged on said wheel tray portions (20) such that they do not interfere with each other or at least partially pass each other when folding said wheel tray portions (20) with adapters (100) mounted thereon, wherein said adapters (100) may be non-symmetrically arranged on the right and left wheel tray portions (20) of the bike carrier (1) with respect to a middle plane of said bike carrier (1),
and/or
wherein said load carrier is a bike carrier comprising pivotable wheel tray portions (20), wherein said cargo carrier (200) is directly attached to a wheel tray portion (20) of said bike carrier, for example by a bracket extending around said wheel tray portion on a lower side and fixed to said base body of said cargo carrier, wherein said bracket may comprise a U-shaped bar extending around said wheel tray portion and wherein said bracket may be configured to extend into the base body (201) and fixed by a suitable fastening member, for example a nut, or wherein said wheel tray portion (20) may comprise a fixation groove, for example a T-slot, and wherein a suitable fastener is received in said fixation groove and is fixedly coupled to said base body (201), or wherein said cargo carrier (200) is fixed to said wheel tray portion (20) by a fastener that extends through an opening in said wheel tray portion and through the lower surface of said cargo carrier (200).

## Patentansprüche

1. Adapter (100) zum Befestigen eines Lastenträgers (200) an einem Fahrradträger (1),
wobei der Adapter (100) konfiguriert ist, um einen Radschalenabschnitt (20) des Fahrradträgers (1) in einen Tragabschnitt für den Lastenträger (200) umzuwandeln, und einen Tragabschnitt (120) umfasst, der konfiguriert ist, um in dem Radschalenabschnitt (20) aufgenommen zu werden,
einen Adaptermontageabschnitt (139), der konfiguriert ist, um den Adapter (100) an dem Radschalenabschnitt (20) zu befestigen, wobei der Adaptermontageabschnitt (139) konfiguriert ist, um eine geeignete Befestigungsanordnung zum Koppeln des Adapters (100) mit dem Radschalenabschnitt (20) zu tragen,
einen Befestigungsabschnitt (150) zum Eingreifen mit einem Befestigungselement oder einer Befestigungseinheit (300), die zum Befestigen des Lastenträgers (200) an dem Adapter (100) verwendet wird.

2. Adapter (100) nach Anspruch 1,
wobei der Adapter (100) so gestaltet ist, dass er geometrisch an einer vordefinierten Position (22) des Radschalenabschnitts (20) an dem Radschalenabschnitt (20) anliegt, sodass eine richtige Montageposition auf dem Radschalenabschnitt (20) von einem Benutzer leicht gefunden werden kann,
und/oder
wobei der Adapter (100) einen Positionierungsabschnitt (106, 107, 109) zum korrekten Platzieren des Adapters (100) auf dem Radschalenabschnitt (20) umfasst,
wobei der Positionierungsabschnitt (106, 107) mechanisch so codiert oder geformt sein kann, dass der Adapter (100) oder Positionierungsabschnitt (106, 107, 109) nur an der vordefinierten Position (22) und/oder in einer vordefinierten Ausrichtung geometrisch mit dem Radschalenabschnitt (20) zusammenpasst, insbesondere mit einem Positionierungsabschnitt (26, 29) des Radschalenabschnitts (20) zusammenpasst,
wobei der Positionierungsabschnitt (106, 107) an einer unteren Seite (102) des Adapters (100) und/oder an einer seitlichen Seite des Adapters (100) bereitgestellt sein kann
und/oder wobei der Positionierungsabschnitt (106) ein hakenartiger Abschnitt sein kann, der konfiguriert ist, um an dem Radschalenabschnitt (20) eingehakt zu werden,
und/oder wobei der Positionierungsabschnitt (107) als ein Anschlag gebildet sein kann, der konfiguriert ist, um einen Vorsprung (29) an dem Radschalenabschnitt (20) zu berühren.

3. Adapter (100) nach einem der vorstehenden Ansprüche,
wobei eine obere Seite (104) des Adapters (100) konfiguriert ist, um formschlüssig mit einer unteren Seite (202) des Lastenträgers (200) in Eingriff zu treten, beispielsweise so, dass eine Bewegung des Lastenträgers (200) relativ zum Adapter (100) in Querrichtung des Lastträgers (1) blockiert wird, und/oder so, dass eine korrekte Ausrichtung oder Positionierung des Lastenträgers (200) auf dem Adapter (100) unterstützt wird,
wobei der Adapter konfiguriert sein kann, um als Stecker oder als Buchse einer Steckverbindung zu fungieren, beispielsweise als Vorsprung, um in eine Aussparung am Lastenträger (200) eingeführt zu werden, wobei sich der Vorsprung vertikal nach oben erstrecken kann, wenn der Adapter am Lastträger (1) montiert ist, oder wobei der Adapter (100) an seiner oberen Seite einen abgestuften Abschnitt oder Vorsprung (170) aufweisen kann, der konfiguriert ist, um in eine Aussparung im Boden oder der unteren Seite des Lastenträgers (200) aufgenommen zu werden,
und/oder wobei die obere Seite derart konfiguriert sein kann, dass sich der Lastenträger (200) durch eine vertikale Abwärtsbewegung des Lastenträgers (200) in Bezug auf den Adapter (100) zusammenfügen kann oder sich durch die Schwerkraft in eine Befestigungsposition bewegen kann, sobald der Lastenträger (200) in Bezug auf den Adapter (100) richtig positioniert ist.

4. Adapter (100) nach einem der vorstehenden Ansprüche,
wobei die Befestigungsanordnung ein Befestigungselement wie einen Bolzen, eine Klammer, eine Mutter oder einen Riemen umfassen kann
und/oder
wobei die Befestigungsanordnung eine bereits an dem Lastträger (1) vorhandene Befestigungsanordnung sein kann, beispielsweise eine Befestigungsanordnung, die permanent an dem Lastträger bereitgestellt ist und/oder die normalerweise für andere Zwecke als die Befestigung des Adapters (100) verwendet wird,
wobei der Adaptermontageabschnitt (139) einen Riemenaufnahmeabschnitt (140) umfassen kann, der konfiguriert ist, um einen Riemen (40) des Radschalenabschnitts (20) aufzunehmen, beispielsweise den Riemen (40), der normalerweise zum Befestigen eines Rads eines Fahrrads an dem Radschalenabschnitt (20) verwendet wird,
und/oder
wobei der Adapter (100) und der Riemenaufnahmeabschnitt (140) so konfiguriert sind, dass der Adapter (100) unter Verwendung des Riemens (40) des Radschalenabschnitts (20) an dem Radschalenabschnitt (20) befestigt werden kann,
wobei der Riemenaufnahmeabschnitt (140) einen Kanal oder eine Aussparung (142) umfassen kann, der/die sich in eine Richtung erstreckt, die quer zur Haupterstreckungsrichtung des Radschalenabschnitts (20) verläuft, wenn der Adapter (100) auf dem Radschalenabschnitt (20) montiert ist,
wobei die Aussparung (142) so gebildet sein kann, dass der Riemen (40) vollständig darin aufgenommen werden kann, sodass der Riemen (40) nicht von einer oberen Seite (104) des Adapters (100) hervorsteht, wenn er in die Aussparung (142) eingesetzt ist,
und/oder
wobei der Riemenaufnahmeabschnitt (140) an einer oberen Fläche (105) des Adapters (100) und/oder an mindestens einer Seitenfläche (108) bereitgestellt sein kann.

5. Adapter (100) nach einem der vorstehenden Ansprüche,
wobei der Tragabschnitt (120) entsprechend der Form des Radschalenabschnitts (20) gebildet sein kann und einen Vorsprung (122) oder eine Aussparung umfassen kann, der/die passend zur Geometrie einer oberen Fläche des Radschalenabschnitts (20) geformt sein kann, wobei der Tragabschnitt (120) entsprechend einem Radtragabschnitt (23) des Radschalenabschnitts (20) geformt sein kann, um in Oberflächenkontakt mit einer Radtragfläche (25) zu gelangen, die durch den Radtragabschnitt (23) definiert ist, wobei der Radtragabschnitt wie eine Mulde geformt sein kann und/oder als eine längliche Aussparung gebildet sein oder eine solche umfassen kann,
wobei der Tragabschnitt (120) an einer unteren Fläche (103) des Adapters (100) bereitgestellt sein kann
und/oder wobei der Tragabschnitt (120) einstückig mit dem Positionierungsabschnitt (106, 107) gebildet sein kann oder als dieser fungieren kann.

6. Adapter (100) nach einem der vorstehenden Ansprüche,
wobei der Befestigungsabschnitt (150) eine oder mehrere Gewindeöffnungen (152) zum Aufnehmen von Gewindebolzen (208) oder Schrauben zum Befestigen des Lastenträgers (200) am Adapter (100) aufweisen kann
und/oder
wobei der Befestigungsabschnitt (150) eine Öffnung (154) umfassen kann, die konfiguriert ist, um einen Eingriffsabschnitt (354) eines Eingriffselements (350) einer Befestigungseinheit (300) aufzunehmen,
und/oder
wobei die Öffnung (154) eine nicht runde Öffnung sein kann und wobei der Eingriffsabschnitt (354) eine nicht runde Form aufweisen kann, die der nicht runden Öffnung entspricht, sodass der Eingriffsabschnitt (354) nur dann in die Öffnung (154) eingeführt und aus ihr entfernt werden kann, wenn er in eine vorgegebene Entriegelungsposition gedreht wird, in der der Eingriffsabschnitt (354) mit der nicht runden Öffnung ausgerichtet ist,
und/oder
wobei der Eingriffsabschnitt (354) mindestens einen Vorsprung (360, 362) umfassen kann, beispielsweise zwei Vorsprünge, wobei der Eingriffsabschnitt (354) T-förmig sein kann und/oder wobei der Eingriffsabschnitt (354) zwei Vorsprünge (360, 362) umfassen kann, die sich in unterschiedliche Richtungen erstrecken, beispielsweise auf gegenüberliegenden Seiten des Eingriffselements (350) voneinander weg erstrecken, wobei der mindestens eine Vorsprung (360, 362) keilförmig oder kegelförmig sein kann,
und/oder
wobei der Eingriffsabschnitt (354) als männlicher Kopplungspartner einer Bajonettfassung konfiguriert sein kann und wobei der Schnittstellenabschnitt (150) als weibliche Aufnahme einer Bajonettfassung konfiguriert sein kann.

7. Adapter (100) nach einem der Ansprüche 1 bis 6,
wobei der Adapter (100) einen Schlüsselabschnitt oder Aktivierungsabschnitt (160) umfasst, der konfiguriert ist, um einen Verriegelungsmechanismus (370) einer beispielsweise am Lastenträger (200) bereitgestellten Befestigungseinheit (300) bedienbar zu machen und/oder eine Bewegung eines Eingriffsabschnitts (354) des Verriegelungsmechanismus (370) freizugeben, wenn die Befestigungseinheit (300) und/oder der Lastenträger (200) korrekt auf dem Adapter (100) platziert ist,
wobei der Adapter (100) einen Aktivierungsabschnitt (160) umfassen kann, der mit einem Verriegelungsfreigabeabschnitt, beispielsweise mit einem Sperrelement (318), im Lastenträger (200) und/oder in der Befestigungseinheit (300) zusammenwirkt, wenn der Lastenträger (200) korrekt auf dem Adapter (100) getragen wird,
wobei der Aktivierungsabschnitt (160) einen oder mehrere Vorsprünge (162) umfassen kann und wobei der Lastenträger (200) und/oder die Befestigungseinheit (300) eine oder mehrere Aussparungen (338, 340) umfassen kann, die an einer Position und/oder in einem Muster angeordnet sind, die/das der Position und/oder dem Muster des einen oder der mehreren Vorsprünge (162) an dem Adapter (100) entspricht, wobei die eine oder die mehreren Aussparungen (338, 340) Zugang zu dem Verriegelungsfreigabeabschnitt gewähren oder diesen aufnehmen können,
wobei der Aktivierungsabschnitt (160) konfiguriert sein kann, um eine Kraft auf einen Kraftaufnahmeabschnitt des Verriegelungsfreigabeabschnitts, beispielsweise eine untere Fläche (322) des Sperrelements (318), im Lastenträger (200) und/oder im Verriegelungsmechanismus (370) zu bewegen oder darauf auszuüben,
wobei der Kraftaufnahmeabschnitt kraftübertragend mit dem Verriegelungsmechanismus (370) gekoppelt sein kann oder ein integraler Abschnitt des Verriegelungsmechanismus (370) ist, sodass der Aktivierungsabschnitt (160) den Verriegelungsmechanismus (370) entriegeln kann, um eine Betätigung desselben durch einen Benutzer zu ermöglichen.

8. Befestigungseinheit (300), beispielsweise ein Schnellverbinder, die zur werkzeugfreien Befestigung eines Lastenträgers (200) an dem Adapter (100) nach einem der vorhergehenden Ansprüche konfiguriert ist,
wobei die Befestigungseinheit (300) einen Eingriffsabschnitt (354) umfasst, der durch eine Verriegelungsbewegung mit dem Befestigungsabschnitt (150) in Eingriff gebracht werden kann, wobei die Verriegelungsbewegung mindestens eine Drehung einschließt und wobei die Verriegelungsbewegung eine translatorische Bewegung des Eingriffsabschnitts (354) gefolgt von einer Drehung des Eingriffsabschnitts (354) umfassen kann, wobei der Eingriffsabschnitt (354) konfiguriert sein kann, um aus einer eingefahrenen Position in eine ausgefahrene oder ausgelöste Position bewegt werden zu können, gefolgt von einer Drehung in eine Verriegelungsposition,
und/oder
wobei die Befestigungseinheit (300) eine Sicherheitsanordnung umfassen kann, die konfiguriert ist, um normalerweise die Verriegelungsbewegung des Eingriffsabschnitts (354) in eine Verriegelungsposition zu blockieren, beispielsweise eine Drehung des Eingriffsabschnitts (354) aus einer Entriegelungsposition in die Verriegelungsposition, und dem Eingriffsabschnitt (354) zu ermöglichen, eine Verriegelungsbewegung auszuführen, wenn die Befestigungseinheit (300) korrekt auf dem Befestigungsabschnitt (150) positioniert ist und mit einem Aktivierungsabschnitt (160) interagiert.

9. Befestigungseinheit (300) nach Anspruch 8,
wobei die Sicherheitsanordnung ein Sperrelement (318) umfasst, das konfiguriert ist, um die Verriegelungsbewegung des Eingriffsabschnitts (354) in die Verriegelungsposition zu blockieren,
wobei das Sperrelement (318) zwischen einer Sperrposition, in der die Verriegelungsbewegung des Eingriffsabschnitts (354) blockiert ist, und einer Entriegelungsposition, in der die Verriegelungsbewegung des Eingriffsabschnitts (354) zugelassen ist oder von einem Benutzer ausgeführt oder veranlasst werden kann, beweglich, beispielsweise translatorisch beweglich, ist,
wobei das Sperrelement (318) durch ein Druckelement (306), beispielsweise durch eine Feder, in Richtung der Sperrposition vorgespannt sein kann,
wobei das Sperrelement (318) konfiguriert sein kann, um mit einem Verriegelungsabschnitt (310) in Eingriff zu kommen, der mit dem Eingriffsabschnitt (354) wirkverbunden ist, wobei der Verriegelungsabschnitt (310) und der Eingriffsabschnitt (354) so verbunden sein können, dass sie sich gemeinsam bewegen,
wobei das Sperrelement (318) konfiguriert und angeordnet sein kann, um eine Drehung des Verriegelungsabschnitts (310) zu blockieren,
wobei das Sperrelement (318) eine Öffnung (332) zum Aufnehmen des Verriegelungsabschnitts (310) umfassen kann,
wobei das Sperrelement (318) eine innere Aussparung (324, 326) zum Aufnehmen eines Eingriffsabschnitts (312, 314) umfassen kann, der an dem Verriegelungsabschnitt (310) bereitgestellt ist, wobei die innere Aussparung (324, 326) in einer Innenfläche des Sperrelements (318) gebildet sein kann, die die Öffnung (332) begrenzt, wobei sich die innere Aussparung (324, 326) über die gesamte Länge der Öffnung (332) erstrecken kann, wobei das Sperrelement (318) konfiguriert sein kann, um den Verriegelungsabschnitt (310) in der Öffnung (332) und der Aussparung (324, 326) verschiebbar aufzunehmen, wobei der Verriegelungsabschnitt (310) und das Sperrelement (318) relativ zueinander beweglich sein können,
wobei das Sperrelement (318) nicht drehbar, aber translatorisch beweglich an einem Bodenabschnitt (334) der Befestigungseinheit (300) gehalten werden kann, wobei der Bodenabschnitt (334) zur Befestigung an einem Zubehörteil, beispielsweise einem Lastenträger, konfiguriert sein kann, wobei das Sperrelement (318) axial geführt sein kann, sodass es nur entlang einer Mittelachse der Befestigungseinheit (300) beweglich ist, beispielsweise entlang einer Mittelachse eines länglichen Befestigungselements (350), das den Eingriffsabschnitt (354) und den Verriegelungsabschnitt (310) umfasst,
wobei das Sperrelement (318) mit Führungsabschnitten (336), beispielsweise Führungsvorsprüngen (336) am Bodenabschnitt (334), in Eingriff stehen kann, wobei das Sperrelement (318) äußere Führungsaussparungen (328, 330) zum Aufnehmen der Führungsvorsprünge (336) umfassen kann, wobei das Sperrelement (318) auf den Bodenabschnitt (334) zu und von diesem weg bewegbar sein kann, wobei die Sperrposition eine Position sein kann, in der das Sperrelement (318) den Bodenabschnitt (334) berührt, wobei die Entsperrposition eine angehobene Position sein kann, in der das Sperrelement (318) in einem Abstand vom Bodenabschnitt (334) positioniert ist, wodurch ein Raum oder Spalt zwischen dem Sperrelement (318) und dem Bodenabschnitt (334) entsteht, wobei das Sperrelement (318) mittels des Aktivierungsabschnitts (160) in die Entsperrposition bewegt werden kann, wobei der Aktivierungsabschnitt (160) konfiguriert sein kann, um eine untere Fläche (322) des Sperrelements zu berühren (318) und eine Kraft auf die untere Fläche (322) auszuüben,
wobei der Verriegelungsabschnitt (310) relativ zum angehobenen Sperrelement (318) nach unten in Richtung des Bodenabschnitts (334) bis zu einer Position bewegt werden kann, in der die Eingriffsabschnitte (312, 314) in dem Spalt zwischen dem Sperrelement (318) und dem Bodenabschnitt (334) positioniert und aus den inneren Aussparungen (324, 326) gelöst sind, wodurch der Verriegelungsabschnitt (310) relativ zum Sperrelement (318) drehbar wird.

10. Befestigungseinheit (300) nach Anspruch 8 oder Anspruch 9,
wobei der Eingriffsabschnitt (354) als männlicher Teil einer Bajonettfassung konfiguriert ist,
wobei der Eingriffsabschnitt (354) an einem länglichen Eingriffselement (350) bereitgestellt sein kann, beispielsweise an einem unteren Abschnitt des Eingriffselements (350),
wobei der Eingriffsabschnitt (354) mindestens einen Vorsprung (360, 362) umfassen kann, beispielsweise zwei Vorsprünge, wobei jeder Vorsprung keilförmig oder konisch sein kann,
wobei der Eingriffsabschnitt (354) T-förmig sein kann und/oder wobei der Eingriffsabschnitt (354) zwei radiale Vorsprünge (360, 362) umfassen kann, die sich in unterschiedliche Richtungen erstrecken, beispielsweise auf gegenüberliegenden Seiten des Eingriffselements (350) voneinander weg erstrecken,
wobei der Eingriffsabschnitt (354) in Längsrichtung der Befestigungseinheit beweglich konfiguriert sein kann,
wobei der Eingriffsabschnitt (354) konfiguriert sein kann, um in eine Öffnung oder Aussparung (344) in dem Bodenabschnitt (334) oder in Richtung des Bodenabschnitts einziehbar zu sein, wobei die Öffnung oder Aussparung (344) mit einer Form gebildet sein kann, die mit dem Eingriffsabschnitt zusammenpasst, sodass der Eingriffsabschnitt (354) formschlüssig aufgenommen und gegen Drehung blockiert werden kann, wobei der Eingriffsabschnitt (354) durch ein Druckelement (371) oder einen Druckabschnitt (370) in Einziehrichtung belastet oder vorgespannt sein kann.

11. Befestigungseinheit (300) nach einem der Ansprüche 8 bis 10, ferner umfassend ein Betätigungselement (302), das von einem Benutzer bedient werden kann und mit dem Eingriffsabschnitt (354) wirkverbunden ist, um sich gemeinsam mit dem Eingriffsabschnitt (354) zu drehen,
wobei das Betätigungselement (302) einen drehbaren Knopf, einen drehbaren Griff oder einen drehbaren Hebel umfassen kann,
wobei das Betätigungselement (302) relativ zu dem Eingriffsabschnitt (354) zwischen einer ausgefahrenen Position und einer eingefahrenen Position beweglich sein kann und wobei das Betätigungselement (302), wenn es in der eingefahrenen Position positioniert ist, durch einen geometrischen Anschlagabschnitt am Drehen gehindert wird,
wobei das Betätigungselement (302) in einer Aufnahmeaussparung (207) aufgenommen werden kann und der geometrische Anschlagabschnitt durch eine Seitenwand der Aufnahmeaussparung (207) bereitgestellt werden kann.

12. Kopplungssystem, umfassend
eine Befestigungseinheit (300) nach einem der Ansprüche 8 bis 11 und
einen Befestigungsabschnitt (150), wobei der Befestigungsabschnitt (150) an einem Adapter (100) gemäß einem der Ansprüche 1 bis 7 bereitgestellt wird, der an einem Fahrradträger (1) montiert ist, wobei die Befestigungseinheit (300) und der Befestigungsabschnitt (150) konfiguriert sind, sodass eine Bedienung der Befestigungseinheit (300) durch einen Benutzer nur möglich ist, wenn die Befestigungseinheit (300) korrekt auf dem Befestigungsabschnitt (150) getragen wird.

13. Lastenträger (200), beispielsweise eine Lastenbox oder ein Lastbehälter, wobei der Lastenträger (200) umfasst
einen Grundkörper (201),
wobei der Grundkörper (201) einen dafür vorgesehenen Tragabschnitt (205) umfasst, der konfiguriert ist, um lösbar auf einem Befestigungsabschnitt eines Adapters (100) gemäß einem der Ansprüche 1 bis 7 getragen zu werden, und
wobei der Tragabschnitt (205) eine Aussparung (204) umfassen kann, die in einer Bodenwand oder unteren Fläche (202) des Grundkörpers (201) gebildet ist, wobei der Tragabschnitt konfiguriert sein kann, um eine geeignete Befestigungsanordnung zum Koppeln des Lastenträgers (200) mit dem Adapter (100) zu tragen, beispielsweise eine Befestigungsanordnung, die ein Befestigungselement wie einen Bolzen, eine Klammer oder eine Mutter umfasst,
wobei die Bodenwand oder untere Fläche (202) des Grundkörpers (201), insbesondere der Tragabschnitt (205), eine Geometrie umfassen kann, die passend zu einer oberen Fläche (105) des Adapters (100) gebildet ist,
und/oder
wobei der vorgesehene Tragabschnitt (205) konfiguriert ist, um unter Verwendung des Adapters (100) an einem ersten Abschnitt (26) an einem schwenkbaren Radschalenabschnitt (20) abnehmbar befestigt zu werden, und/oder
wobei der Lastenträger (200), beispielsweise der Grundkörper (201), einen Hilfstragabschnitt (212) umfasst, der konfiguriert ist, um eine obere Fläche desselben Radschalenabschnitts (20) an einem zweiten Abschnitt (28) zu berühren, wobei der Hilfstragabschnitt (212) weiter außen von dem vorgesehenen Tragabschnitt (205) bereitgestellt ist, sodass der zweite Abschnitt näher an einem freien Ende des Radschalenabschnitts (20) liegt als der erste Abschnitt oder sodass der zweite Abschnitt weiter von einem Kopplungsabschnitt (21) des Radschalenabschnitts (20) entfernt ist als der erste Abschnitt,
und/oder
wobei der Lastenträger (200) zwei vorgesehene Tragabschnitte (205) und zwei Hilfstragabschnitte (212) umfassen kann, wobei ein Abstand zwischen den vorgesehenen Tragabschnitten (205) kleiner ist als ein Abstand zwischen den Hilfstragabschnitten (212) und/oder wobei die vorgesehenen Tragabschnitte (205) zwischen den Hilfstragabschnitten (212) angeordnet sind und/oder wobei die Hilfstragabschnitte (212) konfiguriert sind, um die Radschalenabschnitte (20) an einem freien Endabschnitt der Radschalenabschnitte (20) zu berühren und/oder wobei die Hilfstragabschnitte (212) konfiguriert sind, um einen Brückenabschnitt zu berühren, der die freien Endabschnitte zweier benachbarter Radschalen (20) verbindet.

14. Lastträger (1), der an einem Fahrzeug befestigbar ist, wobei der Lastträger (1) umfasst
eine Tragstruktur (2) zum Tragen eines zu transportierenden Fahrrades von unten, wobei die Tragstruktur eine Rahmenkonfiguration mit mindestens einem Tragbalken umfassen kann,
einen Fahrzeugkopplungsabschnitt (5), beispielsweise eine Lastträgerkopplung, der starr mit der Tragstruktur (2) gekoppelt ist und konfiguriert ist, um an ein Fahrzeug, beispielsweise an eine Anhängerkupplung an dem Fahrzeug, gekoppelt zu werden, und/oder
einen Befestigungsabschnitt (150), der konfiguriert ist, um mit einer Befestigungseinheit (300) nach einem der Ansprüche 8 bis 11 in Eingriff zu kommen, wobei die Verbindungsschnittstelle (150) Teil des Adapters (100) nach einem der Ansprüche 1 bis 7 ist, und/oder
wobei der Lastträger (1) als Fahrradträger konfiguriert ist und einen Fahrradtragabschnitt umfasst,
wobei jeder Fahrradtragabschnitt einen Radschalenabschnitt (20) zum Tragen eines Rads eines Fahrrads umfasst
und/oder wobei jeder Radschalenabschnitt (20) über einen Kopplungsabschnitt (21) schwenkbar mit der Tragstruktur (2) gekoppelt sein kann und zwischen einer Gebrauchskonfiguration, in der der Radschalenabschnitt (20) ausgeklappt und zum Tragen eines Fahrradrads verfügbar ist, und einer Verstaukonfiguration, in der der Radschalenabschnitt (20) zusammengeklappt ist, um die Größe des Lastträgers (1) für Verstauzwecke zu verringern, schwenkbar sein kann,
und/oder wobei der Radschalenabschnitt (20) oder die Tragstruktur einen Positionierungsabschnitt (26) umfassen kann, der einen geometrischen Anschlag oder ein Widerlager auf dem Radschalenabschnitt (20) bereitstellt, beispielsweise gegen eine Bewegung entlang einer Längserstreckungsrichtung des Radschalenabschnitts (20), wobei der Positionierungsabschnitt (26) konfiguriert sein kann, um mit dem Adapter (100) nach einem der Ansprüche 1 bis 7 zusammenzuwirken, wobei der Adapter (100) geometrisch konfiguriert ist, um auf den Positionierungsabschnitt (26) zu passen, beispielsweise so, dass eine Bewegung des Adapters entlang des Radschalenabschnitts (20), beispielsweise in Längsrichtung des Radschalenabschnitts, in mindestens einer Richtung blockiert ist, beispielsweise in einer Richtung auf eine Mittelebene des Lastträgers zu oder in einer Richtung, die von der Mittelebene des Lastträgers weg weist,
und/oder wobei der Lastträger (1) ein Fahrradträger ist und einen Fahrradtragabschnitt, umfassend zwei klappbare Radschalenabschnitte (20), einen linken Radschalenabschnitt und einen rechten Radschalenabschnitt, umfasst, wobei die Adapter (100) nach einem der Ansprüche 1 bis 7 so an den Radschalenabschnitten (20) angeordnet sind, dass sie sich beim Zusammenklappen der Radschalenabschnitte (20) mit den darauf montierten Adaptern (100) nicht gegenseitig behindern oder mindestens teilweise passieren, wobei die Adapter (100) in Bezug auf eine Mittelebene des Fahrradträgers (1) nicht symmetrisch an den rechten und linken Radschalenabschnitten (20) des Fahrradträgers (1) angeordnet sein können und/oder wobei die Adapter eine versetzte Ausrichtung aufweisen können und/oder wobei alle hervorstehenden Abschnitte der Adapter, beispielsweise der Vorsprung (170) nach Anspruch 3, zueinander versetzt sind, um einen Kontakt zwischen ihnen beim Zusammenklappen der Radschale zu vermeiden,
und/oder wobei der Radschalenabschnitt (20) eine Riemenaufnahme (30) und einen Riemen (40) umfassen kann, wobei die Riemenaufnahme (30) und der Riemen am Positionierungsabschnitt (26) bereitgestellt sein können,
und/oder wobei der Radschalenabschnitt (20) einen ersten Abschnitt (26) zum festen Anbringen des Lastenträgers an dem Radschalenabschnitt (20) und einen zweiten Abschnitt (28) zum Berühren eines Hilfstragabschnitts (212) des Lastenträgers (200) umfassen kann, wobei der zweite Abschnitt konfiguriert sein kann, um den Hilfstragabschnitt (212) lose zu berühren, oder konfiguriert sein kann, um fest an dem Hilfstragabschnitt (212) angebracht zu sein.

15. Lasttransportsystem, umfassend einen Lastträger (1) nach Anspruch 14 und einen Lastenträger (200) nach Anspruch 13,
wobei an dem Lastträger (1) mindestens ein Adapter (100) bereitgestellt ist, beispielsweise vier Adapter (100) an dem Lastträger (1) bereitgestellt sind,
und/oder
wobei mindestens eine Befestigungseinheit (300) zum lösbaren Koppeln des Lastenträgers (200) am Lastträger bereitgestellt ist,
wobei der Lastträger (1) ein Fahrradträger ist und einen Fahrradtragabschnitt, umfassend zwei klappbare Radschalenabschnitte (20), einen linken Radschalenabschnitt und einen rechten Radschalenabschnitt, umfasst, wobei die Adapter (100) so an den Radschalenabschnitten (20) angeordnet sind, dass sie sich beim Zusammenklappen der Radschalenabschnitte (20) mit darauf montierten Adaptern (100) nicht gegenseitig behindern oder mindestens teilweise passieren, wobei die Adapter (100) in Bezug auf eine Mittelebene des Fahrradträgers (1) nicht symmetrisch an den rechten und linken Radschalenabschnitten (20) des Fahrradträgers (1) angeordnet sein können,
und/oder
wobei der Lastträger ein Fahrradträger ist, umfassend schwenkbare Radschalenabschnitte (20), wobei der Lastenträger (200) direkt an einem Radschalenabschnitt (20) des Fahrradträgers angebracht ist, beispielsweise durch eine Klammer, die sich an einer Unterseite um den Radschalenabschnitt erstreckt und am Grundkörper des Lastenträgers befestigt ist, wobei die Klammer eine U-förmige Stange umfassen kann, die sich um den Radschalenabschnitt erstreckt, und wobei die Klammer konfiguriert sein kann, um sich in den Grundkörper (201) zu erstrecken und durch ein geeignetes Befestigungselement, beispielsweise eine Mutter, befestigt zu sein, oder wobei der Radschalenabschnitt (20) eine Befestigungsnut, beispielsweise einen T-Schlitz, umfassen kann und wobei ein geeignetes Befestigungselement in der Befestigungsnut aufgenommen und fest mit dem Grundkörper (201) verbunden ist oder wobei der Lastenträger (200) an dem Radschalenabschnitt (20) durch ein Befestigungselement befestigt ist, das sich durch eine Öffnung in dem Radschalenabschnitt und durch die untere Fläche des Lastenträgers (200) erstreckt.

## Revendications

1. Adaptateur (100) permettant de fixer solidement un transporteur de marchandises (200) à un porte-vélo (1),
dans lequel ledit adaptateur (100) est conçu pour convertir une partie de plateau de roue (20) dudit porte-vélo (1) en une partie de support pour ledit transporteur de marchandises (200), et comprend une partie de support (120) conçue pour être reçue dans ladite partie de plateau de roue (20),
une partie de montage de l'adaptateur (139) conçue pour fixer ledit adaptateur (100) sur ladite partie de plateau de roue (20), dans lequel ladite partie de montage de l'adaptateur (139) est conçue pour supporter un dispositif d'attache approprié destiné à accoupler ledit adaptateur (100) à ladite partie de plateau de roue (20),
une partie de fixation (150) destinée à entrer en prise avec un élément de fixation ou une unité de fixation (300) utilisée pour fixer ledit transporteur de marchandises (200) sur ledit adaptateur (100).

2. Adaptateur (100) selon la revendication 1,
dans lequel ledit adaptateur (100) est conçu de telle sorte qu'il s'adapte géométriquement à ladite partie de plateau de roue (20) à une position prédéfinie (22) de ladite partie de plateau de roue (20) de telle sorte qu'une position de montage correcte sur la partie de plateau de roue (20) peut être facilement trouvée par un utilisateur,
et/ou
dans lequel ledit adaptateur (100) comprend une partie de positionnement (106, 107, 109) destinée à placer correctement ledit adaptateur (100) sur ladite partie de plateau de roue (20),
dans lequel ladite partie de positionnement (106, 107) peut être codée mécaniquement ou façonnée de telle sorte que ledit adaptateur (100) ou ladite partie de positionnement (106, 107, 109) correspond géométriquement à ladite partie de plateau de roue (20) uniquement à ladite position prédéfinie (22) et/ou dans une orientation prédéfinie, en particulier correspond à une section de positionnement (26, 29) de ladite partie de plateau de roue (20),
dans lequel ladite partie de positionnement (106,107) peut être prévue sur un côté inférieur (102) dudit adaptateur (100) et/ou sur un côté latéral dudit adaptateur (100),
et/ou dans lequel ladite partie de positionnement (106) peut être une partie en forme de crochet conçue pour être accrochée à ladite partie de plateau de roue (20),
et/ou dans lequel ladite partie de positionnement (107) peut être formée comme un butoir conçu pour entrer en contact avec une saillie (29) sur la partie de plateau de roue (20).

3. Adaptateur (100) selon l'une des revendications précédentes,
dans lequel un côté supérieur (104) dudit adaptateur (100) est conçu pour entrer en prise avec un côté inférieur (202) dudit transporteur de marchandises (200) par verrouillage de forme, par exemple, de telle sorte qu'un mouvement dudit transporteur de marchandises (200) par rapport audit adaptateur (100) est bloqué dans une direction transversale dudit transporteur de charges (1) et/ou de telle sorte qu'un alignement ou un positionnement correct du transporteur de marchandises (200) sur l'adaptateur (100) est facilité,
dans lequel ledit adaptateur peut être conçu pour agir comme bouchon ou comme douille d'un dispositif de liaison de type bouchon et douille, par exemple comme une saillie à insérer dans un renfoncement sur ledit transporteur de marchandises (200), dans lequel ladite saillie peut s'étendre dans la direction verticale vers le haut lorsque ledit adaptateur est monté sur ledit transporteur de charges (1), ou dans lequel l'adaptateur (100) peut comprendre une partie étagée ou une saillie (170) sur son côté supérieur qui est conçue pour être reçue dans un renfoncement dans le fond ou le côté inférieur du transporteur de marchandises (200),
et/ou dans lequel ledit côté supérieur peut être conçu de telle sorte que ledit transporteur de marchandises (200) peut se mettre en place ou se déplacer par gravité dans une position de jointure par un déplacement vertical vers le bas dudit transporteur de marchandises (200) par rapport audit adaptateur (100) dès que ledit transporteur de marchandises (200) est correctement positionné par rapport audit adaptateur (100).

4. Adaptateur (100) selon l'une des revendications précédentes,
dans lequel ledit dispositif d'attache peut comprendre un élément d'attache tel qu'un boulon, un support, un écrou ou une sangle,
et/ou
dans lequel ledit dispositif d'attache peut être un dispositif d'attache déjà existant sur ledit transporteur de charges (1), par exemple un dispositif d'attache qui est fourni de façon permanente sur ledit transporteur de charges et/ou qui est normalement utilisé à des fins autres que la jointure dudit adaptateur (100),
dans lequel ladite partie de montage de l'adaptateur (139) peut comprendre une partie de réception de sangle (140) conçue pour recevoir une sangle (40) de ladite partie de plateau de roue (20), par exemple la sangle (40) qui est normalement utilisée pour fixer une roue d'un vélo sur ladite partie de plateau de roue (20),
et/ou
dans lequel ledit adaptateur (100) et ladite partie de réception de sangle (140) sont conçus de telle sorte que ledit adaptateur (100) peut être fixé sur ladite partie de plateau de roue (20) à l'aide de ladite sangle (40) de ladite partie de plateau de roue (20),
dans lequel ladite partie de réception de sangle (140) peut comprendre un canal ou un renfoncement (142) s'étendant dans une direction qui s'étend de manière transversale à la direction d'extension principale de la partie de plateau de roue (20) lorsque l'adaptateur (100) est monté sur ladite partie de plateau de roue (20),
dans lequel ledit renfoncement (142) peut être formé de telle sorte que ladite sangle (40) peut être entièrement logée à l'intérieur, de telle sorte que ladite sangle (40) ne fait pas saillie à partir d'un côté supérieur (104) dudit adaptateur (100) lorsqu'elle est insérée dans le renfoncement (142),
et/ou
dans lequel ladite partie de réception de sangle (140) peut être prévue sur une surface supérieure (105) dudit adaptateur (100) et/ou sur au moins une surface latérale (108).

5. Adaptateur (100) selon l'une des revendications précédentes,
dans lequel ladite partie de support (120) peut être formée pour correspondre à la forme de ladite partie de plateau de roue (20) et peut comprendre une saillie (122) ou un renfoncement qui peut être formé pour s'apparier avec une géométrie de surface supérieure de ladite partie de plateau de roue (20), dans lequel ladite partie de support (120) peut être formée pour correspondre à une section de support de roue (23) de ladite partie de plateau de roue (20) pour entrer en contact avec une surface de support de roue (25) définie par ladite section de support de roue (23), dans lequel ladite section de support de roue peut être formée comme une auge et/ou peut être formée ou comprendre un renfoncement allongé,
dans lequel ladite partie de support (120) peut être fournie sur une surface inférieure (103) dudit adaptateur (100),
et/ou dans lequel ladite partie de support (120) peut être formée intégralement avec ladite partie de positionnement (106, 107) ou agir comme elle.

6. Adaptateur (100) selon l'une des revendications précédentes,
dans lequel ladite partie de fixation (150) peut comprendre une ou plusieurs ouvertures filetées (152) destinées à recevoir des boulons filetés (208) ou des vis pour fixer ledit transporteur de marchandises (200) sur ledit adaptateur (100),
et/ou
dans lequel ladite partie de fixation (150) peut comprendre une ouverture (154) conçue pour recevoir une partie de mise en prise (354) d'un élément de mise en prise (350) d'une unité de fixation (300),
et/ou
dans lequel ladite ouverture (154) peut être une ouverture non ronde et dans lequel ladite partie de mise en prise (354) peut comprendre une forme non ronde correspondant à ladite ouverture non ronde, de telle sorte que ladite partie de mise en prise (354) ne peut être insérée dans ladite ouverture (154) et en être retirée que lorsqu'elle est tournée dans une position de déverrouillage prédéterminée dans laquelle ladite partie de mise en prise (354) est alignée avec ladite ouverture non ronde,
et/ou
dans lequel ladite partie de mise en prise (354) peut comprendre au moins une saillie (360, 362), par exemple deux saillies, dans lequel ladite partie de mise en prise (354) peut être en forme de T et/ou dans lequel ladite partie de mise en prise (354) peut comprendre deux saillies (360, 362) s'étendant dans des directions différentes, par exemple s'étendant à l'écart l'une de l'autre sur les côtés opposés dudit élément de mise en prise (350), dans lequel ladite au moins une saillie (360, 362) peut être en forme de coin ou conique,
et/ou
dans lequel ladite partie de mise en prise (354) peut être conçue comme un partenaire d'accouplement mâle d'une monture à baïonnette et dans lequel ladite partie d'interface (150) peut être conçue comme un récepteur femelle d'une monture à baïonnette.

7. Adaptateur (100) selon l'une des revendications 1 à 6,
dans lequel ledit adaptateur (100) comprend une partie clé ou une partie activation (160) conçue pour rendre fonctionnel un mécanisme de verrouillage (370) d'une unité de fixation (300), par exemple fournie sur le transporteur de marchandises (200), et/ou pour relâcher un mouvement d'une partie de mise en prise (354) dudit mécanisme de verrouillage (370) lorsque ladite unité de fixation (300) et/ou ledit transporteur de marchandises (200) est correctement placé sur ledit adaptateur (100),
dans lequel ledit adaptateur (100) peut comprendre une partie activation (160) qui interagit avec une partie de relâchement de verrouillage, par exemple avec un élément de blocage (318), dans ledit transporteur de marchandises (200) et/ou dans ladite unité de fixation (300), lorsque ledit transporteur de marchandises (200) est correctement supporté sur ledit adaptateur (100),
dans lequel ladite partie activation (160) peut comprendre une ou plusieurs saillies (162) et dans lequel ledit transporteur de marchandises (200) et/ou ladite unité de fixation (300) peuvent comprendre un ou plusieurs renfoncements (338, 340) agencés à une position et/ou selon un modèle correspondant à la position et/ou au modèle de ladite ou desdites saillies (162) sur ledit adaptateur (100), dans lequel ledit ou lesdits renfoncements (338, 340) peuvent permettre d'accéder à ladite partie de relâchement de verrouillage ou de la loger,
dans lequel ladite partie activation (160) peut être conçue pour déplacer ou appliquer une force sur une partie de réception de force de ladite partie de relâchement de verrouillage, par exemple une surface inférieure (322) dudit élément de blocage (318), dans ledit transporteur de marchandises (200) et/ou dans ledit mécanisme de verrouillage (370),
dans lequel ladite partie de réception de force peut être accouplée par transmission de force audit mécanisme de verrouillage (370) ou fait partie intégrante dudit mécanisme de verrouillage (370), de sorte que ladite partie d'activation (160) peut déverrouiller ledit mécanisme de verrouillage (370) pour permettre à un utilisateur de l'actionner.

8. Unité de fixation (300), par exemple un dispositif de liaison rapide, conçue pour la fixation sans outil d'un transporteur de marchandises (200) à l'adaptateur (100) selon l'une quelconque des revendications précédentes,
dans lequel ladite unité de fixation (300) comprend une partie de mise en prise (354) pouvant être en prise avec ladite partie de fixation (150) par un mouvement de verrouillage, dans lequel ledit mouvement de verrouillage comporte au moins une rotation et dans lequel ledit mouvement de verrouillage peut comprendre un mouvement de translation de ladite partie de mise en prise (354) suivi d'une rotation de ladite partie de mise en prise (354), dans lequel ladite partie de mise en prise (354) peut être conçue pour être mobile d'une position rétractée à une position étendue ou déployée suivie d'une rotation jusqu'à une position de verrouillage,
et/ou
dans lequel ladite unité de fixation (300) peut comprendre un dispositif de sécurité conçu pour bloquer normalement ledit mouvement de verrouillage de ladite partie de mise en prise (354) vers une position de verrouillage, par exemple une rotation de ladite partie de mise en prise (354) d'une position de déverrouillage vers ladite position de verrouillage, et pour permettre à ladite partie de mise en prise (354) de réaliser un mouvement de verrouillage lorsque ladite unité de fixation (300) est correctement positionnée sur ladite partie de fixation (150) et interagit avec une partie activation (160).

9. Unité de fixation (300) selon la revendication 8,
dans lequel ledit dispositif de sécurité comprend un élément de blocage (318) conçu pour bloquer ledit mouvement de verrouillage de ladite partie de mise en prise (354) dans ladite position de verrouillage,
dans lequel ledit élément de blocage (318) est mobile, par exemple mobile en translation, entre une position de blocage dans laquelle ledit mouvement de verrouillage de ladite partie de mise en prise (354) est bloqué et une position de déblocage dans laquelle ledit mouvement de verrouillage de ladite partie de mise en prise (354) est autorisé ou peut être réalisé ou provoqué par un utilisateur,
dans lequel ledit élément de blocage (318) peut être sollicité vers ladite position de blocage par un élément de poussée (306), par exemple par un ressort,
dans lequel ledit élément de blocage (318) peut être conçu pour entrer en prise avec une partie de verrouillage (310) accouplée de manière fonctionnelle à ladite partie de mise en prise (354), dans lequel ladite partie de verrouillage (310) et ladite partie de mise en prise (354) peuvent être reliées de manière à se déplacer conjointement,
dans lequel ledit élément de blocage (318) peut être conçu et agencé pour bloquer une rotation de ladite partie de verrouillage (310),
dans lequel ledit élément de blocage (318) peut comprendre une ouverture (332) pour recevoir ladite partie de verrouillage (310),
dans lequel ledit élément de blocage (318) peut comprendre un renfoncement intérieur (324, 326) pour recevoir une section de mise en prise (312, 314) fournie sur ladite partie de verrouillage (310), dans lequel ledit renfoncement intérieur (324, 326) peut être formé dans une surface intérieure dudit élément de blocage (318) qui limite ladite ouverture (332), dans lequel ledit renfoncement intérieur (324, 326) peut s'étendre sur toute une longueur de ladite ouverture (332), dans lequel ledit élément de blocage (318) peut être conçu pour recevoir de manière coulissante ladite partie de verrouillage (310) dans ladite ouverture (332) et ledit renfoncement (324, 326), dans lequel ladite partie de verrouillage (310) et ledit élément de blocage (318) peuvent être mobiles l'un par rapport à l'autre,
dans lequel ledit élément de blocage (318) peut être maintenu de manière non rotative mais mobile en translation sur une partie inférieure (334) de ladite unité de fixation (300), dans lequel ladite partie inférieure (334) peut être conçue pour être jointe à un accessoire, par exemple un transporteur de marchandises, dans lequel ledit élément de blocage (318) peut être guidé de manière axiale de manière à être mobile uniquement le long d'un axe central de ladite unité de fixation (300), par exemple le long d'un axe intermédiaire d'un élément de fixation allongé (350) comprenant ladite partie de mise en prise (354) et ladite partie de verrouillage (310),
dans lequel ledit élément de blocage (318) peut être en prise avec des parties de guidage (336), par exemple des saillies de guidage (336) sur la partie inférieure (334), dans lequel ledit élément de blocage (318) peut comprendre des renfoncements de guidage extérieurs (328, 330) pour loger lesdites saillies de guidage (336), dans lequel ledit élément de blocage (318) peut être mobile vers ladite partie inférieure (334) et éloigné de celle-ci, dans lequel ladite position de blocage peut être une position dans laquelle ledit élément de blocage (318) entre en contact avec ladite partie inférieure (334), dans lequel ladite position de déblocage peut être une position surélevée dans laquelle ledit élément de blocage (318) est positionné à une distance de ladite partie inférieure (334), fournissant ainsi un espace ou un écart entre ledit élément de blocage (318) et ladite partie inférieure (334), dans lequel ledit élément de blocage (318) peut être déplacé vers ladite position de déblocage au moyen de ladite partie activation (160), dans lequel ladite partie activation (160) peut être conçue pour entrer en contact avec une surface inférieure (322) dudit élément de blocage (318) et pour appliquer une force sur ladite surface inférieure (322),
dans lequel ladite partie de verrouillage (310) peut être déplacée vers le bas en direction de ladite partie de fond (334) par rapport audit élément de blocage surélevé (318) jusqu'à une position dans laquelle lesdites sections de mise en prise (312, 314) sont positionnées dans ledit espace entre ledit élément de blocage (318) et ladite partie de fond (334) et désolidarisées desdits renfoncements intérieurs (324, 326) rendant ladite partie de verrouillage (310) rotative par rapport audit élément de blocage (318).

10. Unité de fixation (300) selon la revendication 8 ou la revendication 9,
dans lequel ladite partie de mise en prise (354) est conçue comme une pièce mâle d'une monture à baïonnette,
dans lequel ladite partie de mise en prise (354) peut être prévue sur un élément de mise en prise allongé (350), par exemple sur une partie inférieure dudit élément de mise en prise (350),
dans lequel ladite partie de mise en prise (354) peut comprendre au moins une saillie (360, 362), par exemple deux saillies, dans lequel chaque saillie peut être en forme de coin ou conique,
dans lequel ladite partie de mise en prise (354) peut être en forme de T et/ou dans lequel ladite partie de mise en prise (354) peut comprendre deux saillies radiales (360, 362) s'étendant dans des directions différentes, par exemple en s'éloignant l'une de l'autre sur des côtés opposés dudit élément de mise en prise (350),
dans lequel ladite partie de mise en prise (354) peut être conçue mobile dans une direction longitudinale de ladite unité de fixation,
dans lequel ladite partie de mise en prise (354) peut être conçue de manière à être rétractable dans une ouverture ou un renfoncement (344) dans ladite partie inférieure (334) ou vers ladite partie inférieure, dans lequel ladite ouverture ou ledit renfoncement (344) peut être formé avec une forme s'appariant à la partie de mise en prise de telle sorte que ladite partie de mise en prise (354) peut être reçue par verrouillage de forme et de manière à être bloquée en rotation, dans lequel ladite partie de mise en prise (354) peut être chargée ou sollicitée par un élément de poussée (371) ou une partie de poussée (370) dans une direction de rétractation.

11. Unité de fixation (300) selon l'une des revendications 8 à 10, comprenant en outre un élément d'actionnement (302) utilisable par un utilisateur et accouplé de manière fonctionnelle à ladite partie de mise en prise (354) de manière à tourner conjointement avec ladite partie de mise en prise (354),
dans lequel ledit élément d'actionnement (302) peut comprendre un bouton rotatif, une poignée rotative ou un levier rotatif,
dans lequel ledit élément d'actionnement (302) peut être mobile par rapport à ladite partie de mise en prise (354) entre une position étendue et une position rétractée, et dans lequel, lorsqu'il est positionné dans ladite position rétractée, ledit élément d'actionnement (302) est bloqué en rotation par une partie de butoir géométrique,
dans lequel ledit élément d'actionnement (302) peut être reçu dans un renfoncement de logement (207) et ladite partie de butoir géométrique peut être fournie par une paroi latérale dudit renfoncement de logement (207).

12. Système d'accouplement comprenant
une unité de fixation (300) selon l'une des revendications 8 à 11, et
une partie de fixation (150), dans lequel ladite partie de fixation (150) est fournie sur un adaptateur (100) selon l'une des revendications 1 à 7 monté sur un porte-vélo (1), dans lequel ladite unité de fixation (300) et ladite partie de fixation (150) sont conçues de telle sorte qu'une opération de ladite unité de fixation (300) par un utilisateur n'est possible que lorsque ladite unité de fixation (300) est correctement supportée sur ladite partie de fixation (150).

13. Transporteur de marchandises (200), par exemple une boîte de marchandises ou un réceptacle de charges, ledit transporteur de marchandises (200) comprenant
un corps de base (201),
dans lequel ledit corps de base (201) comprend une section de support désignée (205) conçue pour être supportée de manière amovible sur une partie de fixation d'un adaptateur (100) selon l'une des revendications 1 à 7, et
dans lequel ladite section de support (205) peut comprendre un renfoncement (204) formé dans une paroi de fond ou une surface inférieure (202) dudit corps de base (201), dans lequel ladite section de support peut être conçue pour supporter un dispositif d'attache approprié pour accoupler ledit transporteur de marchandises (200) audit adaptateur (100), par exemple un dispositif d'attache comprenant un élément d'attache tel qu'un boulon, un support ou un écrou,
dans lequel ladite paroi de fond ou surface inférieure (202) dudit corps de base (201), en particulier ladite section de support (205), peut comprendre une géométrie qui est formée en appariement avec une surface supérieure (105) dudit adaptateur (100),
et/ou
dans lequel ladite section de support désignée (205) est conçue pour être fixée de manière amovible à une partie de plateau de roue pivotante (20) au niveau d'une première section (26) à l'aide dudit adaptateur (100), et/ou
dans lequel ledit transporteur de marchandises (200), par exemple ledit corps de base (201), comprend une section de support auxiliaire (212) conçue pour entrer en contact avec une surface supérieure de la même partie de plateau de roue (20) au niveau d'une seconde section (28), dans lequel ladite section de support auxiliaire (212) est en outre prévue plus à l'extérieur de ladite section de support désignée (205) de telle sorte que ladite seconde section est plus proche d'une extrémité libre de ladite partie de plateau de roue (20) que ladite première section ou de telle sorte que ladite seconde section est en outre plus éloignée d'une section d'accouplement (21) de ladite partie de plateau de roue (20) que ladite première section,
et/ou
dans lequel ledit transporteur de marchandises (200) peut comprendre deux sections de support désignées (205) et deux sections de support auxiliaires (212), dans lequel une distance entre lesdites sections de support désignées (205) est plus petite qu'une distance entre lesdites sections de support auxiliaires (212), et/ou dans lequel lesdites sections de support désignées (205) sont agencées entre lesdites sections de support auxiliaires (212) et/ou dans lequel lesdites sections de support auxiliaires (212) sont conçues pour entrer en contact avec lesdites parties de plateau de roue (20) à une partie d'extrémité libre des parties de plateau de roue (20) et/ou dans lequel lesdites sections de support auxiliaires (212) sont conçues pour entrer en contact avec une partie de pontage reliant les parties d'extrémité libres de deux plateaux de roue adjacents (20).

14. Transporteur de charges (1) pouvant être fixé à un véhicule, ledit transporteur de charges (1) comprenant
une structure de support (2) pour supporter un vélo à transporter d'en bas, dans lequel ladite structure de support peut comprendre une configuration de cadre avec au moins une poutre de support,
une partie d'accouplement de véhicule (5), par exemple un accouplement de transporteur de charges, rigidement accouplée à ladite structure de support (2) et conçue pour être accouplée à un véhicule, par exemple à un attelage de remorque sur ledit véhicule, et/ou
une partie de fixation (150) conçue pour être mise en prise par une unité de fixation (300) selon l'une des revendications 8 à 11, dans lequel ladite interface de liaison (150) fait partie dudit adaptateur (100) selon l'une des revendications 1 à 7, et/ou
dans lequel ledit transporteur de charges (1) est conçu comme porte-vélo et comprend une partie support de vélo,
dans lequel chaque partie support de vélo comprend une partie de plateau de roue (20) pour supporter une roue d'un vélo,
et/ou dans lequel chaque partie de plateau de roue (20) peut être accouplée de manière pivotante à ladite structure de support (2) par l'intermédiaire d'une section d'accouplement (21) et peut être pivotée entre une configuration d'utilisation dans laquelle ladite partie de plateau de roue (20) est dépliée et disponible pour supporter une roue d'un vélo, et une configuration de rangement dans laquelle ladite partie de plateau de roue (20) est pliée pour réduire la taille du transporteur de charges (1) à des fins de rangement,
et/ou dans lequel ladite partie de plateau de roue (20) ou ladite structure de support peut comprendre une section de positionnement (26) fournissant un butoir géométrique ou une butée sur ladite partie de plateau de roue (20), par exemple contre un mouvement le long d'une direction d'extension longitudinale de ladite partie de plateau de roue (20), dans lequel ladite section de positionnement (26) peut être conçue pour coopérer avec ledit adaptateur (100) selon l'une des revendications 1 à 7, dans lequel ledit adaptateur (100) est géométriquement conçu pour s'adapter à ladite section de positionnement (26), par exemple de telle sorte qu'un mouvement dudit adaptateur le long de ladite partie de plateau de roue (20), par exemple dans une direction longitudinale de ladite partie de plateau de roue, est bloqué dans au moins une direction, par exemple dans une direction vers un plan central du transporteur de charges ou dans une direction orientée à l'opposé du plan intermédiaire du transporteur de charges,
et/ou dans lequel ledit transporteur de charges (1) est un porte-vélo et comprend une partie porte-vélo comprenant deux parties de plateau de roue pliables (20), une partie de plateau de roue gauche et une partie de plateau de roue droite, dans lequel lesdits adaptateurs (100) selon l'une des revendications 1 à 7 sont agencés sur lesdites parties de plateau de roue (20) de telle sorte qu'ils n'interfèrent pas les uns avec les autres ou se croisent au moins partiellement lors du pliage desdites parties de plateau de roue (20) avec les adaptateurs (100) montés dessus, dans lequel lesdits adaptateurs (100) peuvent être agencés de manière non symétrique sur les parties de plateau de roue (20) droite et gauche du porte-vélo (1) par rapport à un plan intermédiaire dudit porte-vélo (1) et/ou dans lequel lesdits adaptateurs peuvent comprendre un alignement décalé et/ou dans lequel toutes les sections saillantes des adaptateurs, par exemple la saillie (170) mentionnée dans la revendication 3, sont décalées l'une par rapport à l'autre afin d'éviter un contact entre elles lors du pliage dudit plateau de roue,
et/ou dans lequel ladite partie de plateau de roue (20) peut comprendre un récepteur de sangle (30) et une sangle (40), dans lequel ledit récepteur de sangle (30) et ladite sangle peuvent être fournis au niveau de ladite section de positionnement (26),
et/ou dans lequel ladite partie de plateau de roue (20) peut comprendre une première section (26) pour joindre de manière fixe ledit transporteur de marchandises à ladite partie de plateau de roue (20) et une seconde section (28) pour entrer en contact avec une section de support auxiliaire (212) dudit transporteur de marchandises (200), dans lequel ladite seconde section peut être conçue pour entrer en contact de manière lâche avec ladite section de support auxiliaire (212) ou peut être conçue pour être jointe de manière fixe à ladite section de support auxiliaire (212).

15. Système de transport de marchandises comprenant un transporteur de charges (1) selon la revendication 14 et un transporteur de marchandises (200) selon la revendication 13,
dans lequel au moins un adaptateur (100) est prévu sur ledit transporteur de charges (1), par exemple quatre adaptateurs (100) sont prévus sur ledit transporteur de charges (1),
et/ou
dans lequel au moins une unité de fixation (300) est prévue pour accoupler de manière amovible ledit transporteur de marchandises (200) sur ledit transporteur de charges,
dans lequel ledit transporteur de charges (1) est un porte-vélo et comprend une partie porte-vélo comprenant deux parties de plateau de roue pliables (20), une partie de plateau de roue gauche et une partie de plateau de roue droite, dans lequel lesdits adaptateurs (100) sont agencés sur lesdites parties de plateau de roue (20) de telle sorte qu'ils n'interfèrent pas entre eux ou se croisent au moins partiellement lors du pliage desdites parties de plateau de roue (20) avec les adaptateurs (100) montés dessus, dans lequel lesdits adaptateurs (100) peuvent être agencés de manière non symétrique sur les parties de plateau de roue (20) droite et gauche du porte-vélo (1) par rapport à un plan intermédiaire dudit porte-vélo (1),
et/ou
dans lequel ledit transporteur de charges est un porte-vélo comprenant des parties de plateau de roue pivotantes (20), dans lequel ledit transporteur de marchandises (200) est directement joint à une partie de plateau de roue (20) dudit porte-vélo, par exemple par un support s'étendant autour de ladite partie de plateau de roue sur un côté inférieur et fixé au corps de base dudit transporteur de marchandises, dans lequel ledit support peut comprendre une barre en forme de U s'étendant autour de ladite partie de plateau de roue et dans lequel ledit support peut être conçu pour s'étendre dans le corps de base (201) et fixé par un élément d'attache adéquat, par exemple un écrou, ou dans lequel ladite partie de plateau de roue (20) peut comprendre une rainure de fixation, par exemple une rainure en T, et dans lequel une attache appropriée est reçue dans ladite rainure de fixation et est accouplée de manière fixe audit corps de base (201), ou dans lequel ledit transporteur de marchandises (200) est fixé à ladite partie de plateau de roue (20) par une attache qui s'étend à travers une ouverture dans ladite partie de plateau de roue et à travers la surface inférieure dudit transporteur de marchandises (200).
